Europäisches Patentamt

European Patent Office

Office européen des brevets

(11) Numéro de publication: **0 255 419 B1**

# FASCICULE DE BREVET EUROPEEN

(45) Date de publication de fascicule du brevet: **10.03.93**  (51) Int. Cl.5: **G06F 15/62**, G06K 9/48

(21) Numéro de dépôt: **87401503.5**

(22) Date de dépôt: **30.06.87**

(54) **Procédé d'extraction et de modélisation des contours d'une image et dispositif pour la mise en oeuvre de ce procédé.**

(30) Priorité: **01.07.86 FR 8609526**

(43) Date de publication de la demande:
**03.02.88 Bulletin 88/05**

(45) Mention de la délivrance du brevet:
**10.03.93 Bulletin 93/10**

(84) Etats contractants désignés:
**DE GB IT NL SE**

(56) Documents cités:

**PROCEEDINGS OF THE 5TH INTERNATIONAL CONFERENCE ON PATTERN RECOGNITION, Florida, 1-4 décembre 1980, vol. 2, pages 1289-1295, IEEE, New York, US; A. IKONOMO-POULOS et al.: "An approach to edge detection and representation by two "knowledge-free" techniques"**

**AFCET: 3IEME CONGRES RECONNAISSANCE DES FORMES ET INTELLIGENCE ARTIFICIEL-LE, Nancy, 16-18 septembre 1981, pages 237-248; L. ASFAR: "Recherches des contours dans une image Landsat"**

(73) Titulaire: **THOMSON-CSF**
**51, Esplanade du Général de Gaulle**
**F-92800 Puteaux(FR)**

(72) Inventeur: **Richard, Christian Jacques**
**THOMSON-CSF SCPI 19, avenue de Messine**
**F-75008 Paris(FR)**

(74) Mandataire: **Turlèque, Clotilde et al**
**THOMSON-CSF, SCPI, B.P. 329, 50, rue Jean-Pierre Timbaud**
**F-92402 Courbevoie Cédex (FR)**

Rank Xerox (UK) Business Services
(3.10/3.5x/3.0.1)

## Description

L'invention concerne l'extraction et la modélisation des contours d'une image, par exemple une image de télévision ou une image de radar, chaque point de cette image étant représenté par une valeur numérique par exemple la valeur de luminance dans le cas d'une image de télévision.

Les contours sont des lignes constituées par les frontières entre les divers objets représentés par une image. Ils sont constitués par des transitions de luminance lorsqu'il s'agit d'une image de télévision. Il est nécessaire de réaliser une extraction des contours d'une image pour de nombreuses applications, notamment pour la reconnaissance de formes. Le résultat de cette extraction est un signal binaire traduisant pour chaque point de l'image son appartenance ou sa non-appartenance à un contour.

Pour l'application à la reconnaissance de formes, il est avantageux que les contours extraits soient parfaitement continus et d'épaisseur minimale. En pratique les objets représentés dans une image comportent des transitions floues et l'image est affectée par une certaine quantité de bruit. Il est donc difficile d'extraire des contours sous la forme de lignes continues et minces. Les procédés connus ont pour inconvénients de générer des contours manquant de continuité ou au contraire comportant des lignes parasites. Le but de l'invention est de réaliser une extraction de contours ne présentant pas ces défauts. L'objet de l'invention est un procédé permettant d'extraire des contours en les modélisant sous la forme de lignes continues constituées de segments de droite dont les caractéristiques sont déterminées par un procédé récursif prenant en compte le module et l'orientation du gradient de luminance en chaque point de l'image successivement. Ce procédé peut être appliqué en temps réel à une suite de trames d'images de télévision.

Selon l'invention, un procédé d'extraction et de modélisation des contours d'une image, chaque point d'image étant représenté par une valeur numérique choisie parmi les valeurs de luminance et de chrominance, déterminant pour tous les points de l'image, le module et la valeur d'orientation $R_i$ du gradient de la valeur numérique représentative choisie, $R_i$ étant choisi parmi un nombre entier prédéterminé s de valeurs d'orientations possibles : $R_1$ , ..., $R_s$ ,

est caractérisé en ce qu'il comporte en outre les étapes suivantes :
- sélectionner les points d'image, dits points à fort gradient, où ce gradient a un module supérieur à une valeur fixée ;
- regrouper les points connexes à fort gradient ayant une même valeur d'orientation pour former des zones de contours en comparant l'orientation du gradient du point courant à ceux de deux points voisins, respectivement précédant le point courant sur la même ligne et homologue du point courant sur la ligne précédente, et en affectant ce point
- à une nouvelle zone si l'orientation du gradient du point courant est différente de celles des deux points voisins,
- à une zone incluant au moins un point voisin si l'orientation de son gradient est la même que celle des points de cette zone,
- les deux zones auxquelles appartiennent les deux points voisins étant fusionnées lorsque, non connexes au moment de leur création, elles deviennent connexes par le point courant, l'orientation du gradient du point courant étant la même que celles, identiques, de ces zones,

   les zones de contours étant désignées par des valeurs numériques, appelées numéros de zones, et caractérisées par des vecteurs d'état ayant des composantes fonction des points regroupés dans la zone, actualisés dans une mémoire d'états au cours du traitement de tous les points d'une image ;
- modéliser les contours de l'image à partir des zones ainsi formées en associant à chaque zone un segment de droite passant par le barycentre de ses points, ce segment ayant une direction perpendiculaire à l'orientation du gradient dans cette zone.

L'invention sera mieux comprise et d'autres caractéristiques apparaîtront à l'aide de la description ci-dessous et des figures l'accompagnant :
- les figures 1 à 9 illustrent la mise en oeuvre du procédé selon l'invention pour un exemple de portion d'image ;
- les figures 10a à 10d et 11a à 11d illustrent une étape du procédé selon l'invention ;
- les figures 12 à 17 illustrent une autre étape du procédé selon l'invention pour un exemple de portion d'image ;
- la figure 18 représente le schéma synoptique d'un exemple de réalisation du dispositif selon l'invention, pour la mise en oeuvre du procédé selon l'invention ;
- les figures 19, 20, 22, 23, 24 représentent des schémas synoptiques plus détaillés de cet exemple de réalisation ;

- la figure 21 est un tableau illustrant les différentes valeurs possibles des variables utilisées, en liaison avec la figure 20 ;
- les figures 25, 26, 27 représentent des organigrammes illustrant le fonctionnement d'une partie de cet exemple de réalisation, appelée générateur de contours.

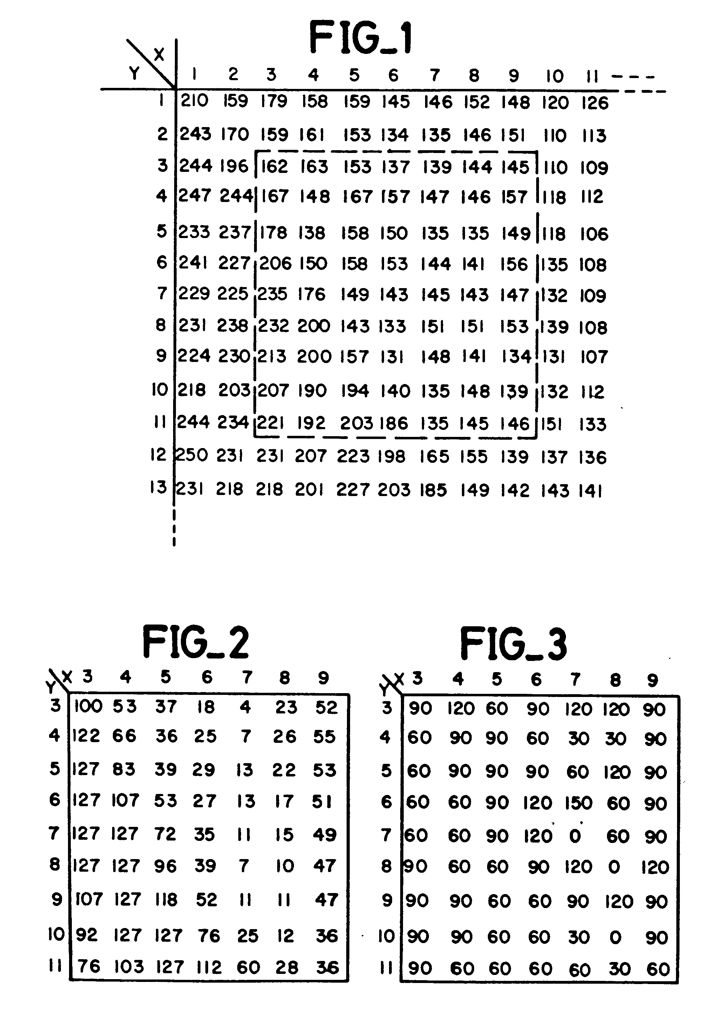

La figure 1 représente les valeurs de luminance d'une image constituée par une trame d'une image de télévision classique. Les abscisses X et les ordonnées Y sont constituées par le rang des points sur une ligne et par le rang de cette ligne. Pour simplifier, la description ne portera que sur le traitement d'une portion d'image, dont les valeurs de luminance sont celles entourées par un cadre en pointillés, sur la figure 1.

Une première étape du procédé d'extraction des contours consiste à détecter les points, appelés points à fort gradient, où le gradient de luminance a un module suffisamment important pour correspondre à un contour, et consiste à déterminer l'orientation locale de ce gradient en chacun de ces points à fort gradient afin de connaître la direction du contour, la direction d'un contour étant perpendiculaire à celle du gradient de luminance sur ce contour. Dans un exemple de mise en oeuvre, il consiste à calculer six produits de convolution :

$L * G_1$

$L * G_2$

.........

$L * G_6$

L étant une matrice carrée $5 \times 5$ constituée par la valeur de luminance du point où l'on cherche à déterminer le module et l'orientation du gradient, et par les valeurs de luminance des 24 points voisins. Les six matrices $G_1$ , ... , $G_6$ sont des matrices carrées $5 \times 5$ décrites par Névatia dans "Linear Feature Extraction and Description", Computer Graphics and Image Processing - June 1980"

$$G_1 = \begin{bmatrix} -100 & -100 & 0 & 100 & 100 \\ -100 & -100 & 0 & 100 & 100 \\ -100 & -100 & 0 & 100 & 100 \\ -100 & -100 & 0 & 100 & 100 \\ -100 & -100 & 0 & 100 & 100 \end{bmatrix}$$

$$G_2 = \begin{bmatrix} -100 & 32 & 100 & 100 & 100 \\ -100 & -78 & 92 & 100 & 100 \\ -100 & -100 & 0 & 100 & 100 \\ -100 & -100 & -92 & 78 & 100 \\ -100 & -100 & -100 & -32 & 100 \end{bmatrix}$$

3

$$G_3 = \begin{bmatrix} 100 & 100 & 100 & 100 & 100 \\ -32 & 78 & 100 & 100 & 100 \\ -100 & -92 & 0 & 92 & 100 \\ -100 & -100 & -100 & -78 & 32 \\ -100 & -100 & -100 & -100 & -100 \end{bmatrix}$$

$$G_4 = \begin{bmatrix} 100 & 100 & 100 & 100 & 100 \\ 100 & 100 & 100 & 100 & 100 \\ 0 & 0 & 0 & 0 & 0 \\ -100 & -100 & -100 & -100 & -100 \\ -100 & -100 & -100 & -100 & -100 \end{bmatrix}$$

$$G_5 = \begin{bmatrix} 100 & 100 & 100 & 100 & 100 \\ 100 & 100 & 100 & 78 & -32 \\ 100 & 92 & 0 & -92 & -100 \\ 32 & -78 & -100 & -100 & -100 \\ -100 & -100 & -100 & -100 & -100 \end{bmatrix}$$

$$G_6 = \begin{bmatrix} 100 & 100 & 100 & 32 & -100 \\ 100 & 100 & 92 & -78 & -100 \\ 100 & 100 & 0 & -100 & -100 \\ 100 & 78 & -92 & -100 & -100 \\ 100 & -32 & -100 & -100 & -100 \end{bmatrix}$$

Ces matrices sont appellées masques et permettent de discriminer respectivement six orientations du gradient : 0°, 150°, 120°, 90°, 60°, 30°, correspondant respectivement à six orientations des contours : 90°, 60°, 30°, 0°, 150°, et 120°, mesurées par rapport à une ligne horizontale, dans le sens des aiguilles d'une montre. L'orientation du contour est déterminée en comparant les valeurs des six produits de convolution. Celui qui a la plus grande valeur absolue indique quelle est l'orientation du contour. D'autre part, sa valeur absolue traduit le module du gradient de la luminance. Cette valeur absolue permet donc de discriminer les points à fort gradient de luminance par rapport aux autres points de l'image. La discrimination des points à fort gradient consiste à comparer la valeur absolue du plus grand produit de convolution obtenu, par rapport à une valeur de seuil fixée. Si cette valeur absolue est supérieure à la valeur de seuil, le point considéré est un point à fort gradient et appartient donc à un contour.

La figure 2 représente un tableau donnant la valeur absolue du plus grand produit de convolution pour les points de la portion d'image entourée de pointillés sur la figure 1.

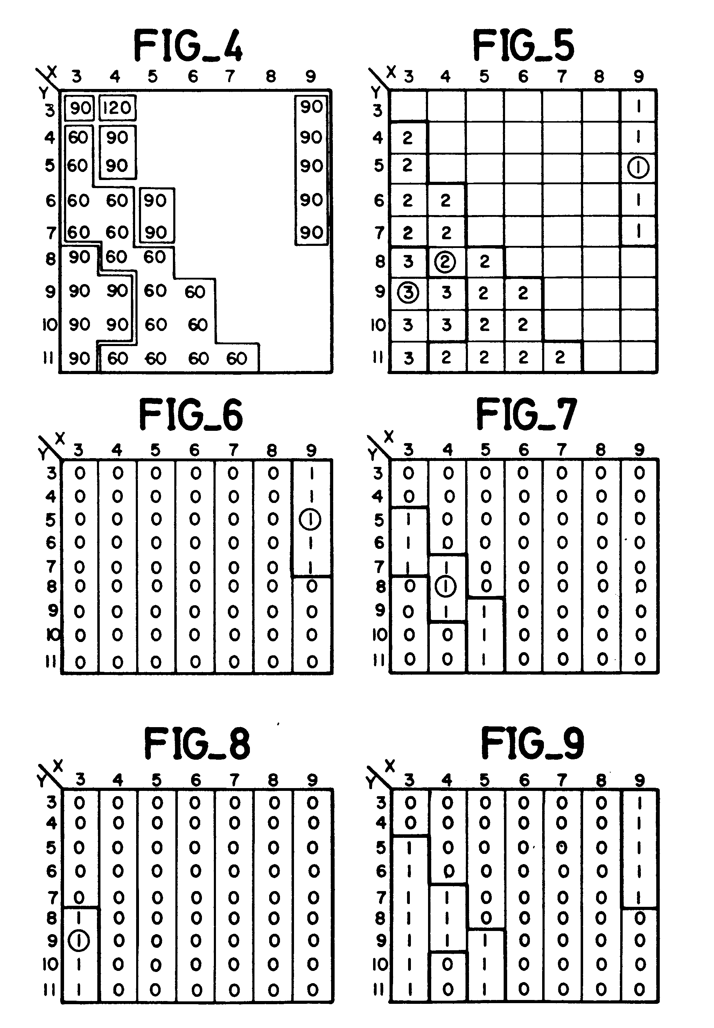

La figure 3 représente un tableau donnant, en degrés, la valeur de l'orientation du contour en chacun de ces points, cette valeur d'orientation étant déterminée pour chaque point en comparant entre elles les valeurs absolues des six produits de convolution obtenus pour le point considéré. Dans cet exemple, la figure 3 représente les valeurs de l'orientation pour tous les points, même pour les points où le module du gradient est faible, c'est-à-dire pour des points qui par la suite ne seront pas considérés comme appartenant à un contour.

La figure 4 représente un tableau donnant les valeurs de l'orientation des contours uniquement pour les points à fort gradient, c'est-à-dire les points où la valeur absolue du plus grand produit de convolution est

4

supérieure à une valeur de seuil qui est fixée à 47 dans cet exemple. La partie du tableau laissée en blanc correspond aux points qui n'appartiennent pas à des contours. Il est à remarquer que ce procédé de détection des points de contour peut être appliqué en considérant les points d'une image dans un ordre quelconque, qui peut être différent de l'ordre d'analyse.

Il est à la portée de l'homme de l'art de réaliser cette détermination des points à fort gradient et la détermination de l'orientation des contours par d'autres méthodes connues, notamment une méthode décrite par MM. Richard et Benveniste dans : IEEE Transactions on Communications, Vol-Com.32, n° 6, june 1984 "Recursive Estimation of Local Characteristics of Edges in TV Pictures as Applied to ADPCM Coding". Cette méthode connue nécessite plus de calculs que la méthode décrite ci-dessus mais permet de discriminer un plus grand nombre de valeurs d'orientation, par exemple 15 dans l'exemple décrit dans ce document IEEE. D'autre part, cette méthode connue réalise un filtrage permettant d'éliminer le bruit affectant les contours.

Une seconde étape du procédé selon l'invention consiste à regrouper les points à fort gradient de luminance qui ont une même valeur d'orientation et sont connexes, pour constituer des zones compactes en vue de modéliser chaque zone par un segment de droite. La figure 4 représente les zones ainsi constituées avec les points à fort gradient de la portion d'image donnée en exemple. Certaines zones sont très petites. Par exemple, la zone dont la valeur d'orientation est 90° et qui est située à l'abscisse X = 5, ne comporte que deux points. Les petites zones ne peuvent pas être considérées comme des segments de contours et sont donc éliminées lorsque leur nombre de points est inférieur à cinq dans cet exemple. Le choix de cette valeur de seuil détermine la rigueur du filtrage éliminant les petits segments de contours.

La figure 5 représente les trois zones dont le nombre de points est au moins égal à cinq. Pour distinguer ces zones elles sont désignées par un numéro : 1, 2, 3. La figure 5 représente les numéros de zone attribués à chaque point de contour de la portion d'image donnée en exemple. Une méthode récursive d'attribution des points à fort gradient à des zones, et de caractérisation de ces zones sera décrite plus loin.

Une troisième étape du procédé selon l'invention consiste à modéliser les contours de l'image en remplaçant chaque contour, constitué par les points d'une zone, par un segment de droite passant par le barycentre de cette zone, perpendiculaire à l'orientation du gradient, et délimité par les coordonnées maximales des points appartenant à cette zone.

Les figures 6, 7, 8 représentent séparément les contours modélisés ainsi obtenus pour les zones n° 1, 2, 3. La figure 9 représente la réunion de l'ensemble des contours modélisés, pour cet exemple d'image. Les points appartenant à un contour modélisé sont représentés par la valeur 1 et les autres points sont représentés par la valeur 0. Le barycentre est représenté par le chiffre 1 cerclé. La modélisation des contours par des segments se termine par le stockage, dans une mémoire, dite mémoire de contours, ayant une capacité correspondant à une image, de valeurs binaires égales à 1 pour les points appartenant à un contour modélisé par un segment et égales à 0 pour tous les autres points d'image.

Pour chacune des zones, les points constituant le segment modélisant cette zone sont :
- le barycentre de la zone, ses coordonnées étant notées $(X_g, Y_g)$ et étant égales aux valeurs entières de la valeur moyenne des coordonnées X et de la valeur moyenne des coordonnées Y des points de la zone ;
- des premiers points dont les coordonnées (X, Y) vérifient les relations :

$$P_1 \leqslant \frac{Y - Y_g}{X - X_g} < P_2$$

et YMIN ≤ Y ≤ YMAX
et XMIN ≤ X ≤ XMAX

$P_1$ et $P_2$ étant deux valeurs de pente définissant une fourchette autour de la valeur de pente de contours correspondant à la valeur de l'orientation du gradient déterminée pour la zone ; la structure de l'échantillonnage des points d'image obligeant à tolérer une certaine erreur de la position des points par rapport à la pente théorique ;
XMIN et XMAX étant les abscisses minimales et maximales des points de la zone.
YMIN et YMAX étant les ordonnées minimales et maximales des points de la zone.
- des seconds points, destinés à rendre le segment plus continu, ces seconds points étant voisins des premiers points sur la même ligne ou sur la même colonne et étant choisis tels que tout point du segment soit connexe à deux autres points, et pas plus, appartenant au même segment ; à l'exception des premiers points qui sont situés aux extrémités du segment, c'est-à-dire les points qui ont au moins une coordonnée égale à XMAX ou XMIN, ou YMAX, ou YMIN, ces points situés aux extrémités n'étant connexes qu'à un seul autre point du segment.

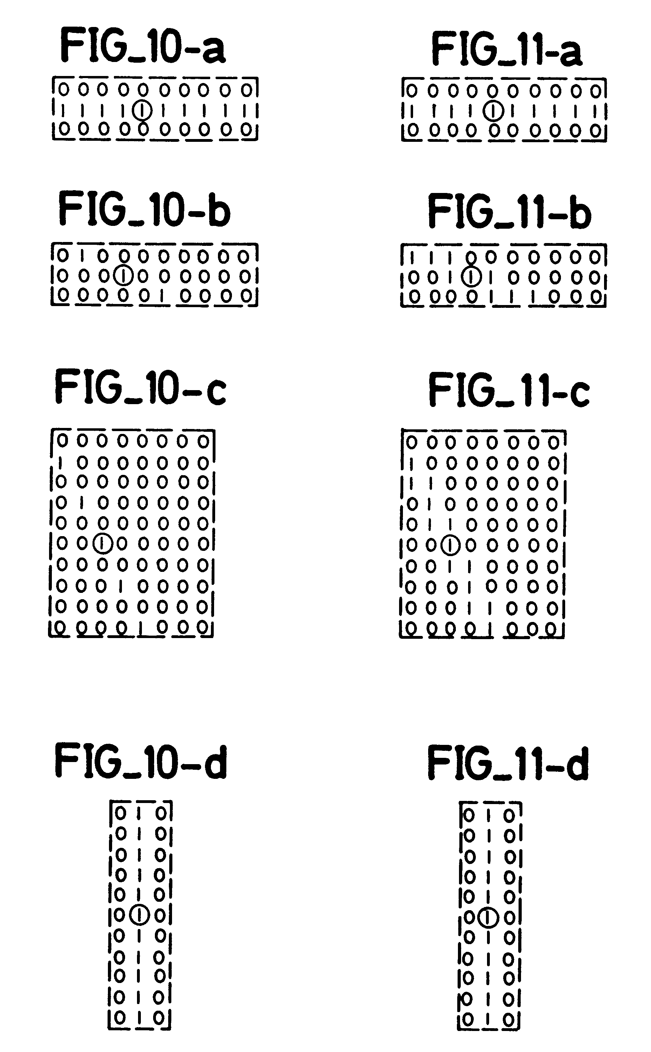

Les figures 10a à d montrent un exemple de choix des premiers points constituant les segments pour des contours orientés à 0°, 30°, 60°, 90°. Les figures 11a à d montrent les segments obtenus après avoir rajouté les seconds points. Il est à remarquer que ces segments sont constitués de motifs périodiques. Sur ces figures, les pointillés délimitent les segments et correspondent aux ordonnées et aux abscisses extrèmes de zones prises comme exemples. Les "1" cerclés désignent les barycentres des zones. Les figures 11a à 11d représentent le contenu de la mémoire de contours pour chacun des segments considérés dans cet exemple. Les contours à 120° et 150° sont réalisés par des motifs symétriques de ceux des contours à 60° et à 30° représentés ci-dessus. Naturellement ces motifs peuvent s'étendre sur des longueurs supérieures à celles des exemples représentés ci-dessus.

Sur la figure 6, le contour modélisé à partir de la zone n° 1 est un segment de droite vertical qui correspond strictement aux points de la zone n° 1. Sur la figure 7, le contour modélisé à partir la zone n° 2 est un segment ayant une orientation de 60° par rapport à l'horizontal, mesurée dans le sens des aiguilles d'une montre. Le calcul des coordonnées du barycentre donne 4,56 et 7,62 pour les moyennes des coordonnées des points, le barycentre est donc considéré être au point (4, 8). Le segment est constitué de 3 premiers points situés sur une droite inclinée à 60°, passant par le barycentre, et est constitué de 6 seconds points choisis selon la règle définie ci-dessus. La zone n° 2 est donc modélisée par un segment de droite ne comportant que 9 points alors que la zone n° 2 en comporte 16.

La figure 8 représente le segment utilisé pour modéliser le contour correspondant à la zone n° 3. La zone n° 3 comporte six points où l'orientation du gradient a pour valeur 90°. Leur barycentre a pour coordonnée (3,9). Cette zone n° 3 est modélisée par un segment vertical passant par le point de coordonnée (3,9) et délimité par le rectangle d'ordonnée minimale 8 et d'ordonnée maximale 11. La comparaison de la figure 5 avec les figures 7 et 8 montrent la simplification des contours procurée par la modélisation sous la forme de segments ayant une faible épaisseur.

La modélisation des contours au moyen de segments de droite permet d'extraire des contours continus et minces qui sont facilement exploitables dans des applications telles que la reconnaissance de formes. Pour améliorer la continuité des contours ainsi modélisés, un perfectionnement du procédé selon l'invention consiste à prolonger systématiquement les deux extrémités de tous les segments, avec un nombre de points prédéterminé, dans le but de provoquer éventuellement le raccordement des segments qui ont des extrémités proches. Par exemple, chaque segment est prolongé verticalement de deux unités et horizontalement de deux unités en limitant le segment par les relations

$$YMIN - 2 \leq Y \leq YMAX + 2 \text{ au lieu de } YMIN \leq Y \leq YMAX$$

et

$$XMIN - 2 \leq X \leq YMIN + 2 \text{ au lieu de } XMIN \leq X \leq XMAX.$$

Pour obtenir des segments de droite qui ne soient pas morcelés inutilement, il est nécessaire de regrouper sans erreur les points à fort gradient qui sont connexes et qui ont une même valeur d'orientation du gradient. En effet, si des zones sont morcellées par erreur, le nombre de segments est multiplié et par conséquent les contours extraits sont inutilement compliqués et plus difficile à exploiter. Pour regrouper les points à fort gradient dans des zones constituées de points connexes ayant une même valeur d'orientation, tous les points d'une image sont traités successivement dans l'ordre où les valeurs de luminance sont disponibles, c'est-à-dire dans l'ordre d'analyse de ces points et dans l'ordre d'analyse des lignes.

Chaque zone est caractérisée au moyen d'un vecteur d'états, dont les composantes sont actualisées au fur et à mesure du traitement des points d'une image. Pour chaque point, PC, dit point courant, le procédé consiste :
- à déterminer une valeur de numéro de zone, z(PC), désignant à l'instant considéré, une zone à laquelle le point courant est attribué, cette valeur z(PC) étant déterminée en fonction de la valeur Z, à l'instant considéré, du numéro de zone du point voisin précédant le point considéré sur la même ligne, en fonction de la valeur Z′, à l'instant considéré, du numéro de zone du point voisin homologue du point considéré sur la ligne précédente, et en fonction de la valeur de l'orientation du gradient au point considéré et aux deux points voisins ; le point courant est attribué à une zone nouvelle, ou à la zone Z, ou à la zone Z′, ou à la zone fictive regroupant les points qui n'appartiennent pas à un contour, et éventuellement la zone Z peut être absorbée par la zone Z′ ou inversement la zone Z′ peut être absorbée par la zone Z ;

- à déterminer ensuite des valeurs dites actualisées, des numéros de zones de ces deux points voisins, en fonction des valeurs Z et Z′, et en fonction de la valeur de l'orientation du gradient au point courant et aux deux points voisins, pour tenir compte d'une éventuelle absorption de l'une de ces zones si elles sont connexes par l'intermédiaire du point courant ;
- à déterminer une valeur actualisée des composantes du vecteur d'état de la zone à laquelle le point courant est attribué, en fonction des valeurs Z et Z′ des numéros de zone des deux points voisins, à l'instant considéré, et en fonction de la valeur de l'orientation du gradient au point considéré et aux deux points voisins, et en fonction des valeurs, à l'instant considéré, des composantes des vecteurs d'état des zones Z et Z′ des deux points voisins ; pour tenir compte de l'attribution du point courant à une zone et pour tenir compte de l'absorption éventuelle de l'une de ces zones si elles sont connexes par l'intermédiaire du point courant.

Les caractéristiques de chaque zone, et l'existence même de chaque zone ne peuvent être connues d'une manière définitive que lorsque tous les points de l'image ont été attribués à une zone.

Les composantes principales du vecteur d'état $E_i$ d'une zone $Z_i$ sont :
- une valeur $R(Z_i)$ codant l'orientation du gradient de tous les points de la zone ;
- le nombre $N(Z_i)$ des points attribués à la zone ;
- la valeur maximale $YMAX(Z_i)$ et la valeur minimale $YMIN(Z_i)$ des coordonnées verticales des points attribués à la zone ;
- la valeur maximale $XMAX(Z_i)$ et la valeur minimale $XMIN(Z_i)$ des coordonnées horizontales des points attribués à la zone ;
- la somme $GX(Z_i)$ des coordonnées X des points attribués à la zone ;
- la somme $GY(Z_i)$ des coordonnées Y des points attribués à la zone ;
- une valeur binaire, appelée indicateur d'absorption et notée $T(Z_i)$, égale à 0 si la zone portant le numéro $Z_i$ n'a jamais absorbé une autre zone, et égale à 1 dans le cas contraire.

Les composantes $GX(Z_i)$, $GY(Z_i)$ et $N(Z_i)$ permettent de déterminer les coordonnées $(X_g, Y_g)$ du barycentre de la zone. Les valeurs maximales des coordonnées permettent de déterminer le rectangle délimitant le segment modélisant la zone. Par exemple, le tableau ci-dessous donne les valeurs des composantes des vecteurs d'état des zones n° 1, 2 et 3 représentées sur la figure 5, les zones de taille inférieure à 5 points ayant été éliminées. Les valeurs $R(Z_i)$ = 1, 2, 3, 4, 5, 6 codent respectivement les valeurs d'orientation du gradient : 0°, 30°, 60°, 90°, 120°, 150°.

| $Z_i$ | $R(Z_i)$ | $XMIN(Z_i)$ | $XMAX(Z_i)$ | $YMIN(Z_i)$ | $YMAX(Z_i)$ | $GX(Z_i)$ | $GY(Z_i)$ | $N(Z_i)$ |
|---|---|---|---|---|---|---|---|---|
| 1 | 4 | 9 | 9 | 3 | 7 | 45 | 25 | 5 |
| 2 | 3 | 3 | 7 | 4 | 11 | 73 | 122 | 16 |
| 3 | 4 | 3 | 4 | 8 | 11 | 20 | 57 | 6 |

D'autres composantes peuvent être incorporées à chaque vecteur d'état, en vue d'applications autres que la simple extraction des contours. Par exemple, une composante peut être constituée par la valeur moyenne du module du gradient de luminance des points de la zone, ou encore l'épaisseur du contour avant sa modélisation, ou bien les coordonnées des extrémités du segment représentant la zone.

Pour stocker les valeurs des composantes du vecteur d'état de chaque zone il est prévu une mémoire dite mémoire d'états. Pour établir une correspondance entre chaque point d'image et la première valeur de numéro de zone, z(PC), attribuée à ce point à l'instant où il est le point courant, il est prévu une mémoire dite mémoire.d'attente Pour établir une correspondance entre la première valeur z(PC) de numéro de zone attribuée à un point et la valeur actualisée définitive de ce numéro de zone, et pour mémoriser les fusions de zones qui sont réalisées au cours du traitement de tous les points d'une image successivement, il est prévu une mémoire dite mémoire d'adresses qui fait correspondre à chaque valeur de numéro de zone $Z_i$, une autre valeur $Z_h$ dite valeur actualisée, qui désigne une zone $Z_h$ résultant de la fusion de la zone $Z_i$ avec la zone $Z_h$, la zone $Z_i$ étant absorbée par la zone $Z_h$.

Lors du processus récursif d'actualisation des zones, décrit ci-après, des cascades de fusionnement de zones connexes sont opérées. Si, par exemple, une zone $Z_j$ absorbe ensuite la zone $Z_h$, la zone résultante est caractérisée par un seul vecteur d'état $E_j$, stocké dans la mémoire d'états à l'adresse $Z_j$. Pour

que le numéro de zone $Z_h$ renvoie aussi à ce vecteur d'état, la mémoire d'adresses contient la valeur $Z_j$ à l'adresse $Z_h$. La mémoire d'adresses permet donc un adressage indirect de la mémoire d'états. En outre, pour toute zone de numéro $z$, qui n'est pas absorbée par une autre zone, la mémoire d'adresses fait correspondre l'adresse $z$ à l'adresse $z$.

Dans cet exemple un numéro de zone égal à 0 est attribué aux points où le gradient de luminance est inférieur au seuil, et une valeur d'orientation fictive, codée par une valeur $R = 0$ est attribuée par convention à une zone regroupant tous les points n'appartenant pas à un contour. Comme il a été mentionné précédemment, les valeurs 0°, 30°, 60°, 90°, 120°, 150° de l'orientation du gradient sont codées par $R = 1, 2, 3, 4, 5, 6$ respectivement. Les valeurs de l'orientation des contours correspondantes sont : 90°, 120°, 150°, 0°, 30°, 60°, mesurées dans le sens des aiguilles d'une montre. Dans ce qui suit, un point d'image qui est en cours d'attribution est appelé point courant et la valeur codant l'orientation du gradient de luminance au point courant est notée R(PC).

Pour déterminer une première valeur de numéro de zone $z$(PC), désignant une zone à laquelle le point courant est attribué, un exemple de mise en oeuvre du procédé selon l'invention distingue quatre cas, selon les valeurs des numéros de zone des points voisins du point courant et selon les valeurs codant l'orientation du contour dans ces zones.

Dans ce qui suit, le point voisin du point courant et le précédant sur la même ligne sera appelé "point à gauche" et le point voisin du point courant appartenant à la ligne immédiatement précédente, sera appelé "point au-dessus". Ces désignations correspondent au cas, le plus courant, où l'analyse de l'image est faite, de haut en bas et de gauche à droite. Mais le procédé selon l'invention n'est évidemment pas limité à ce type de balayage.

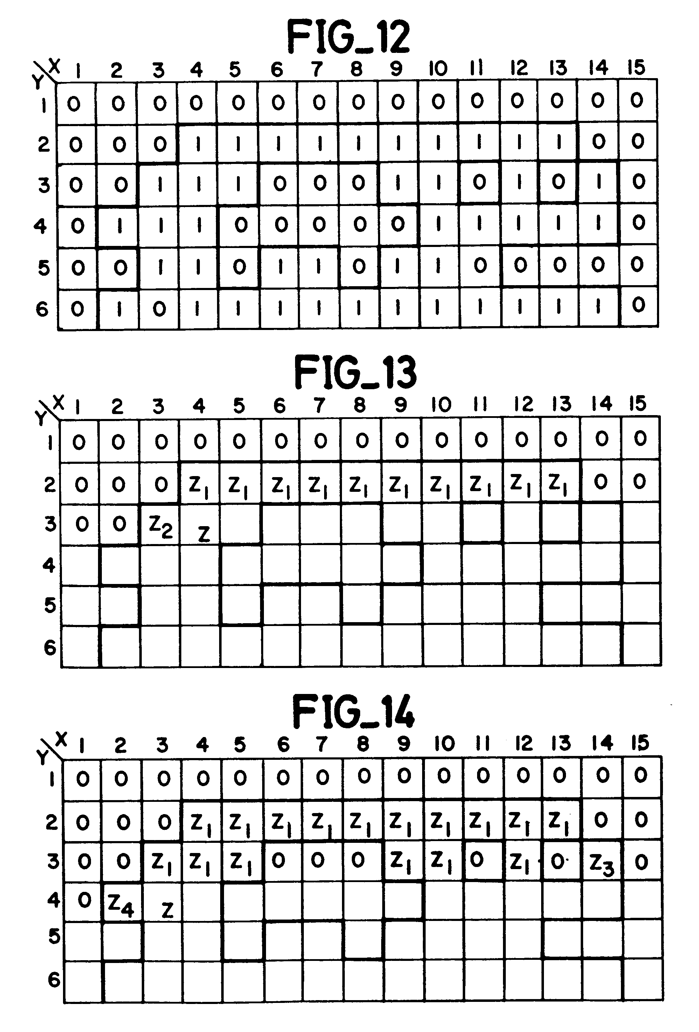

Le regroupement des points à fort gradient connexes et ayant une même orientation de contours est illustré par les figures 11 à 17, pour un exemple de portion d'image. Sur la figure 12, les points à fort gradient de luminance sont représentés par du "1", et les points à faible gradient sont représentés par des "0", car dans cet exemple de portion d'image, tous les points à fort gradient sont supposés avoir une même orientation de contours, égale à 0 degré; et cette orientation est codée par la valeur 1. Sur les figures 13 à 17 chaque point est représenté par un numéro de zone qui désigne la zone à laquelle il appartient à un instant donné. Les figures 13 à 17 correspondent à des instants successifs du traitement, c'est pourquoi certains points ont une valeur de numéro de zone qui varie d'une figure à une autre, à cause des créations et des fusions de zone.

Les quatre cas sont les suivants :

1er cas : Le point voisin à gauche et le point voisin au-dessus appartiennent à la zone ayant 0 pour numéro, c'est-à-dire ne sont pas des points de contour, ou bien ils appartiennent à des zones $Z$ et $Z'$ ayant des orientations $R(Z)$ et $R(Z')$ différentes de R(PC), l'orientation au point courant. Le point courant ne pouvant pas être attribué à l'une de ces deux zones, il est attribué à une zone nouvelle, dont le numéro, $Z_d$, est l'adresse d'une case mémoire disponible dans la mémoire d'adresses. Les valeurs des composantes du vecteur d'état de cette zone sont inscrites dans la mémoire d'états à l'adresse $Z_i$. Ces valeurs sont :

$R(Z_d) = R(PC) = R(PC)$
$N(Z_d) = 1$
$YMAX(Z_d) = Y(PC)$
$YMIN(Z_d) = Y(PC)$
$XMAX(Z_d) = Y(PC)$
$XMIN(Z_d) = X(PC)$
$GX(Z_d) = X(PC)$
$GY(Z_d) = Y(PC)$
$T(Z_d) = 0$    (1)

La valeur $z(PC)v = Z_d)$ est inscrite dans la mémoire d'attente à une adresse correspondant au point courant, et dans la mémoire d'adresses à l'adresse $Z_d$.

Ce cas est rencontré aux points (X = 4, Y = 2) et (X = 3, Y = 3) sur la figure 13.

2ème cas : Le point voisin à gauche du point courant est un point de contour, il appartient à une zone $Z$ dont l'orientation $R(Z)$ est identique à celle, R(PC), au point courant, et le point voisin au-dessus n'est pas un point de contour ou bien appartient à une zone $Z'$ dont l'orientation $R(Z')$ est différente de celle, R(PC), au point courant. Le point courant étant connexe à une zone déjà existante et qui a la même orientation, il est attribué à cette zone.

Les valeurs des composantes du vecteur d'état de la zone $Z$ sont actualisées en inscrivant dans la mémoire d'états, à l'adresse $Z$, les valeurs suivantes :

$N_a(Z) = N_p(Z) + 1$

$YMAX_a(Z) = $ Maximum de $(YMAX_p(Z),Y(PC))$

$YMIN_a(Z) = $ Minimum de $(YMIN_p(Z),Y(PC))$

$XMAX_a(Z) = $ Maximum de $(XMAX_p(Z),X(PC))$

$XMIN_a(Z) = $ Minimum de $(XMIN_p(Z),X(PC))$

$GX_a(Z) = GX_p(Z) + X(PC)$

$GY_a(Z) = GY_p(Z) + Y(PC)$

$T_a(Z) = T_p(Z)$ 	(2)

Les indices a désignent les valeurs actualisées des composantes, et les indices p désignent les valeurs précédentes des composantes, avant l'actualisation.

Ce cas est rencontré au point (X = 5, Y = 2) de l'exemple de la figure 13.

3ème cas : Si les deux points voisins sont des points de contour, il faut distinguer trois possibilités (a, b, c), selon la valeur de l'orientation du gradient au point courant et en chacun des deux points voisins, et selon que ces zones ont déjà absorbé ou pas une autre zone. Les règles d'attribution du point courant à une zone peuvent comporter alors diverses variantes, selon qu'elles privilégient la zone du point au-dessus ou bien celle du point à gauche. Les règles données ci-dessous ont été choisies dans le but d'éviter le plus possible des cascades d'absorptions d'une zone par une autre zone, et de simplifier ainsi l'actualisation de la mémoire d'adresses.

En effet, si une zone $Z_9$, par exemple, absorbe une zone $Z_8$ qui elle-même a absorbé une zone $Z_7$ qui elle-même a absorbé une zone $Z_6$, la mémoire d'adresses doit non seulement faire correspondre $Z_8$ avec $Z_9$, mais aussi faire correspondre $Z_6$ et $Z_7$ avec $Z_9$, car les points attribués à la zone $Z_6$ et $Z_7$ doivent être considérés comme attribués maintenant à $Z_9$. Pour cela, deux opérations distinctes sont à réaliser dans la mémoire d'adresses : une mémorisation de l'absorption de $Z_8$ par $Z_9$ en inscrivant la valeur $Z_9$ à l'adresse $Z_8$ ; puis une cascade d'actualisations du contenu de la mémoire d'adresses, consistant à déterminer quelle zone ($Z_7$) a été absorbée par $Z_8$ puis quelle zone ($Z_6$) a été absorbée par $Z_7$, etc, puis à inscrire $Z_9$ aux adresses constituées par les numéros de toutes ces zones. L'actualisation est donc une opération relativement longue car elle peut nécessiter plusieurs lectures dans la mémoire d'adresses.

La règle choisie pour éviter le plus possible les cascades d'absorptions est la suivante :

Lorsque deux zones ont un point commun, la zone du point au-dessus a la priorité pour absorber la zone du point à gauche, absorbant ainsi une zone de création plus récente en général. Mais, d'autre part, cette absorption est autorisée seulement si la zone du point à gauche n'a pas absorbé une zone précédemment, sinon c'est la zone du point à gauche qui absorbe la zone du point au-dessus. Pour indiquer si une zone a déjà absorbé au moins une zone, un bit indicateur d'absorption $T(Z_i)$ est incorporé dans chaque vecteur d'état caractéristique d'une zone $Z_i$. Par exemple, pour la zone Z, à laquelle appartient le point à gauche, la valeur de ce bit est $T(Z) = 1$, si elle a déjà absorbé une zone et $T(Z) = 0$ dans le cas contraire.

- a) si les zones des deux points voisins ont des numéros Z et Z′ distincts, si elles ont la même orientation du gradient que celle au point courant, et si la zone du point à gauche n'a jamais absorbé une autre zone ($T(Z) = 0$), alors la zone Z du point à gauche peut être absorbée par la zone Z′ du point au-dessus sans nécessiter une cascade d'actualisations dans la mémoire d'adresses. La valeur Z′ est inscrite dans la mémoire d'attente à l'adresse correspondant au point courant, et dans la mémoire d'adresses à l'adresse Z, car elle constitue la valeur actualisée du numéro de zone du point voisin à gauche. Les valeurs des composantes du vecteur d'état de la zone Z′ sont actualisées en inscrivant dans la mémoire d'états, à l'adresse Z′, les valeurs suivantes :

$N_a(Z') = N_p(Z') + 1 + N_p(Z)$

$YMAX_a(Z') = $ Maximum de $(YMAX_p(Z),Y(PC),YMAX_p(Z'))$

$YMIN_a(Z') = $ Minimum de $(YMIN_p(Z),Y(PC),YMIN_p(Z'))$

$YMAX_a(Z') = $ Maximum de $(XMAX_p(Z),X(PC),,XMAX_p(Z'))$

$XMIN_a(Z') = $ Minimum de $(XIMIN_p(Z),X(PC),XMIN_p(Z'))$

$GX_a(Z') = GX_P(Z') + X(PC) + GX_p(Z)$

$GY_a(Z') = Gy_p(Z') + Y(PC) + GY_p(Z)$

$T_a(Z') = 1$ 	(3)

Dans l'exemple représenté sur la figure 13, ce cas est rencontré aupoit (X = 4, Y = 3). Le point voisin au-dessus appartient à une zone $Z_1$ et le point voisin à gauche appartient à une zone

différente, $Z_2$, qui a été créée lorsque le point (X = 3, Y = 3) a été traité. Cependant, l'orientation est la même dans ces zones, $Z_1$ et $Z_2$, et au point courant. D'autre part, la zone $Z_1$ n'a encore jamais absorbée d'autre zone. La zone $Z_2$ peut donc être fondue dans la zone $Z_1$ et le point courant (X = 4, Y = 3) peut être attribué à la zone $Z_1$.

- b) si, comme précédemment, les zones Z et Z′ sont distinctes et ont la même orientation du gradient que celle au point courant, mais si la zone Z du point à gauche a déjà absorbé au moins une zone (T(Z) = 1), elle absorbe la zone Z′ du point au-dessus. Aucune cascade d'actualisations de la mémoire d'adresses n'est nécessaire si la zone Z′ du point au-dessus n'a jamais absorbé de zone précédemment (T(Z′) = 0). Une absorption inverse, c'est-à-dire une absorption de la zone Z par la zone Z′, aurait forcément nécessité une cascade d'actualisations dans la mémoire d'adresses.

Une cascade d'actualisations du contenu de la mémoire d'adresses est nécessaire seulement dans le cas où la zone Z′ du point au-dessus a, elle aussi, déjà absorbé au moins une zone (T(Z′) = T(Z) = 1).

Dans le cas le plus simple, où la zone Z′ n'a pas absorbé précédemment d'autres zones, la valeur Z n'est inscrite dans la mémoire d'adresses qu'à l'adresse Z.

Dans tous les cas, la valeur Z est inscrite dans la mémoire d'attente à l'adresse correspondant au point courant, et dans la mémoire d'adresses à l'adresse Z′, car elle constitue la valeur actualisée du numéro de zone du point voisin au-dessus.

Les valeurs des composantes du vecteur d'état de la zone Z sont actualisées en inscrivant dans la mémoire d'états, à l'adresse Z, les valeurs suivantes :

$N_a(Z) = N_p(Z) + 1 + N_p(Z')$
$YMAX_a(Z) = \text{Maximum de } (YMAX_p(Z), Y(PC), YMAX_p(Z'))$
$YMIN_a(Z) = \text{Minimum de } (YMIN_p(Z), Y(PC), YMIN_p(Z'))$
$XMAX_a(Z) = \text{Maximum de } (XMAX_p(Z), X(PC), XMAX_p(Z'))$
$XMIN_a(Z) = \text{Minimum de } (XMIN_p(Z), X(PC), XMIN_p(Z'))$
$GX_a(Z) = GX_p(Z) + X(PC) + GX_p(Z')$
$GY_a(Z) = GY_p(Z) + Y(PC) + GY_p(Z')$
$T_a(Z) = 1 \qquad (4)$

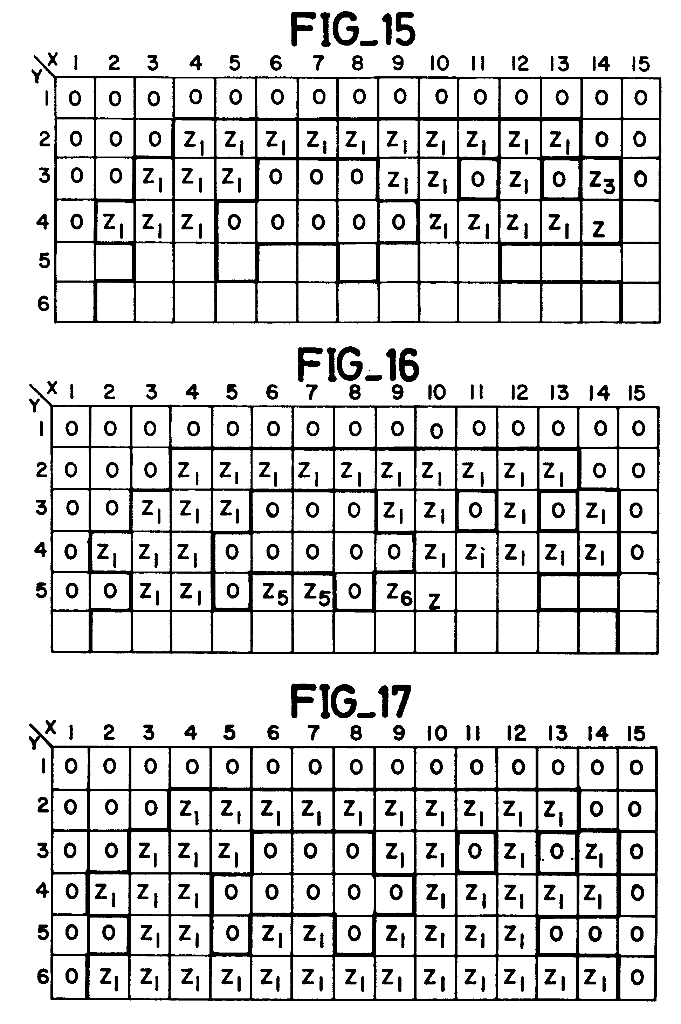

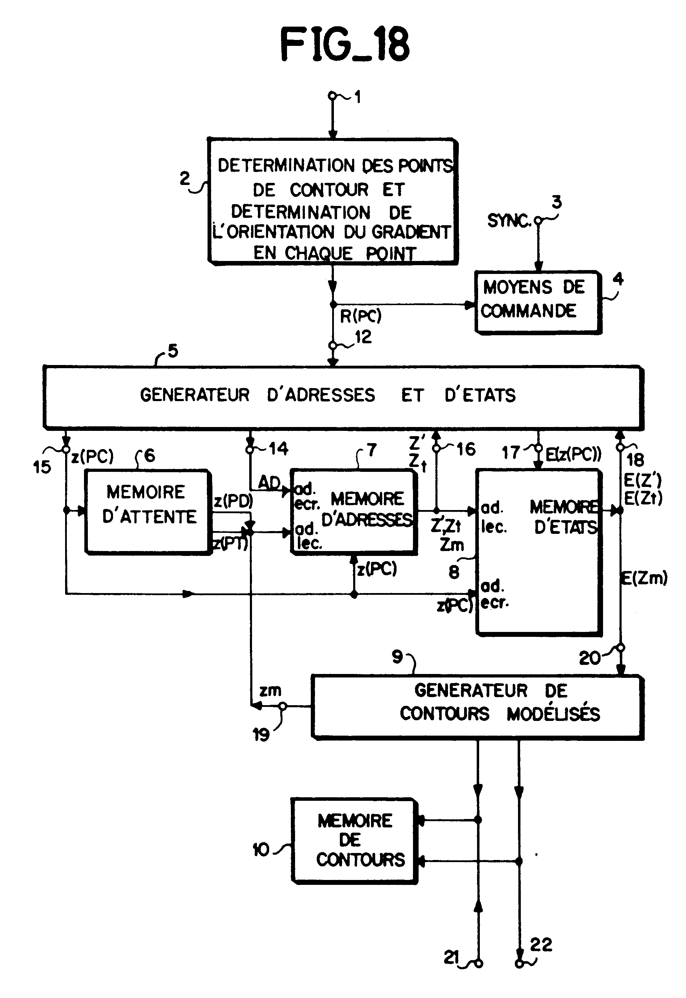

Ce cas est rencontré au point (X = 14, Y = 4) sur la figure 15 : la zone $Z_1$ ne doit pas être absorbée par la zone $Z_3$ pour éviter une cascade d'actualisations dans la mémoire d'adresses, la zone $Z_1$ ayant déjà absorbé précédemment $Z_2$. De même, au point (X = 10, Y = 5) sur la figure 16. Finalement, dans cet exemple, tous les points sont attribués à la zone $Z_1$, comme cela est représenté sur la figure 17, car la première zone crée, $Z_1$, absorbe toutes les zones crées au cours du traitement de cet exemple de portion d'image.

- c) Si les deux points voisins appartiennent à une même zone (Z = Z′) ayant une orientation du gradient identique à celle du gradient au point courant, ce dernier est attribué à cette zone.

La valeur Z = Z′ est inscrite dans la mémoire d'attente à l'adresse correspondant au point courant. Les composantes de la mémoire d'états sont actualisées comme décrit, pour le 2$^{\text{ème}}$ cas :

Ce cas est rencontré par exemple au point (X = 5, Y = 3) sur la figure 14.

4ème cas : Le point voisin à gauche n'est pas un point de contour, ou bien appartient à une zone où l'orientation du gradient est différente de celle au point courant, et le point voisin au-dessus est un point de contour ayant la même orientation de gradient. Le point courant étant connexe à une zone Z′ déjà existante, il est attribué à cette zone. La valeur Z′ est inscrite dans la mémoire d'attente à l'adresse correspondant au point courant. Les valeurs des composantes du vecteur d'état de la zone Z′ sont actualisées en inscrivant dans la mémoire d'états, à l'adresse Z′, les valeurs suivantes :

$N_a(Z') = N_p(Z') + 1$
$YMAX_a(Z') = \text{Maximum de } (Y(PC), YMAX_p(Z'))$
$YMIN_a(Z') = \text{Minimum de } (Y(PC), YMIN_p(Z'))$
$XMAX_a(Z') = \text{Maximum de } (X(PC), XMAX_p(Z'))$
$XMIN_a(Z') = \text{Minimum de } (X(PC), XMIN_p(Z'))$
$GX_a(Z') = GX_p(Z') + X(PC)$
$GY_a(Z') = GY_p(Z') + Y(PC)$
$T_a(Z') = T_p(Z') \qquad (5)$

Ce cas est rencontré, par exemple, au point (X = 9, Y = 3) sur la figure 14.

Dans l'exemple représenté sur les figures 11 à 17, la zone $Z_1$ est propagée de proche en proche tant que la suite des points traités comporte des points de contour ayant la même orientation de gradient et étant connexes à cette zone $Z_1$. Des zones nouvelles, $Z_2$ à $Z_6$, sont créées mais sont absorbées par la zone $Z_1$.

Par exemple, au point (X = 14, Y = 3), sur la figure 17, une zone de numéro $Z_3$ est créée, mais au moment du traitement du point en-dessous elle est absorbée par la zone de numéro $Z_1$. De la même façon des zones de numéros $Z_4$ et $Z_5$ sont créées puis absorbées peu de temps après (figures 15 et 16). Pour chaque point traité il peut y avoir disparition d'une des zones existantes, par conséquent la définition des zones d'une image n'est pas terminée avant que tous les points de cette image aient été traités. Dans l'exemple de la figure 12, les regroupements successifs de zones connexes conduisent à une seule zone $Z_1$ (figure 17).

Dans l'exemple des figures 12 à 17, la configuration finale de la mémoire d'adresses est :

| adresse | contenu |
| --- | --- |
| $Z_1$ | $Z_1$ |
| $Z_2$ | $Z_1$ |
| $Z_3$ | $Z_1$ |
| $Z_4$ | $Z_1$ |
| $Z_5$ | $Z_1$ |
| $Z_6$ | $Z_1$ |
| $Z_7$ | $Z_1$ |

Après l'opération de détection des zones de points de contour dans toute une image, le vecteur d'état des zones est utilisé pour réaliser un traitement numérique. Pour déterminer à quelle zone appartient finalement un point d'image, une première étape consiste à lire dans la mémoire d'attente le numéro $z(PC)$ de la zone à laquelle le point considéré a été attribué initialement, puis une deuxième étape consiste à lire dans la mémoire d'adresses, à l'adresse $z(PC)$, le numéro $Z_0$ de la zone ayant finalement absorbé la zone de numéro $z(PC)$, après une cascade d'absorptions éventuellement. Dans l'exemple de la figure 12, pour le point (X = 3, Y = 3), le numéro de zone attribué initialement est $Z_2$ ; cette zone $Z_2$ ayant été absorbée par la zone $Z_1$ la mémoire d'adresses fait correspondre $Z_1$ à $Z_2$, et par conséquent le point considéré est traité comme appartenant à la zone $Z_1$. Le vecteur d'état de cette zone est donné par la mémoire d'états à l'adresse $Z_1$.

La mémorisation d'une fusion de 2 zones doit être mémorisée au moment où le point courant est attribué à la réunion de ces 2 zones. Par contre, les cascades d'actualisations éventuellement à réaliser dans la mémoire d'adresses peuvent être différées un certain temps. Lorsque vient le moment où un point donné constitue le point voisin à gauche ou le point voisin au-dessus du point courant, il est nécessaire de connaître son numéro de zone actualisé et celui-ci n'est pas forcément identique au premier numéro de zone qui a été attribué au point donné. Le numéro de zone du point à gauche du point courant n'a pas changé depuis l'instant, très proche, où il a été traité. Par contre le numéro de zone du point au-dessus a changé plusieurs fois à la suite des absorptions de zones. L'actualisation du numéro de zone d'un point donné doit donc être réalisée avant qu'il ne joue le rôle du point voisin au-dessus, et les opérations suivantes doivent avoir été effectuées :
- Lire dans la mémoire d'attente le premier numéro de zone $z(PD)$ attribué au point au-dessus. Par exemple $z(PD) = Z_{11}$
- Lire dans la mémoire d'adresses le contenu, noté ADR ($Z_1$), de l'adresse $Z_{11}$. Par exemple, la mémoire d'adresses a le contenu suivant :

| adresse | contenu |
|---------|---------|
| $Z_{11}$ | $Z_{12}$ |
| $Z_{12}$ | $Z_{13}$ |
| $Z_{13}$ | $Z_{14}$ |
| $Z_{14}$ | $Z_{14}$ |

donc $ADR(Z_{11}) = Z_{12}$

- Lire dans la mémoire d'adresses le contenu, noté $ADR(Z_{12})$, de l'adresse $Z_{12}$.

$ADR(Z_{12}) = Z_{13}$

- Lire dans la mémoire d'adresses le contenu noté $ADR(Z_{13})$, de l'adresse $Z_{13}$.

$ADR(Z_{13}) = Z_{14}$

- Lire dans la mémoire d'adresses le contenu, noté $ADR(Z_{14})$, de l'adresse $Z_{14}$.

$ADR(Z_{14}) = Z_{14}$.

$Z_{14}$ étant inscrit à l'adresse $Z_{14}$, la zone de numéro $Z_{14}$ n'a pas été absorbée par une autre zone, il est donc inutile de continuer le processus.
- Ecrire $Z_{14}$ dans la mémoire d'adresses aux adresses $Z_{13}$, $Z_{12}$, $Z_{11}$.
Après ces opérations d'actualisation le contenu de la mémoire d'adresses est le suivant :

| adresse | contenu |
|---------|---------|
| $Z_{11}$ | $Z_{14}$ |
| $Z_{12}$ | $Z_{14}$ |
| $Z_{13}$ | $Z_{14}$ |
| $Z_{14}$ | $Z_{14}$ |

Cette actualisation ne tient compte, évidemment, que des absorptions ayant eu lieu entre l'instant où le point au-dessus était attribué à la zone $Z_{11}$ et l'instant où le point courant est considéré. Par la suite, d'autres actualisations sont éventuellement faites aux adresses $Z_{11}$, $Z_{12}$, $Z_{13}$, $Z_{14}$.
En pratique il n'est pas nécessaire de faire un test pour détecter qu'un contenu est égal à son adresse et arrêter alors la cascade des lectures. L'expérience montre qu'il n'y a pratiquement jamais plus de deux cascades. D'autre part, il n'est pas indispensable d'inscrire la valeur actualisée $Z_{14}$ à toutes les adresses $Z_{11}$, $Z_{12}$, $Z_{13}$, car il est possible de retrouver la valeur actualisée, aussi souvent qu'il est nécessaire, en réalisant à chaque fois une suite de lectures dans la mémoire d'adresses. Il suffit donc de réaliser systématiquement trois lectures, et il n'est pas indispensable de faire l'écriture du numéro obtenu. D'autre part, cette suite d'opérations étant relativement longue, il est nécessaire d'anticiper l'actualisation d'un temps égal à 3T, T correspondant au temps d'analyse d'un point d'image. En outre, pour gagner du temps les trois lectures ne sont pas faites en série sur une même mémoire en utilisant une mémoire tampon pour stocker une valeur d'adresses entre 2 lectures ; elles sont réalisées dans 3 mémoires distinctes mais identiques, qui au préalable ont le même contenu et sont finalement actualisées identiquement. Soit $t$ l'instant où le point courant est attribué à une zone. Pour actualiser la mémoire d'adresses et les deux mémoires auxiliaires, dans l'exemple vu précédemment, les opérations sont les suivantes :
- A l'instant $t - 3T$, lire le contenu noté, $ADR_1(Z_{11})$ de l'adresse $Z_{11}$ dans la première mémoire auxiliaire :

$ADR_1(Z_{11}) = Z_{12}$

12

- A l'instant t - 2T, lire le contenu, noté $ADR_2(ADR_1(Z_{11}))$, de l'adresse $ADR_1(Z_{11})$ dans la deuxième mémoire auxiliaire :

$$ADR_2(ADR_1(Z_{11})) = ADR_2(Z_{12}) = Z_{13}$$

- A l'instant t - T, lire le contenu, noté $ADR_3(ADR_2(ADR_1(Z_{11})))$, de l'adresse $ADR_2(ADR_1(Z_1)) = Z_3$ dans la mémoire d'états :

$$ADR_3(Z_{13}) = Z_4$$

Ainsi à l'instant t la valeur actualisée du numéro de zone du point au-dessus du point courant est connue et il est possible alors de traiter le point courant. Cet exemple ne limite pas la portée de l'invention. Il est à la portée de l'homme de l'art de réaliser un plus grand nombre de lectures dans la mémoire d'adresses, et dans les mémoires auxiliaires, et de les répartir sur un intervalle de temps plus long.

La figure 18 représente le schéma synoptique d'un exemple de réalisation d'un dispositif d'extraction et de modélisation des contours d'une image, pour la mise en oeuvre du procédé selon l'invention. Il comporte un dispositif 2 de détermination des points de contour et de détermination de l'orientation du gradient en chaque point ; des moyens de commande 4 ; un générateur 5 d'adresses et d'états ; une mémoire d'attente 6 ; une mémoire d'adresses 7 ; une mémoire d'états 8 ; un générateur 9 de contours modélisés ; et une mémoire de contours 10.

Cet exemple de réalisation est destiné à traiter en temps réel une suite d'images de télévision conformes à un standard classique. Ces images de télévision sont constituées chacune de deux trames entrelacées qui sont considérées, dans ce qui suit, comme deux images indépendantes. Une borne d'entrée 1 reçoit une suite de valeurs numériques représentant la luminance des points d'une trame analysée, échantillonnée, et numérisée selon un procédé classique de télévision. Ces valeurs numériques sont appliquées à la borne d'entrée 1 avec un intervalle de temps T entre chaque valeur, par paquets correspondant chacun à une ligne d'image. Une borne d'entrée 3 reçoit des signaux de synchronisation correspondant à chaque point d'image et à chaque ligne d'image. Une borne d'entrée 21 et une borne de sortie 22 permettent respectivement d'appliquer une valeur d'adresse et des signaux de commande à une entrée de la mémoire de contours 10 et de lire une valeur binaire dans cette mémoire 10, pour exploiter les contours qui ont été détectés et modélisés par le dispositif. La mémoire de contours 10 stocke une valeur binaire pour chaque point d'image, une valeur 0 indiquant un point qui n'appartient pas à un contour modélisé et une valeur 1 indiquant un point appartenant à un contour modélisé.

Le dispositif 2 possède une borne d'entrée reliée à la borne d'entrée 1 et une borne de sortie reliée à une entrée des moyens de commande 4 et à une borne d'entrée 12 du générateur 5 d'adresses et d'états. Les moyens de commande 4 possèdent une entrée reliée à la borne d'entrée 3. La mémoire d'attente 6 possède une entrée reliée à une borne de sortie 15 du générateur 5 et deux sorties reliées à une entrée d'adresses de lecture de la mémoire d'adresses 7. La mémoire d'adresses 7 possède une entrée d'adresses d'écriture reliée à une borne de sortie 14 du générateur 5, une entrée de données reliée à une borne de sortie 15 du générateur 5, et une sortie de données reliée à une borne d'entrée 16 du générateur 5 et à une entrée d'adresses de lecture de la mémoire d'états 8.

La mémoire d'états 8 possède une entrée d'adresses d'écriture reliée à la borne de sortie 15 du générateur 5, une entrée de données reliée à une borne de sortie 17 du générateur 5 et une sortie de données reliée à une borne d'entrée 18 du générateur 5 et à une borne d'entrée 20 du générateur 9 de contours modélisés. Le générateur 9 possède une borne de sortie 19 reliée à l'entrée d'adresses de lecture de la mémoire d'adresses 7, une borne de sortie d'adresses reliée à une entrée d'adresses de la mémoire de contours 10 et une sortie de donnée reliée à une entréesortie de donnée de la mémoire 10. La borne d'entrée 21 et la borne de sortie 22 sont reliées respectivement à l'entrée d'adresses et à l'entréesortie de donnée de la mémoire 10.

Le dispositif 2 a pour rôle de déterminer, pour chaque point d'image successivement dans l'ordre d'analyse, s'il appartient ou non à un contour, selon la valeur du gradient de luminance en ce point, et de déterminer l'orientation du gradient de luminance en ce point pour en déduire l'orientation du contour auquel ce point appartient. La sortie du dispositif 2 fournit une valeur R(PC) codant la valeur de l'orientation du gradient de luminance et codant en même temps la valeur de l'orientation du contour puisqu'il est toujours perpendiculaire à l'orientation du gradient. Les valeurs d'orientation 0°, 30°, 60°, 90°, 120°, 150° sont codées par R(PC) = 1, 2, 3, 4, 5, 6, respectivement. Lorsque le point courant n'appartient pas à un contour, la valeur R(PC) = 0 lui est attribuée par convention.

Les moyens de commande 4 fournissent des signaux d'horloge synchronisés par les signaux de synchronisation appliqués à la borne d'entrée 3, et ils fournissent des signaux de commande fonction de ces signaux d'horloge et fonction de la suite des valeurs R(PC) fournies par le dispositif 2. Ces signaux commandent tous les éléments du dispositif d'extraction et de modélisation des contours d'une image. Ce dernier fonctionne avec trois périodes distinctes : une période T correspondant à la période d'analyse des points d'image ; une période correspondant à la période d'analyse des lignes d'image ; et une période correspondant à la période d'analyse des trames d'image ; chaque image étant constituée de deux trames entrelacées qui sont considérées chacune comme une image indépendante pour l'extraction et la modélisation des contours. La description suivante considérera successivement le fonctionnement au cours de chacune de ces périodes.

Pendant une période T correspondant à l'analyse d'un point, le fonctionnement est le suivant. Les moyens de commande 4 génèrent une suite de signaux de commande qui sont fonction des valeurs R(PC), R(PD), R(PA) codant l'orientation du gradient respectivement au point courant, au point voisin au-dessus du point courant, et au point voisin à gauche du point courant. Une sortie de la mémoire d'attente 6 fournit à l'entrée d'adresses de lecture de la mémoire d'adresses 7 une valeur $z(PD)$ qui est la valeur de numéro de zone ayant été attribuée au point voisin au-dessus du point courant au moment où ce point est traité. Une lecture dans la mémoire d'adresses 7 fournit à la borne d'entrée 16 du générateur 5 et à l'entrée d'adresses de lecture de la mémoire d'états 8, une valeur $Z'$ qui est la valeur actuelle à l'instant considéré du numéro de zone attribué au point voisin au-dessus. Une lecture dans la mémoire d'états 8 fournit les valeurs $E(Z')$ des composantes du vecteur d'état de la zone ayant pour numéro $Z'$.

Le générateur d'adresses et d'états 5 détermine alors la valeur de numéro de zone à attribuer au point courant, $z(PC)$, en fonction de la valeur $Z'$, en fonction de la valeur actuelle $Z$, à l'instant considéré, du numéro de zone attribué au point voisin à gauche, et en fonction de $R(PC)$, et en fonction des valeurs des composantes des vecteurs d'état $E(Z')$ de la zone du point voisin au-dessus et $E(Z)$ de la zone du point voisin à gauche. La valeur $Z$ et le vecteur d'état $E(Z)$ n'ont pas besoin d'être lus dans la mémoire d'états 8 car le point voisin à gauche du point courant vient juste d'être traité auparavant, la valeur $Z$ et les valeurs des composantes du vecteur d'état $E(Z)$ sont donc encore disponibles à l'intérieur du générateur d'adresses et d'états 5.

Ensuite, la valeur $z(PC)$ déterminée par le générateur 5 est appliquée à sa borne de sortie 15. Elle est inscrite dans la mémoire d'attente 6 à un emplacement correspondant au point d'image en cours de traitement, et dans la mémoire d'adresses 7 à une adresse d'écriture AD fournie par la borne de sortie 14 du générateur 5, et elle est appliquée à l'entrée d'adresses d'écriture de la mémoire d'états 8. La borne de sortie 17 du générateur 5 fournit la valeur $E(z(PC))$ des composantes du vecteur d'état de la zone de numéro $z(PC)$ à laquelle le point courant est attribué. Si cette zone existait auparavant, la valeur de ces composantes a été actualisée, c'est-à-dire modifiée pour tenir compte du fait que le point courant est attribué à cette zone et qu'il y a eu éventuellement fusion d'une autre zone dans celle-ci. Cette valeur actualisée des composantes de ce vecteur d'état sont inscrites dans la mémoire d'états 8 à l'adresse $z(PC)$.

Lorsqu'il y a eu absorption d'une zone, celle du point voisin à gauche ou du point voisin au-dessus du point courant, la valeur $z(PC)$ qui désigne la zone absorbante est inscrite dans la mémoire d'adresses 7 à l'adresse AD qui est constituée alors par la valeur du numéro de la zone absorbée. Cette écriture dans la mémoire d'adresses 7 constitue une actualisation partielle de son contenu. La zone de numéro AD peut avoir absorbé précédemment une ou plusieurs zones il est donc nécessaire de faire correspondre les numéros de ces zones et le numéro AD. Ce processus d'actualisation sera décrit par la suite ainsi que la structure plus détaillée de la mémoire d'adresses 7.

Le fonctionnement du dispositif d'extraction et de modélisation des contours comporte aussi une période correspondant à la période d'analyse des lignes d'image, et se déroulant pendant l'intervalle de temps séparant les analyses de deux lignes consécutives d'une image. Il a pour but d'éliminer des zones qui sont terminées et comportent un très petit nombre de points. Cette élimination constitue un filtrage des zones trop petites pour constituer un contour et permet de rendre disponible à nouveau des valeurs de numéro de zone, c'est-à-dire permet de réutiliser des emplacements de la mémoire d'états. Ainsi la capacité de la mémoire d'états peut être considérablement réduite.

Ce traitement est réalisé pendant l'intervalle de temps séparant des intervalles de temps correspondant à deux lignes car il nécessite une lecture dans la mémoire d'adresses et une lecture dans la mémoire d'états, qui sont déjà très occupées, par des lectures et des écritures, pendant les intervalles de temps d'analyse des lignes. Il consiste à lire dans la mémoire d'attente 6 une valeur $z_t$ qui est le numéro de zone attribué à un point qui est situé deux lignes au-dessus de celle du point courant. Cette valeur $z_t$ est appliquée à l'entrée d'adresses de lecture de la mémoire d'adresses 7 puis une lecture est réalisée dans la mémoire 7 à cette adresse, pour obtenir une valeur $Z_t$ qui est le numéro d'une zone, dite zone testée, qui a absorbé la zone de numéro $Z_t$. Si cette dernière n'a jamais été absorbée $Z_t = z_t$. La valeur $Z_t$ est appliquée à la borne d'entrée 16 du générateur d'adresses et d'états 5 et à l'entrée d'adresses de lecture de la mémoire d'états 8 pour permettre la lecture dans celle-ci de la valeur $E(Z_t)$ des composantes du vecteur d'état de la zone testée. En fonction de ces données, $Z_t$ et $E(Z_t)$, le générateur 5 décide si la zone de numéro $Z_t$ doit être éliminée ou non. Si elle est éliminée le numéro de zone $Z_t$ sera considéré comme un numéro de zone disponible pour une nouvelle utilisation.

Le fonctionnement du dispositif d'extraction et de modélisation des contours a aussi une période correspondant à la période de trames, et concernant plus particulièrement la modélisation des contours. Cette modélisation ne peut avoir lieu qu'après l'extraction de tous les contours d'une trame, puisqu'un contour peut s'étendre sur toute la hauteur d'une trame. La modélisation est réalisée après que tous les points à fort gradient, d'une trame, ont été attribués à des zones, c'est-à-dire pendant l'intervalle de temps séparant les analyses de deux trames successives. Elle consiste d'abord à lire successivement le contenu de chaque adresse de la mémoire d'adresses 7, le générateur 9 de contours modélisés fournissant une suite croissante de valeurs d'adresse $z_m$ sur sa borne de sortie 19 qui est reliée à l'entrée d'adresses de lecture de la mémoire 7. Une lecture à l'adresse $z_m$ dans la mémoire d'adresses 7 fournit ensuite une valeur actuelle de numéro de zone, $Z_m$, désignant une zone qui a absorbé la zone $z_m$, si celle-ci a été absorbée. Sinon, elle fournit une valeur égale à $z_m$. Ainsi la mémoire d'états ne reçoit que des adresses correspondant à des zones existantes.

Une lecture dans la mémoire d'états 8, à cette adresse $Z_m$, fournit la valeur $E(Z_m)$ des composantes du vecteur d'état de la zone de numéro $Z_m$, à la borne d'entrée 20 du générateur 9 de contours modélisés. A partir des données constituées par la valeur des composantes de ce vecteur d'état, le générateur 9 détermine les coordonnées des points d'image constituant un segment modélisant le contour correspondant à la zone de numéro $Z_m$ et il inscrit une valeur 1 dans la mémoire de contours 10 aux adresses correspondant à ces coordonnées. Lorsque plusieurs valeurs d'adresses $z_m$, de la mémoire d'adresses 7, contiennent une même valeur $Z_m$, parce que la zone $Z_m$ a absorbé plusieurs zones, cette tâche de modélisation est répétée inutilement plusieurs fois par le générateur 9, mais cela n'a pas d'autre inconvénient qu'une perte de temps. Comme cela sera décrit par la suite, les numéros des zones absorbées sont considérés comme disponibles et sont attribués dès que possible à de nouvelles zones, par conséquent il reste dans la mémoire d'adresses 7 peu d'adresses correspondant à des zones ayant été absorbées, donc il arrivera peu souvent que le générateur 9 réalise cette tâche de modélisation inutilement.

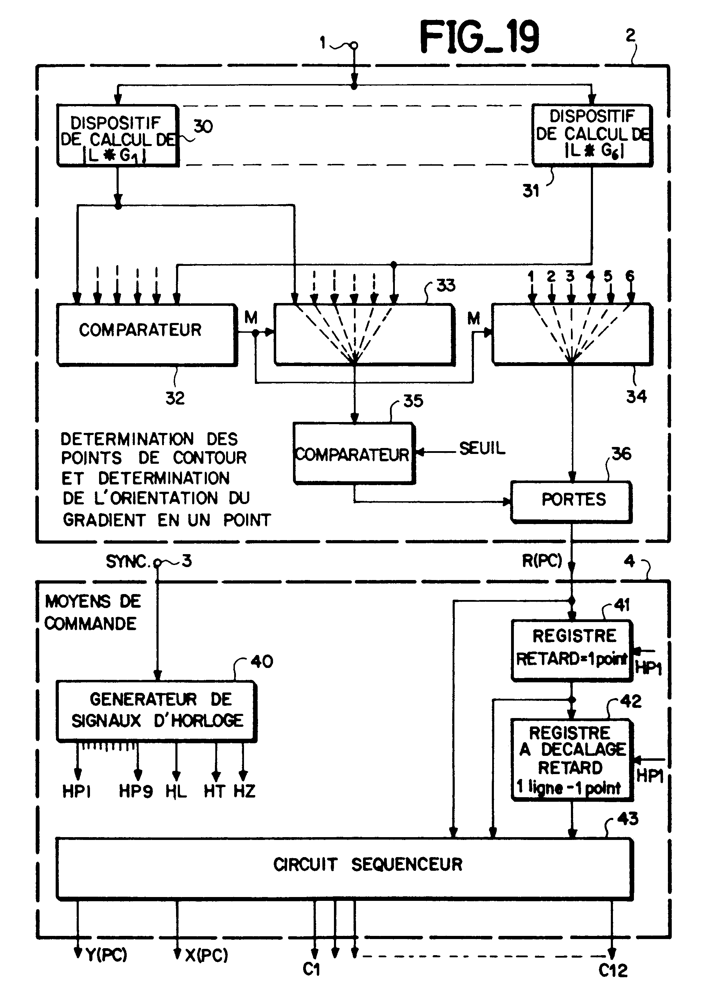

La figure 19 représente un schéma synoptique plus détaillé du dispositif 2 de détermination des points de contour et de détermination de l'orientation du gradient en chaque point, ainsi que des moyens de commande 4. Le dispositif 2 comporte : six dispositifs, 30, ... , 31, de calcul de la valeur absolue des produits de convolution $L * G_1$, ... , $L * G_6$ ; deux comparateurs 32 et 35 ; deux multiplexeurs à six entrées et une sortie, 33 et 34 ; et une porte logique 36. Les dispositifs de calcul 30, ... , 31 ont chacun une entrée reliée à la borne d'entrée 1 pour recevoir la suite des valeurs de luminance, et ont chacun une sortie. Le comparateur 32 et le multiplexeur 33 ont chacun six entrées, chacune de ces entrées étant reliée respectivement à la sortie de l'un des dispositifs de calcul 30, ... , 31.

Le multiplexeur 34 possède six entrées recevant chacune un mot binaire dont la valeur est respectivement : 1, 2, 3, 4, 5, 6. Le comparateur 32 a pour fonction de déterminer la plus grande valeur parmi les six valeurs appliquées à ses entrées et de fournir sur une sortie un mot binaire M indiquant le rang de cette valeur. Ce mot binaire M est appliqué à une entrée de commande des multiplexeurs 33 et 34 pour commander la sélection d'une entrée correspondant à la valeur du mot M. Ainsi le multiplexeur 33 transmet à sa sortie, qui est reliée à une entrée du comparateur 35, la valeur absolue du produit de convolution le plus grand parmi les six valeurs calculées. Simultanément le multiplexeur 34 transmet vers sa sortie, qui est reliée à une entrée de la porte 36, un mot binaire dont la valeur indique quel est le produit de convolution ayant la plus grande valeur absolue et code donc ainsi l'orientation du gradient et l'orientation du contour.

Le comparateur 35 possède une seconde entrée recevant une valeur de seuil qui est égale à 47, dans cet exemple, pour discriminer les gradients de forte valeur et les gradients de faible valeur. Lorsque la valeur absolue du produit de convolution appliquée au comparateur 35 est supérieure à cette valeur de seuil, le comparateur 35 fournit sur une sortie un signal logique qui est appliqué à une entrée de commande de la porte 36. La porte 36 transmet alors le mot binaire que lui fournit le multiplexeur 34, à la sortie du dispositif 2. Dans le cas contraire, c'est-àdire si le gradient de la luminance au point considéré est trop faible, la porte 36 ne transmet pas le mot binaire fourni par le multiplexeur 34 et fournit un mot binaire de valeur nulle. La sortie du dispositif 2 fournit donc un mot binaire R(PC) codant l'orientation du gradient de luminance et du contour au point courant si celui-ci est un point de contour, et prenant une valeur nulle si le point courant n'est pas un point de contour.

La réalisation des dispositifs 30, ... , 31 de calcul de produits de convolution est à la portée de l'homme de l'Art. Chacun peut être constitué de : vingt-cinq registres de 8 bits pour stocker vingt-cinq valeurs de luminance ; vingt-cinq multiplieurs de 8 bits ; un circuit additionneur à vingt-cinq entrées de 8 bits.

Les moyens de commande 4 comportent : un générateur de signaux d'horloge 40 ; deux registres 41 et 42 ; et un circuit séquenceur 43. Le générateur 40 fournit des signaux d'horloge $HP_1$, ... , $HP_7$, HZ au rythme de l'analyse des points, un signal d'horloge HL au rythme de l'analyse des lignes, et un signal d'horloge HT au rythme de l'analyse des trames, qui commandent l'ensemble des éléments du dispositif d'extraction et de modélisation de contours, et en particulier le circuit séquenceur 43 qui a pour rôle de fournir des signaux de commande $C_1$ , ... , $C_{12}$ , et deux mots binaires Y(PC), X(PC) qui sont les coordonnées du point courant dans l'image, les axes de ces coordonnées étant orientés dans le sens de progression de l'analyse de l'image, c'est-à-dire de gauche à droite pour l'axe des X et de haut en bas pour l'axe des Y.

Une entrée des moyens 4 est reliée à une entrée du circuit 43 et à une entrée du registre 41 pour leur fournir la suite de valeurs R(PC). Une entrée de commande de ce registre 41 reçoit le signal d'horloge $HP_1$ et une sortie est reliée à une entrée du circuit séquenceur 43 et à une entrée du registre 42. Le registre 42 a une entrée de commande recevant le signal d'horloge $HP_1$ et une sortie reliée à une entrée du circuit séquenceur 43. Le registre 41 a une capacité d'une valeur lorsque le registre 42 est un registre à décalage ayant une capacité correspondant à une ligne moins un point d'image. Ils ont pour rôle de retarder les valeurs R(PC) d'une durée correspondant à un point et d'une durée correspondant à une ligne respectivement afin de fournir au circuit séquenceur 43 les valeurs codant l'orientation du gradient au point voisin au-dessus et au point à gauche du point courant. En fonction de ces deux valeurs et de celle codant l'orientation du gradient au point courant, le circuit 43 élabore une séquence de signaux $C_1$ , ... , $C_{12}$ pour commander tous les éléments du dispositif d'extraction et de modélisation de contours. Le circuit 43 peut être constitué de compteurs commandés par les signaux d'horloge $HP_1$, ... , $HP_7$, HL, HT, HZ ; de décodeurs ; et de portes logiques. Sa réalisation est à la portée de l'homme de l'Art.

Les signaux d'horloge $HP_1$ , ... , $HP_7$ sont déphasés entre eux de telle sorte qu'ils sont répartis régulièrement sur une durée correspondant à trois points d'image. Ainsi, pendant le traitement du point courant, commence le traitement du point suivant et s'achève le traitement du point précédant le point courant.

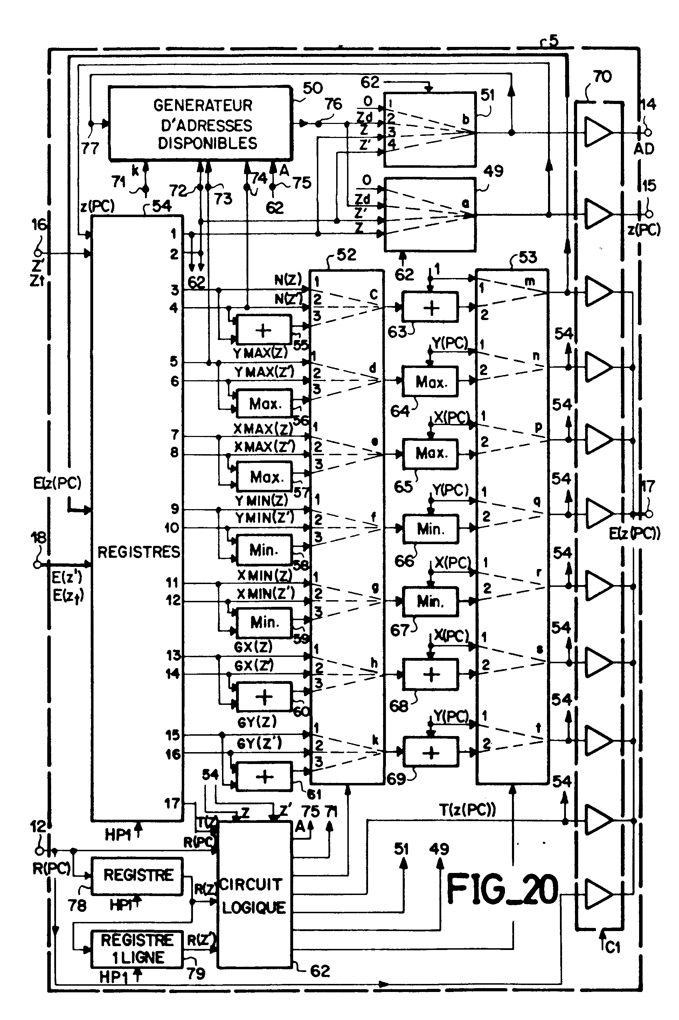

La figure 20 représente le schéma synoptique d'un exemple de réalisation du générateur 5 d'adresses et d'états. Cet exemple de réalisation comporte : un générateur d'adresses disponibles 50 ; deux multiplexeurs 49 et 51 équivalents à un commutateur d'un circuit à quatre positions ; un multiplexeur 52 équivalent à un commutateur de sept circuits à trois positions ; un multiplexeur 53 équivalent à un commutateur de sept circuits à deux positions ; un ensemble de 17 registres 54 ; six additionneurs 55, 60, 61, 63, 68, et 69 ; un registre 78 ayant une capacité d'une valeur ; un registre à décalage 79, ayant une capacité correspondant à une ligne d'image ; un circuit logique 62 ; quatre dispositifs, 56, 57, 64 et 65 de détermination de la valeur maximale parmi deux valeurs ; quatre dispositifs, 64, 65, 66 et 67, de détermination de la valeur minimale parmi deux valeurs ; un ensemble de onze étages tampons, 70, ayant des sorties pouvant prendre trois états dont un état à haute impédance.

Les valeurs AD, z(PC), E(z(PC)), Z, Z′ mentionnées sur la figure 20 sont celles présentes dans le générateur 5 à l'instant où se termine le traitement pour attribuer un numéro de zone au point courant. Il est à noter que certaines de ces valeurs seront réutilisées, mais en changeant d'appellation, pour le traitement du point suivant constituant le prochain point courant.

Les valeurs $Z_t$ et E($Z_t$), qui sont mentionnées aussi sur la figure 20, ne sont pas présentes dans le générateur 5 pendant le traitement pour attribuer un numéro de zone au point courant. Elles n'interviennent que pendant les intervalles de temps entre les analyses de deux lignes consécutives, pour le traitement de filtrage des petites zones et de réutilisation de leurs numéros de zone.

Le générateur 5 possède une borne d'entrée 12 recevant le mot binaire R(PC) et qui est reliée à une entrée du registre 78, à une entrée du circuit logique 62 et à une entrée des étages tampons 70. Il possède aussi une borne d'entrée 18 reliée à une entrée multiple de l'ensemble des registres 54 pour lui fournir la valeur E(Z′) des composantes du vecteur d'état de la zone de numéro Z′ ou bien la valeur E($Z_t$) des composantes du vecteur d'état de la zone de numéro $Z_t$, selon que l'on considère le fonctionnement pendant l'analyse d'une ligne ou selon que l'on considère le fonctionnement pendant l'intervalle entre les analyses de deux lignes. Il possède aussi une borne d'entrée 16 reliée à une entrée de l'ensemble 54 et recevant le numéro de zone Z′ du point au-dessus du point courant pendant l'analyse d'une ligne, ou recevant le numéro $Z_t$ de chaque zone testée, pendant l'intervalle de temps entre les analyses de deux lignes. L'ensemble de registres 54 stocke la valeur du numéro de Z′ et la valeur E(Z′) des composantes du vecteur d'état de la zone Z′, sauf la valeur R(Z′) codant l'orientation du gradient, pendant l'analyse d'une ligne. L'ensemble de registres 54 stocke la valeur du numéro $Z_t$ et la valeur $E(Z_t)$ des composantes du vecteur d'état de la zone $Z_t$, sauf la valeur $R(Z_t)$ codant l'orientation du gradient, pendant l'intervalle entre les analyses de deux lignes.

Une entrée multiple de l'ensemble de registres 54 est reliée aux sept sorties du multiplexeur 53 pour recevoir la valeur $E(z(PC))$ du vecteur d'état de la zone $z(PC)$ à laquelle est attribué le point courant, et est reliée à une sortie du circuit logique 62 fournissant une valeur $T(z(PC))$ constituant le bit indicateur d'absorption de la zone à laquelle est attribué le point courant. La valeur $T(z(PC))$ sera stockée ultérieurement dans l'ensemble 54 pour constituer la valeur $T(Z)$ du bit indicateur d'absorption de la zone du point voisin à gauche pour le prochain point constituant le point courant. La valeur de chaque composante sera stockée ultérieurement dans l'ensemble de registres 54 pour constituer la valeur $E(Z)$ des composantes du vecteur d'état de la zone du point à gauche pour le prochain point constituant le point courant, c'est-à-dire lorsque le point courant actuel sera devenu le point voisin à gauche du prochain point courant.

Une entrée de l'ensemble 54 est reliée à la sortie du multiplexeur 49 pour recevoir la valeur $z(PC)$ du numéro de zone attribué au point courant. Cette valeur sera stockée ultérieurement dans l'ensemble 54 pour constituer la valeur $Z$ du numéro de zone du point à gauche pour le prochain point constituant le point courant. Cependant l'ensemble de registres 54 ne stocke pas la valeur de la composante $R(Z)$, codant l'orientation du gradient dans la zone $Z$.

Le registre 78 a une entrée reliée à la borne d'entrée 12 pour recevoir la valeur $R(PC)$. Il a une capacité d'une valeur et procure un retard correspondant à un point d'image, il fournit donc sur sa sortie la valeur $R(Z)$ codant l'orientation du gradient dans la zone du point à gauche du point courant. Cette sortie est reliée à une entrée du circuit logique 62, à une entrée du registre à décalage 79, et à une entrée de l'ensemble d'étages tampons 70. Le registre 79 a une capacité permettant de retarder les valeurs $R(Z)$ d'un temps correspondant à une ligne d'image, ainsi il fournit sur une sortie une valeur $R(Z')$ qui code l'orientation du gradient dans la zone du point voisin au-dessus du point courant. Cette sortie est reliée à une entrée du circuit logique 62.

La valeur $R(Z')$ est une des composantes du vecteur d'état de la zone de numéro $Z'$, stockée dans la mémoire d'états (8), et qui serait donc disponible en la lisant dans cette mémoire d'états. Cependant l'utilisation d'un registre à décalage 79 permet de l'obtenir plus rapidement qu'une lecture dans la mémoire d'états 8.

Le circuit logique 62 possède six sorties fournissant six mots binaires respectivement à des entrées de commande des multiplexeurs 49, 51, 52, 53 ; à une borne d'entrée 75 et à une borne d'entrée 71 du générateur 50 d'adresses disponibles. Ces mots binaires sont déterminés en fonction des valeurs appliquées aux entrées du circuit logique 62 et qui permettent de distinguer les différents cas énumérés dans la description de la mise en oeuvre du procédé d'extraction des contours.

L'ensemble de registres 54, le registre 78 et le registre 79 possèdent des entrées de commande recevant le signal d'horloge $HP_1$ au rythme de l'analyse des points.

Le multiplexeur 49 possède une sortie notée a et quatre entrées notées 1 à 4 sur la figure 20 et qui seront désignées par 1a, 2a, 3a, 4a, dans la description qui suit.

Le multiplexeur 51 possède une sortie notée b et quatre entrées notées 1 à 4 sur la figure et qui seront désignées par 1b, 2b, 3b, 4b, dans la description qui suit. Le multiplexeur 52 possède sept sorties notées c, d, e, f, g, h, k, chacune de ces sorties pouvant être en communication avec trois entrées notées, 1, 2, 3, sur la figure et désignées par 1c, 2c, 3c, etc... dans la description suivante. Le multiplexeur 53 possède sept sorties notées m, n, p, q, r, s, t, chacune de ces sorties pouvant être mises en communication avec deux entrées notées respectivement 1 et 2, et désignées par 1m, 2m, etc... dans la description suivante. L'ensemble des registres 54 possède 17 sorties numérotées de 1 à 17. Ces sorties fournissent des valeurs de composantes du vecteur d'état de la zone $Z$ et du vecteur d'état de la zone $Z'$, ou du vecteur d'état de la zone $Z_t$, selon que le fonctionnement est considéré pendant l'analyse d'une ligne d'image ou bien pendant l'intervalle de temps séparant les analyses de deux lignes d'image. Pour plus de clarté les valeurs mentionnées sur les sorties de l'ensemble de registres 54 sont uniquement celles présentes pendant l'analyse d'une ligne. Pendant l'intervalle entre les analyses de deux lignes, les valeurs se rapportant à la zone $Z'$ sont à remplacer par les valeurs se rapportant à la zone $Z_t$ et celles se rapportant à la zone $Z$ n'existent pas.

La sortie 1 de l'ensemble 54 est reliée aux entrées 4a et 3b du multiplexeur 49 et du multiplexeur 51, et à une entrée du circuit logique 62, pour leur fournir la valeur $Z$. L'entrée 2 est reliée à une borne d'entrée 72 du générateur 50, aux entrées 3a et 4b du multiplexeur 49 et du multiplexeur 51, et à une entrée du circuit logique 62, pour leur fournir la valeur $Z'$. La sortie 3 est reliée à l'entrée 1c du multiplexeur 52 et à une première entrée de l'additionneur 55 pour leur fournir la valeur $N(Z)$. La sortie 4 est reliée à une borne d'entrée 74 du générateur 50, à l'entrée 2c du multiplexeur 52, et à une seconde entrée de l'additionneur 55, pour leur fournir la valeur $N(Z')$.

La sortie 5 est reliée à la borne d'entrée 73 du générateur 50, à l'entrée 1d du multiplexeur 52, et à une première entrée du dispositif 56, pour leur fournir la valeur $YMAX(Z)$. La sortie 6 est reliée à l'entrée 2d du multiplexeur 52 et à une seconde entrée du dispositif 56, pour leur fournir la valeur $YMAX(Z')$. La sortie 7 est reliée à l'entrée 1e du multiplexeur 52 et à une première entrée du dispositif 57, pour leur fournir la valeur $XMAX(Z)$. La sortie 8 est reliée à l'entrée 2e du multiplexeur 52 et à une première entrée du dispositif 57, pour leur fournir la valeur $XMAX(Z')$.

La sortie 9 est reliée à l'entrée 1f du multiplexeur 52 et à une première entrée du dispositif 58 pour leur fournir la valeur $YMIN(Z)$. La sortie 10 est reliée à l'entrée 2f du multiplexeur 52 et à une seconde entrée du dispositif 58, pour leur fournir la valeur $YMIN(Z')$. La sortie 11 est reliée à l'entrée 1g du multiplexeur 52 et à une première entrée du dispositif 59, pour leur fournir la valeur $XMIN(Z)$. La sortie 12 est reliée à l'entrée 2g du multiplexeur 52 et à une seconde entrée du dispositif 59 pour leur fournir la valeur $XMIN(Z')$. La sortie 13 est reliée à l'entrée 1h du multiplexeur 52 et à une première entrée de l'additionneur 60, pour leur fournir la valeur $GX(Z)$. La sortie 14 est reliée à l'entrée 2h du multiplexeur 52 et à une seconde entrée de l'additionneur 60 pour leur fournir la valeur $GX(Z')$. La sortie 15 est reliée à l'entrée 1k du multiplexeur 52 et à une première entrée de l'additionneur 61, pour leur fournir la valeur $GY(Z)$. La sortie 16 est reliée à l'entrée 2k du multiplexeur 52 et à une seconde entrée de l'additionneur 61 pour leur fournir la valeur $GY(Z')$. La sortie 17 est reliée à une entrée du circuit logique 62 pour lui fournir la valeur $T(Z)$.

Les additionneurs 55, 60, 61 ont des sorties reliées respectivement aux entrées 3c, 3h, 3k, du multiplexeur 52. Les entrées 2a et 2b du multiplexeur 51 sont reliées ensemble à une borne de sortie 76 du générateur d'adresses disponibles 50, pour recevoir une valeur $Z_d$ qui est un numéro de zone disponible. Les sorties a et b des multiplexeurs 49 et 51 sont couplées respectivement aux bornes de sortie 15 et 14 du générateur 5, par l'intermédiaire de deux étages tampons de l'ensemble 70, pour fournir respectivement la valeur $z(PC)$ et la valeur $AD$. La sortie b du multiplexeur 51 est reliée d'autre part à une entrée de l'ensemble de registres 54 correspondant au registre ayant pour sortie la sortie 1 et destinée à stocker la valeur $Z$. La sortie a du multiplexeur 49 est reliée d'autre part à une borne d'entrée 77 du générateur 50.

Les sorties c, d, e, f, g, h, k, du multiplexeur 52 sont reliées respectivement à des premières entrées de l'additionneur 63, du dispositif 64, du dispositif 65, du dispositif 66, du dispositif 67, de l'additionneur 68 et de l'additionneur 69. Les entrées 2m, 2n, 2p, 2q, 2r, 2s, 2t, du multiplexeur 53 sont reliées respectivement à des sorties de l'additionneur 63, du dispositif 64, du dispositif 65, du dispositif 66, du dispositif 67, de l'additionneur 68 et de l'additionneur 69. L'entrée 1m du multiplexeur 53 et une seconde entrée de l'additionneur 63 reçoivent une valeur 1 permanente. L'entrée 1n, l'entrée 1q, et l'entrée 1t, du multiplexeur 53, et des secondes entrées des dispositifs 64, 66, et 69, sont reliées, par une liaison non représentée, à une sortie des moyens de commande 4 fournissant la valeur $Y(PC)$. Les entrées 1p, 1r, 1s, du multiplexeur 53, et des secondes entrées des dispositifs 65 et 67 et de l'additionneur 68, sont reliées, par une liaison non représentée, à une sortie des moyens de commande 4 pour recevoir la valeur $X(PC)$.

Les sorties m, n, p, q, r, s, t, du multiplexeur 53 sont couplées à la borne de sortie 17 du générateur 5 par l'intermédiaire de sept étages tampons respectivement, appartenant à l'ensemble 70, et sont reliées à la seconde entrée multiple de l'ensemble de registres 54. La borne d'entrée 12 est couplée, elle aussi, à la borne de sortie 17 par un étage tampon de l'ensemble 70. L'ensemble des valeurs fournies par le registre 78 et les sorties du multiplexeur 53 constituent la valeur $E(z(PC))$ des composantes du vecteur d'état de la zone du point courant. L'ensemble 70 des étages tampons est commandé par un signal de commande $C_1$ fourni par les moyens de commande 4. En l'absence de ce signal les sorties des étages tampons présentent une haute impédance.

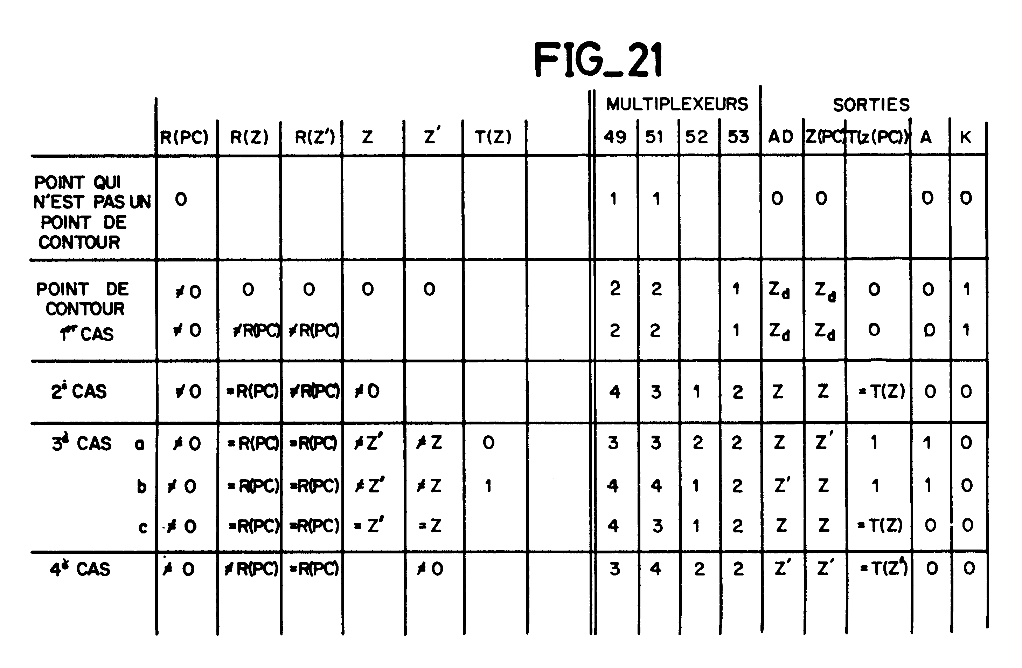

Pendant la durée de l'analyse d'une ligne, pour chaque point de cette ligne, le fonctionnement du générateur 5 d'adresses et d'états est le suivant. Les sorties de l'ensemble de registres 54 fournissent les numéros de zones $Z$ et $Z'$ du point voisin à gauche et du point voisin au-dessus du point courant, et les valeurs des composantes des vecteurs d'état des zones $Z$ et $Z'$ auxquelles appartiennent ces deux points voisins à l'exception des composantes $R(z)$ et $R(z')$. D'autre part, les registres 78 et 79 fournissent les valeurs $R(Z)$ et $R(Z')$ codant l'orientation du gradient de luminance en ces deux points voisins du point courant. Le circuit logique 62 reçoit les valeurs $Z$, $Z'$, $T(Z)$, $R(PC)$, $R(Z)$, $R(Z')$ et en déduit les signaux de commande à appliquer au générateur d'adresses disponibles 50 et aux multiplexeurs 49, 51, 52, 53, conformément aux règles logiques mentionnées précédemment dans la description de la mise en oeuvre du procédé, en distinguant principalement quatre cas. La réalisation d'un circuit logique 62 appliquant ces règles est à la portée de l'homme de l'art. Les signaux de commande fournis par ce circuit logique 62 réalisent à l'intérieur des multiplexeurs 49, 51, 52, 53 les liaisons représentées dans le tableau de la figure 21, en fonction des diverses valeurs d'entrée. Par exemple, un chiffre 3 placé dans la colonne "multiplexeur 52" signifie que le multiplexeur 52 réalise les liaisons 3-c, 3-d, 3-e, ... , 3-k. Les blancs indiquent une valeur indifférente.

Les valeurs fournies par la borne de sortie 17 du générateur 5 sont les valeurs données par les formules (1) à (5) mentionnées dans la description de la mise en oeuvre du procédé. Les valeurs dites actualisées et notées avec l'indice "a" dans ces formules sont les valeurs fournies par la borne de sortie 17. Les valeurs dites précédentes et notées avec l'indice "p" dans ces formules sont les valeurs fournies par les sorties 1 à 17 de l'ensemble des registres 54. Sur la figure 20, les indices "p" sont omis pour simplifier les notations. Par exemple : la valeur $MAX_a(Z') = maximum(YMAX_p(Z), Y(PC), YMAX_p(Z'))$ est calculée par les dispositifs 56 et 64 de détermination d'une valeur maximale parmi deux valeurs, opérant en cascade. Le dispositif 56 transmet la valeur la plus grande parmi $YMAX_p(Z)$ et $YMAX_p(Z')$. Cette valeur maximale est transmise ensuite par le multiplexeur 52 au dispositif 64. Le dispositif 64 transmet la valeur la plus grande parmi celle déterminée par le dispositif 56 et la valeur Y(PC).

Pendant l'analyse de chaque ligne, le rôle du générateur d'adresses disponibles 50 est de fournir la valeur $Z_d$ d'une adresse qui est disponible dans la mémoire d'états 8 au moment où une zone nouvelle est créée, c'est-à-dire quand le générateur 50 reçoit un signal logique K fourni par le circuit 62 à la borne d'entrée 71 du générateur 50. Il a aussi pour fonction de détecter les zones qui sont terminées et qui ont un nombre de points inférieur à une valeur de seuil, afin de réutiliser la valeur d'adresses qui constitue ce numéro de zone. Il doit aussi, dès que possible, réutiliser le numéro d'une zone qui disparaît par fusion dans une autre. Le circuit logique 62 fournit un signal logique A à sa borne d'entrée 75 pour indiquer qu'il y a absorption d'une zone. Le générateur 50 peut réutiliser la zone dont le numéro est constitué par la valeur AD qui est appliquée à sa borne d'entrée 77, après un délai correspondant à 3 lignes.

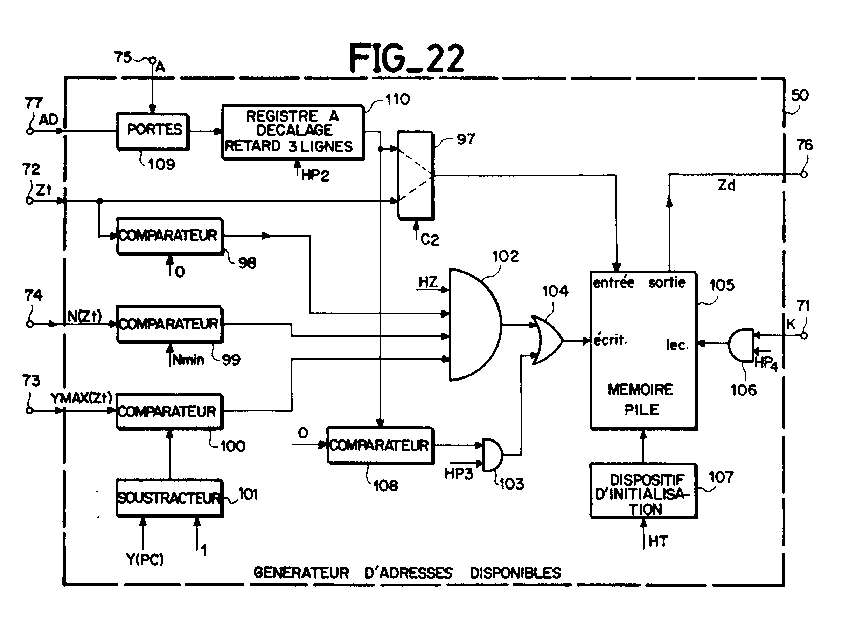

La figure 22 représente le schéma synoptique d'un exemple de réalisation du générateur d'adresses disponibles 50. Cet exemple de réalisation comporte : un multiplexeur 97, à deux entrées et une sortie ; quatre comparateurs, 98, 99, 100, 108 ; un soustracteur 101 ; une porte logique ET à quatre entrée, 102 ; une porte logique ET à deux entrées, 103 ; une porte logique OU à deux entrées, 104 ; une mémoire pile 105 ; une porte logique ET, 106 ; un ensemble de portes logiques 109 ; un registre à décalage 110 ; et un dispositif d'initialisation 107.

L'ensemble de portes logiques 109 a une entrée reliée à la borne d'entrée 77 pour recevoir un mot binaire constituant la valeur d'adresse AD qui est le numéro d'une zone absorbée, ou le numéro d'une zone nouvelle, ou une valeur nulle. L'ensemble 109 possède une entrée de commande reliée à la borne d'entrée 75 pour recevoir le signal A indiquant qu'une zone est absorbée, c'est-à-dire que la valeur AD est un numéro de zone absorbée et qu'il pourra donc être réutilisé. L'ensemble de portes 109 est alors validé, il transmet la valeur AD à une sortie qui est reliée à une entrée du registre à décalage 110. S'il n'est pas validé il fournit une valeur nulle.

Le registre à décalage 110 est commandé par le signal d'horloge $HP_2$, au rythme d'analyse des points. Il retarde les numéros des zones absorbées d'une durée correspondant à trois lignes d'image pour que ces numéros ne soient pas réutilisés tant qu'ils peuvent être utiles pour déterminer les numéros de zone actuels des points au-dessus de la ligne du point courant, en vue de la détermination de la zone à laquelle le point courant est attribué, et surtout pour déterminer les numéros de zone actuels des points situés sur la deuxième ligne au-dessus de la ligne du point courant, en vue du filtrage des petites zones et de la réutilisation de leurs numéros.

La sortie du registre 110 est reliée à une première entrée du multiplexeur 97 et à une première entrée du comparateur 108. Une seconde entrée du comparateur 108 reçoit une valeur 0 permanente. Une sortie du comparateur 108 est reliée à une première entrée de la porte ET 103, pour que celle-ci soit validée lorsque le numéro de zone retardé et restitué par le registre 110 est différent de 0.

Une seconde entrée de la porte ET 103 reçoit un signal d'horloge $HP_3$ au rythme de l'analyse des points. Une sortie de la porte 103 est reliée à une première entrée de la porte OU 104. Une sortie de la porte OU 104 est reliée à une entrée de commande d'écriture de la mémoire pile 105. Une sortie du multiplexeur 97 est reliée à une entrée de données de la mémoire pile 105. Il possède une seconde entrée reliée à la borne d'entrée 72, et une entrée de commande recevant le signal de commande $C_2$ pendant la durée d'analyse de chaque ligne d'image. Il transmet alors les numéros de zones absorbées fournis par le registre 110. Puis ceux-ci sont inscrits dans la mémoire pile 105, sous l'action du signal d'horloge $HP_3$, à condition qu'ils ne soient pas nuls.

Le multiplexeur 97 possède une seconde entrée reliée à la borne d'entrée 72 pour recevoir et transmettre une suite de valeurs $Z_t$, constituant les numéros des zones testées, pendant les intervalles de temps entre les analyses de deux lignes sucessives. La valeur $N(Z_t)$ du nombre de points de la zone testée et la valeur $YMAX(Z_t)$ de l'ordonnée maximale des points de la zone testée sont appliquées respectivement aux bornes d'entrée 74 et 73 par les sorties 4 et 5 de l'ensemble de registres 54. Ces valeurs ont été lues dans la mémoire d'états 8 à l'adresse $Z_t$. Ce sont donc des valeurs actualisées qui tiennent compte des points attribués à des zones au cours du traitement des points de la ligne d'ordonnée Y(PC) - 1.

La sortie de la porte ET 102 est reliée à une seconde entrée de la porte OU 104. La porte logique ET 102 a quatre entrées reliées respectivement à une sortie du comparateur 98, à une sortie du comparateur 99, à une sortie du comparateur 100 et à une sortie, non représentée, des moyens de commande 4 pour recevoir le signal d'horloge HZ qui n'existe que pendant les intervalles de temps entre les analyses de lignes.

Les comparateurs 98, 99, et 100 permettent de vérifier que la zone $Z_t$ remplit trois conditions :

- Le comparateur 98 a une première entrée reliée à la borne d'entrée 72 et une seconde entrée recevant la valeur 0, pour détecter si la zone testée est la zone de numéro 0, à laquelle est attribué tous les points qui ne sont pas des points de contour. Dans ce cas, la porte 102 ne doit pas être validée car le numéro 0 n'est pas un numéro disponible pour les zones de points de contour.
- Le comparateur 99 a pour fonction de comparer la valeur $N(Z_t)$,du nombre de points dans la zone testée, à une valeur de seuil $N_{min}$, par exemple égale à 5 points, et qui est réglable par l'utilisateur du dispositif en fonction de l'effet de filtrage qu'il souhaite obtenir. Lorsque la zone de numéro $Z_t$ a un nombre de points supérieur à la valeur de seuil, le comparateur 99 fournit un signal logique de valeur 0, la porte 102 n'est donc pas validée. Ainsi les numéros des zones ayant une taille suffisamment grande ne sont pas réutilisés. Au contraire les numéros des zones ayant une taille inférieure ou égale à 5 points peuvent être réutilisés.
- Le comparateur 100 a pour rôle de comparer la valeur $YMAX(Z_t)$ de l'ordonnée maximale des points de la zone de numéro $Z_t$ à la valeur Y(PC) - 1 qui est fournie par la sortie du soustracteur 101. Lorsque l'ordonnée maximale de la zone de numéro $Z_t$ est strictement supérieure à l'ordonnée Y(PC) - 1 de la ligne au-dessus de la ligne du point courant, il est possible de conclure que la zone de numéro $Z_t$ est terminée, c'est-à-dire qu'aucun autre point ne lui sera attribué. Dans le cas contraire, le comparateur 100 fournit un signal logique de valeur 0 et la porte 102 n'est pas validée. Le soustracteur 101 reçoit sur une première entrée la valeur Y(PC) fournie par les moyens de commande 4 et reçoit sur une seconde entrée une valeur 1 qui est la valeur à soustraire à Y(PC).

La porte ET 102 est donc validée lorsque simultanément la zone de numéro $Z_t$ est terminée et a un nombre de points supérieur à 0 et inférieur ou égal à $N_{min}$. La porte 102 transmet alors le signal d'horloge HZ à la porte OU 104 qui l'applique à l'entrée de commande d'écriture de la mémoire pile 105.

Dans cet exemple, le signal d'horloge HZ appliqué à la porte 102 est un signal ayant le même rythme que celui de l'analyse des points, mais ce n'est pas indispensable. Ce signal d'horloge peut avoir un rythme différent du rythme d'analyse des points d'image puisque le traitement de filtrage des petites zones et de récupération de leurs numéros de zone est réalisé pendant l'intervalle de temps entre les analyses de deux lignes successives, c'est-à-dire pendant l'intervalle de temps où il n'y a pas de point à attribuer à une zone.

La porte 106 possède une première entrée reliée à la borne d'entrée 71 recevant le signal logique K, une seconde entrée recevant un signal d'horloge $HP_4$ dont le rythme est égal à celui de l'analyse des points, et une sortie reliée à une entrée de commande de lecture de la mémoire pile 105. Une sortie de données de la mémoire pile 105 est reliée à la borne de sortie 76. Lorsque le générateur 5 fournit le signal logique K, de valeur 1, indiquant qu'il y a création d'une nouvelle zone, la porte ET 106 est validée. Elle transmet le signal d'horloge $HP_4$ à l'entrée de commande de lecture de la mémoire pile 105 et cette dernière fournit la valeur $Z_d$ d'une adresse disponible dans la mémoire d'états et pouvant donc constituer le numéro d'une zone nouvelle.

La mémoire pile 105 possède une entrée multiple commandant son initialisation et reliée à une sortie du dispositif d'initialisation 107. Le dispositif 107 possède une entrée de commande recevant un signal d'horloge à la fréquence de trame HT. Le dispositif 107 a pour fonction de charger la mémoire pile 105 au moyen d'une suite de valeurs constituée par l'ensemble des adresses de la mémoire d'états 8. La réalisation de ce dispositif 107 est à la portée de l'homme de l'art, il peut comporter un dispositif de comptage pour générer une suite d'adresses et un générateur de signaux d'horloge pour actionner ce dispositif de comptage et pour commander l'écriture de la suite d'adresses dans la mémoire pile 105. Les numéros de zone à réutiliser sont inscrits au sommet de la pile des adresses disponibles et le dernier inscrit est lu en premier. Par conséquent, les numéros à réutiliser sont réutilisés en priorité par rapport aux numéros qui n'ont encore jamais été utilisés.

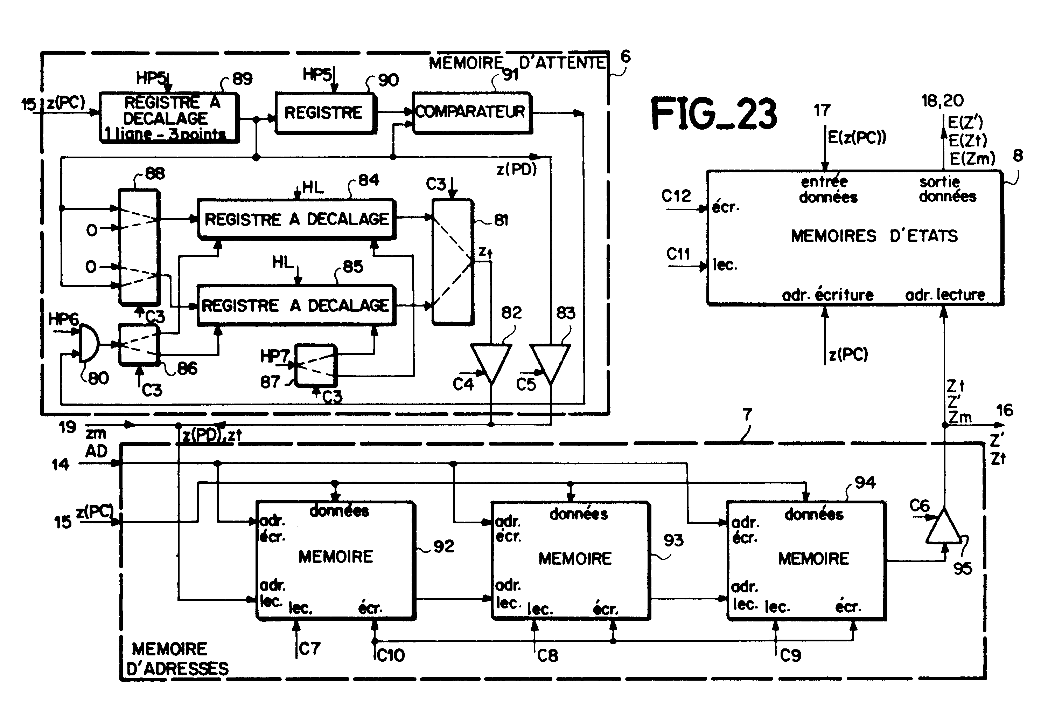

La figure 23 représente un schéma synoptique plus détaillé de la mémoire d'attente 6, de la mémoire d'adresses 7, et de la mémoire d'états 8.

La mémoire d'attente 6 a deux fonctions : une première fonction consiste à stocker les valeurs z(PC) des numéros de zone attribués provisoirement aux points d'une image et les restituer avec un retard correspondant à une ligne moins trois points pour constituer les valeurs z(PD) du numéro de zone attribué provisoirement au point voisin du point courant sur la ligne au-dessus, cette valeur z(PD) étant utilisée ensuite comme adresse de lecture dans la mémoire d'adresses 7 pour y lire la valeur actuelle Z′ du numéro de zone du point voisin au-dessus du point courant. Le retard procuré par la mémoire d'attente 6 ne correspond pas à une ligne entière car il faut tenir compte du fait que la lecture d'une valeur actualisée dans la mémoire d'adresses 6 a une durée correspondant à trois points d'image.

Une seconde fonction de la mémoire d'attente 6 consiste à fournir des numéros $Z_t$ de zone à tester, au générateur 50 d'adresses disponibles, pour permettre de déterminer les zones à filtrer et de réutiliser leurs numéros. Pour cela la mémoire d'attente 6 stocke pendant un certain temps les valeurs z(PC) des numéros de zone attribués provisoirement aux points d'image lorsqu'ils constituent le point courant, puis les restitue au générateur 50 d'adresses disponibles sous la forme des valeurs notées $z_t$. La durée de stockage est telle qu'elle permet de détecter si une zone est terminée ou non. D'autre part, la partie de la mémoire d'attente 6 dédiée à ce stockage des numéros de zone à tester réalise une suppression de certaines valeurs $z_t$ redondantes. Elle ne stocke pas une valeur de numéro de zone z(PC) pour chaque point d'image car la durée entre les analyses de deux lignes successives est beaucoup plus courte que la durée d'analyse d'une ligne et ne permet donc pas de réaliser une lecture dans la mémoire d'états pour chaque point de chaque ligne.

Les contours ayant une certaine épaisseur et les autres portions d'image ayant aussi une certaine épaisseur, il est très fréquent qu'une succession de points sur une même ligne ait le même numéro de zone z(PC). Il est donc possible d'alléger le travail consistant à tester ces zones en ne réalisant le test qu'une seule fois lorsqu'une suite de points a été attribuée à une même zone. Pour cela, la mémoire d'attente 6 comporte des moyens permettant de détecter, dans la suite des valeurs z(PC), des valeurs successives identiques afin de ne stocker qu'une seule valeur. La détermination des zones à filtrer et la réutilisation de leurs numéros de zone, pour les points d'une ligne est réalisée après un certain délai tel que le traitement d'attribution des numéros de zone est terminé pour tous les points de la seconde ligne qui suit la ligne considérée pour ce test. Autrement dit ce test est réalisé pour les zones des points de la ligne d'ordonnée Y(PC) - 2 lorsque l'attribution des numéros de zone est terminée pour les points de la ligne d'ordonnée Y(PC).

La mémoire d'attente 6 comporte trois registres à décalage 84, 85, 89 ; un registre 90 ; un comparateur 91 ; un multiplexeur 88, à quatre entrées et deux sorties ; deux démultiplexeurs à une entrée et deux sorties, 86 et 87 ; un multiplexeur 81, à deux entrées et une sortie ; une porte logique ET 80 ; et deux étages tampons, 82 et 83.

Le registre à décalage 89 possède une entrée série constituant l'entrée de données de la mémoire d'attente 6 et qui est reliée à la borne de sortie 15 du générateur 5 d'adresses et d'états pour recevoir la valeur z(PC) du numéro de zone attribué au point courant. Il est commandé par un signal d'horloge $HP_5$, au rythme de l'analyse des points d'image. Il possède une sortie reliée à une entrée du registre 90. Le registre 90 a une capacité d'une valeur et il est commandé par le signal d'horloge $HP_5$. Le comparateur 91 possède une première entrée reliée à une sortie du registre 90 et une seconde entrée reliée à la sortie du registre à décalage 89. Une sortie du comparateur 91 est reliée à une première entrée de la porte ET 80. Le registre 89 a pour rôle de retarder les valeurs des numéros de zone attribués aux points successifs, d'une durée correspondant à une ligne moins trois points.

Le registre 90 et le comparateur 91 ont pour rôle de comparer deux valeurs successives de cette suite de numéros de zone afin de valider la porte ET 80 seulement lorsque la valeur de numéro de zone fourni par la sortie du registre 89 est différente de celle fournie par la sortie du registre 90 ; autrement dit, la porte ET 80 est bloquée lorsque des points consécutifs ont une même valeur de numéro de zone. Une seconde entrée de la porte ET reçoit un signal d'horloge $HP_6$ au rythme d'analyse des points, destiné à commander l'écriture des numéros de zone dans les registres à décalage 84 ou 85 alternativement. La porte ET 80 bloque donc la transmission de ce signal d'horloge lorsque des points consécutifs ont un même numéro de zone pour que cette valeur de numéro ne soit stockée qu'une fois. Ceci permet d'éviter de fournir des suites de valeurs $z_t$ identiques au générateur 50 d'adresses disponibles qui ne dispose que d'un temps très limité pour tester ces zones.

Le multiplexeur 88 est équivalent à un commutateur de deux circuits à deux positions. Une première sortie est reliée à une entrée de données série du registre à décalage 84 et une seconde sortie est reliée à une entrée de données série du registre à décalage 85. La première sortie peut être mise en communication soit avec une première entrée reliée à la sortie du registre 89, soit à une seconde entrée recevant une valeur 0 permanente. La seconde sortie peut être mise en communication soit avec une troisième entrée recevant une valeur 0 permanente, soit avec une quatrième entrée reliée à la sortie du registre 89. Le multiplexeur 88 est commandé par un signal de commande $C_3$ fourni par les moyens de commande 4.

Ce signal de commande $C_3$ a une valeur binaire qui change alternativement à chaque ligne d'image, de telle sorte que l'un des deux registres, 84 ou 85, est utilisé en écriture, pour écrire les valeurs fournies par la sortie du registre 89, pendant que l'autre registre est utilisé en lecture. Pendant que l'un des registres 84, 85 est utilisé en lecture, son entrée de données reçoit une valeur 0 pour inscrire des valeurs 0 à une extrémité de ce registre pendant que les valeurs contenues dans ce registre sont extraites à l'autre extrémité. Les registres 84 et 85 possèdent chacun une sortie de données série reliée respectivement à une première et une seconde entrée du multiplexeur 81. Le multiplexeur 81 possède une sortie qui peut être mise en communication soit avec la première entrée, soit avec la seconde entrée, sous l'action du signal de commande $C_3$. Ainsi le registre 84 ou 85 qui est en cours de lecture transmet son contenu par le multiplexeur 81 jusqu'à l'entrée de l'étage tampon 82.

Les registres 84 et 85 possèdent chacun une entrée d'horloge d'écriture et une entrée d'horloge de lecture. Leurs entrées d'horloge d'écriture sont reliées respectivement à une première et à une seconde sortie du démultiplexeur 86 qui reçoit sur une entrée le signal d'horloge $HP_6$ fourni par la sortie de la porte 80 lorsqu'elle est validée. Le démultiplexeur 86 possède une entrée de commande recevant le signal de commande $C_3$ afin de transmettre un signal d'horloge d'écriture alternativement au registre à décalage 84 et au registre à décalage 85. Les entrées d'horloge $HP_7$ de lecture des registres 84 et 85 sont reliées respectivement à une première et une seconde sortie du démultiplexeur 87 qui reçoit sur une entrée le signal d'horloge $HP_7$. Une entrée de commande du démultiplexeur 87 reçoit le signal de commande $C_3$. Il transmet donc un signal d'horloge de lecture alternativement au registre 84 et au registre 85, au rythme de l'analyse des lignes. Quand l'un de ces registres est vide, il restitue des valeurs nulles. Le rythme du signal d'horloge $HP_7$ est, par exemple, égal au rythme d'analyse des points, mais ce n'est pas obligatoire puisque la détermination des zones à filtrer est indépendante de l'analyse des points. Les registres 84 et 85 ont chacun une entrée de remise à zéro, recevant le signal d'horloge HT pour réinitialiser leur contenu à zéro, au début de chaque trame d'image.

Une entrée de l'étage tampon 83 est reliée à la sortie du registre à décalage 89. L'étage tampon 82 et l'étage tampon 83 ont chacun une sortie reliée à l'entrée de données de la mémoire d'adresses 6. Ces étages tampons sont commandés respectivement par des signaux de commande $C_4$ et $C_5$ fournis par les moyens de commande 4. En présence d'un signal de commande $C_4$, l'étage tampon 82 transmet une valeur $z_t$ à l'entrée d'adresse de lecture de la mémoire d'attente 6 pour y lire une valeur $Z_t$. En l'absence du signal $C_4$, la sortie de l'étage tampon 82 a une haute impédance. En présence d'un signal de commande $C_5$, l'étage tampon 83 transmet à l'entrée d'adresse de lecture de la mémoire d'attente 6 la valeur $z(PD)$ du numéro de zone du point au-dessus du point courant, pour y lire la valeur $Z'$. En l'absence du signal $C_5$, la sortie de l'étage tampon 83 a une haute impédance. Le signal $C_4$ est fourni pendant la durée d'analyse de chaque ligne alors que le signal $C_5$ est fourni pendant l'intervalle de temps entre les analyses de deux lignes consécutives.

La mémoire d'adresses 7 comporte : trois mémoires vives identiques, 92, 93, 94, à accès aléatoire ; et un étage tampon 95. Les mémoires 92, 93, 94 ont des entrées de données reliées en parallèle, qui constituent l'entrée de données de la mémoire d'adresses 7 et qui sont reliées à la borne de sortie 15 du générateur 5 d'adresses et d'états pour recevoir une suite de valeurs $z(PC)$. Ces mémoires 92, 93, 94 ont des entrées d'adresses d'écriture reliées en parallèle, qui constituent l'entrée d'adresse d'écriture de la mémoire d'adresses 7 et qui sont reliées à la borne de sortie 14 du générateur 5 d'adresses et d'états pour recevoir l'adresse AD. Les mémoires 92, 93, 94 ont des entrées de commande de lecture reliées par des liaisons non représentées à des sorties des moyens de commande 4 pour recevoir respectivement des signaux d'horloge de commande $C_7$, $C_8$, $C_9$. Elles ont des entrées de commande d'écriture reliées en parallèle qui constituent l'entrée de commande d'écriture de la mémoire d'adresses 7, et qui sont reliées à une sortie des moyens de commande 4 pour recevoir un signal de commande $C_{10}$.

La mémoire 92 possède une entrée d'adresses de lecture qui constitue l'entrée d'adresses de lecture de la mémoire d'adresses 7 et qui est donc reliée aux deux sorties de la mémoire d'attente 6 et à la borne de sortie 19 du générateur 9 de contours modélisés. La mémoire 92 possède une sortie de données reliée à l'entrée d'adresses de lecture de la mémoire 93. La mémoire 93 possède une sortie de données reliée à une entrée d'adresses de lecture de la mémoire 94. La mémoire 94 possède une sortie de données reliée à une entrée de l'étage tampon 95. L'étage tampon 95 possède une entrée de commande recevant le signal de commande $C_6$ fourni par les moyens de commande 4. La sortie de l'étage tampon 95 constitue la sortie de données de la mémoire d'adresses 7 et est reliée à l'entrée d'adresses de lecture de la mémoire d'états 8 et à la borne d'entrée 16 du générateur 5 d'adresses et d'états.

La fonction de la mémoire d'adresses 7 est de faire correspondre une première et une seconde valeur de numéro de zone d'un même point afin de tenir compte de l'absorption d'une première zone, désignée par la première valeur, par une deuxième zone désignée par la seconde valeur. Cette fonction est utilisée au cours de trois étapes du procédé d'extraction et de modélisation des contours : tout d'abord pour déterminer la valeur actualisée $Z'$ du numéro de zone du point au-dessus du point courant ; puis pour déterminer la valeur actualisée $Z_t$ correspondant à la valeur actualisée du numéro de zone d'un point situé deux lignes au-dessus de la ligne du point courant, afin de tester cette zone pour déterminer si cette zone doit être filtrée ou non ; et enfin la mémoire d'adresses 7 doit faire correspondre une valeur actualisée $Z_m$ à une valeur de numéro de zone $z_m$, afin de réaliser la modélisation de chaque zone qui existe encore lorsque tous les points d'une trame ont été attribués à une zone.

Chaque valeur $z(PC)$ à incrire dans la mémoire d'adresses 7 est inscrite à l'adresse AD simultanément et identiquement dans chacune des mémoires 92, 93, 94 car $z(PC)$ est appliquée simultanément sur les trois entrées de données de ces mémoires et le signal $C_{10}$ est appliqué simultanément aux trois entrées de commande d'écriture. La lecture de chaque donnée $Z'$, $Z_t$, ou $Z_m$, sortant de la sortie de données de la mémoire d'adresses 7, est réalisée en trois étapes. Dans une première étape une valeur de numéro de zone : $z(PD)$, ou $z_t$ ou $z_m$, est appliquée à l'entrée d'adresses de lecture de la mémoire 92, puis le signal $C_7$ est appliqué à l'entrée de commande de lecture de cette mémoire 92 pour obtenir une première valeur qui est utilisée comme adresse de lecture dans la seconde mémoire 93.

Dans une seconde étape, le signal $C_8$ provoque une lecture à cette adresse dans la mémoire 93. La valeur ainsi lue dans la mémoire 93 constitue une adresse de lecture pour lire dans la mémoire 94. Dans une troisième étape, le signal $C_9$ provoque une lecture à cette adresse dans la mémoire 94. La valeur lue ainsi est transmise à la sortie de données de la mémoire d'adresses 7 lorsque l'étage tampon 95 est validé par le signal de commande $C_6$. Quand il n'est pas validé par le signal $C_6$ l'étage tampon 95 a une impédance élevée en sortie.

La mémoire d'états 8 est constituée par une mémoire vive à accès aléatoire possédant une entrée d'adresses de lecture reliée à la sortie de données de la mémoire d'adresses 7, une entrée d'adresses d'écriture reliée à la borne de sortie 15 du générateur 5 d'adresses et d'états, une entrée de données reliée à la borne de sortie 17 du générateur 5 d'adresses et d'états, une sortie de données reliée à la borne d'entrée 18 du générateur 5 et à la borne d'entrée 20 du générateur 9 de contours modélisés, une entrée de commande de lecture et une entrée de commande d'écriture recevant respectivement un signal de commande $C_{11}$ et un signal de commande $C_{12}$ fournis par les moyens de commande 4.

La mémoire d'états 8 est utilisée en écriture pour stocker à l'adresse $z(PC)$ la valeur actualisée $E(z(PC))$ des composantes du vecteur d'état de la zone à laquelle est attribué le point courant. Elle est utilisée en lecture, pour lire à l'adresse $Z'$ la valeur $E(Z')$ des composantes du vecteur d'état de la zone du point au-dessus du point courant, au moment de déterminer à quelles zones le point courant va être attribué ; pour lire à l'adresse $Z_t$ la valeur $E(Z_t)$ du vecteur d'état d'une zone au moment de tester cette zone ; pour lire à l'adresse $Z_m$ la valeur $E(Z_m)$ des composantes du vecteur d'état d'une zone, au moment de modéliser cette zone.

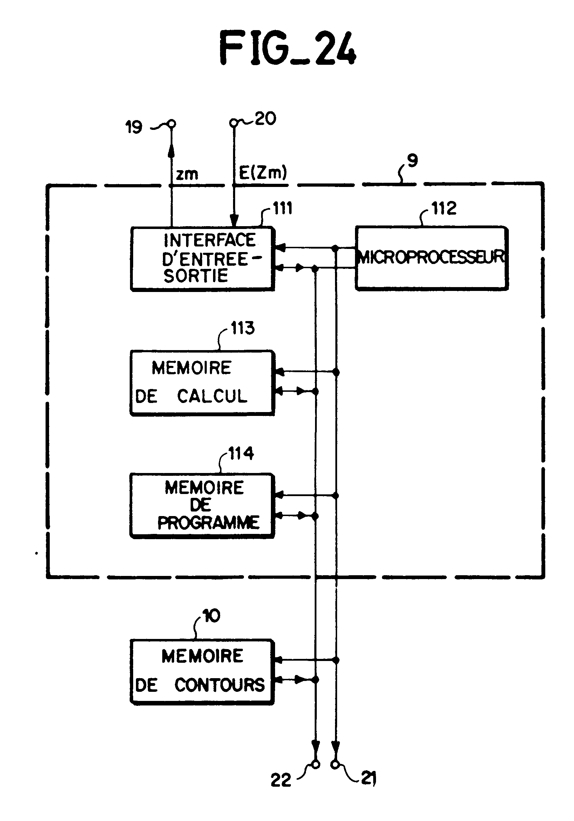

La figure 24 représente le schéma synoptique d'un exemple de réalisation du générateur 9 de contours modélisés et de la mémoire de contours 10. Le générateur 9, dans cet exemple, comporte : un microprocesseur 112 ; une interface d'entrée-sortie 111 ; une mémoire de calcul 113 ; une mémoire de programme 114. Le microprocesseur 112 est relié à des entrées d'adresses et à des entrées-sorties de données de l'interface 111, de la mémoire 113, et de la mémoire 114. D'autre part, il est relié à une entrée d'adresses et à une entrée-sortie de données de la mémoire de contours 10. Cette entrée d'adresses et cette entrée-sortie de données de la mémoire 10 sont reliées aussi à une borne d'entrée d'adresses 21, à une borne de sortie de données 22 permettant à un dispositif extérieur de lire les données contenues dans la mémoire de contours 10 afin d'exploiter les contours extraits et modélisés par le dispositif. Le générateur 9 possède une borne d'entrée 20 et une borne de sortie 19 reliées respectivement à une entrée et à une sortie de l'interface 111.

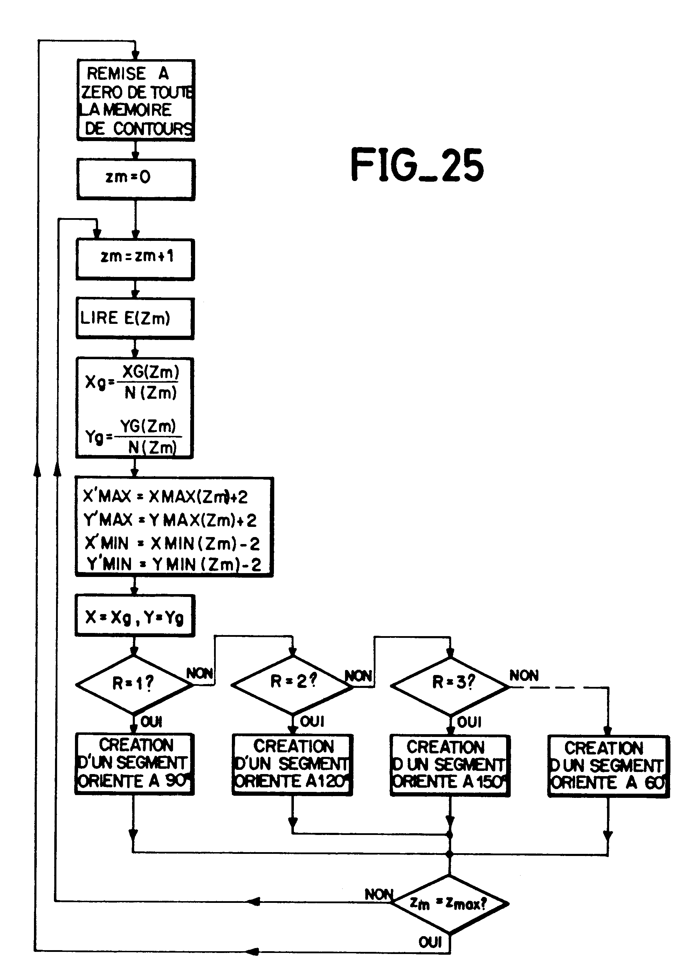

La figure 25 représente un organigramme du programme mis en oeuvre par le microprocesseur 112 et stocké dans la mémoire de programme 114 pour créer les segments modélisant les contours dans une trame d'une image, pendant l'intervalle de temps séparant deux trames successives. Au début de cet intervalle, le microprocesseur 112 commande tout d'abord une remise à zéro de tout le contenu de la mémoire de contours 10, l'inscription des contours se faisant ultérieurement par l'inscription de 1 uniquement aux adresses correspondant à des points de contour. Un registre du microprocesseur 112 est utilisé pour stocker la valeur $z_m$ d'une adresse de la mémoire d'adresses 7. La valeur $z_m$ est initialisée à zéro, puis est incrémentée d'une unité, puis est fournie à la borne de sortie 19, pour lire dans la mémoire d'adresses 7 à l'adresse $z_m$. Si la zone de numéro $z_m$ a été absorbée, la mémoire d'adresses 7 fournit une valeur $Z_m$ désignant la zone qui l'a absorbée. Ainsi, le générateur 9 ne génère un segment que pour les zones qui existent encore à la fin du traitement de regroupement des points à fort gradient dans des zones. La valeur $Z_m$ est égale à $z_m$ si la zone de numéro $z_m$ n'a pas été absorbée au cours de ce traitement.

Cette lecture est commandée par les signaux successifs $C_7$, $C_8$, $C_9$. Puis les moyens de commande 4 fournissent successivement les signaux $C_6$ et $C_{11}$ pour lire la valeur $E(Z_m)$ des composantes du vecteur d'état de la zone $Z_m$, dans la mémoire d'états 8 à l'adresse $Z_m$. Parmi ces composantes il y a : $XG(Z_m)$ qui est la somme des abscisses des points de la zone de numéro $Z_m$ ; $YG(Z_m)$ qui est la somme des ordonnées des points de cette zone ; et $N(Z_m)$ qui est le nombre de points de cette zone. Le microprocesseur 112 calcule alors des valeurs $X_g$ et $Y_g$ qui sont les coordonnées du barycentre de la zone, en les arrondissant à leur partie entière, selon les formules :

$$X_g = \frac{XG(Z_m)}{N(Z_m)} \qquad Y_g = \frac{YG(Z_m)}{N(Z_m)}$$

Parmi les composantes il y a aussi $XMAX(Z_m)$, $YMAX(Z_m)$, $XMIN(Z_m)$, $YMIN(Z_m)$, qui sont les coordonnées extrèmes des points de la zone de numéro $Z_m$. A partir de ces valeurs, le microprocesseur 112 calcule des valeurs $X'MAX$, $Y'MAX$, $X'MIN$, $Y'MIN$ qui seront les bornes des coordonnées des points du segment modélisant la zone, compte-tenu d'un prolongement de chaque extrémité de chaque segment, consistant à déplacer ces bornes de deux points, par exemple, selon les formules suivantes :

$X'MAX = XMAX(Z_m) + 2$
$Y'MAX = YMAX(Z_m) + 2$
$X'MIN = YMIN(Z_m) - 2$
$Y'MIN = YMIN(Z_m) - 2$

Deux registres du microprocesseur 112 sont utilisés pour stocker respectivement deux valeurs X et Y qui constitueront les adresses, dans la mémoire de contours 10, du point où sera inscrite une valeur 1 indiquant la présence d'un point du segment. Ces deux registres sont initialisés avec les valeurs $X_g$ et $Y_g$.

Parmi les composantes du vecteur d'état de la zone de numéro $Z_m$ il y a une valeur R codant l'orientation du gradient de luminance et codant l'orientation du contour dans cette zone. Le microprocesseur 112 compare cette valeur R successivement aux valeurs : 1, 2, 3, 4, 5. S'il détecte que la valeur R est égale à 1, il met en oeuvre un sous-programme de création d'un segment orienté à 90° par rapport aux lignes d'analyse de l'image. S'il détecte que la valeur R est égale à 2, il met en oeuvre un sous-programme de création d'un segment orienté à 120°. S'il détecte que la valeur R est égale à 3, il met en oeuvre un sous-programme de création d'un segment orienté à 150°, etc... S'il détecte que la valeur R est différente de 1, 2, 3, 4, 5, il met en oeuvre un programme de création d'un segment à 60°, la seule valeur restant possible pour R étant 6. La valeur R = 0 n'est pas rencontrée car le microprocesseur 112 ne fournit pas d'adresse $z_m = 0$ à la mémoire d'adresses 7.

Quand la mise en oeuvre du sous-programme de création d'un segment est terminée, le microprocesseur 112 compare la valeur contenue dans le registre correspondant à $z_m$, avec une valeur fixée $z_{max}$ qui correspond à la dernière adresse de la mémoire d'adresses 7 et qui est égale par exemple à 511. Si la valeur $z_m$ n'a pas encore atteint cette valeur maximale, le programme est réitéré à partir de l'incrémentation de $z_m$ , sinon le programme est réitéré à partir de la remise à zéro du contenu de toute la mémoire de contours 10.

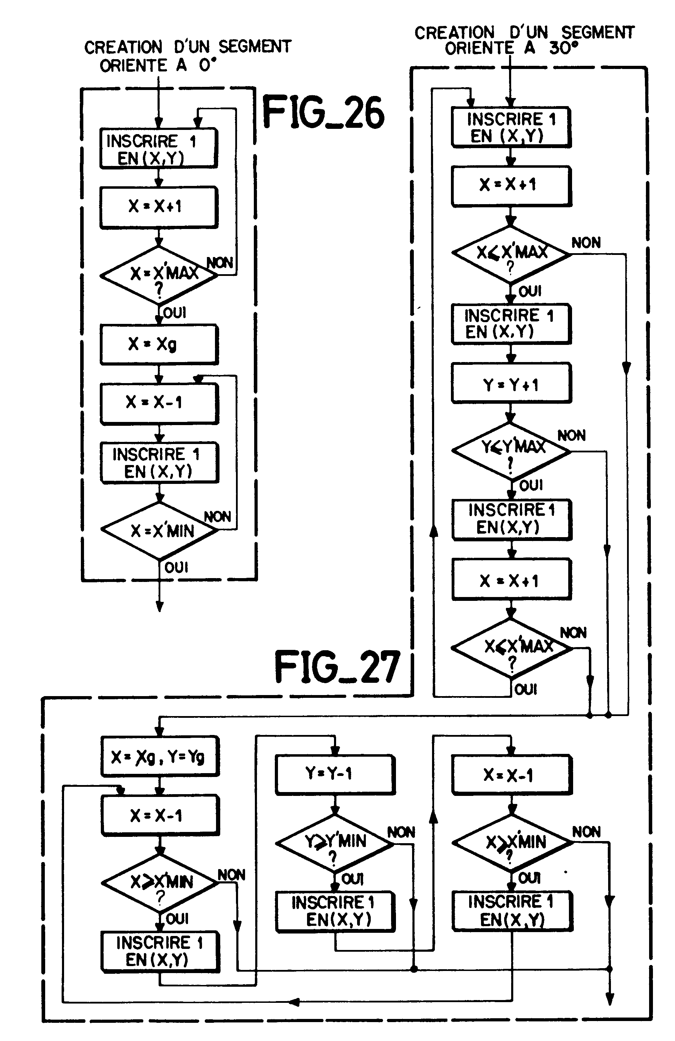

Les figures 26 et 27 représentent à titre d'exemple, un organigramme de création d'un segment orienté à 0° et un organigramme de création d'un segment orienté à 30°. Les autres sous-programmes de création d'un segment pour d'autres valeurs d'orientation sont très semblables et sont à la portée de l'homme de l'Art. Chaque segment est créé à partir de son barycentre, en créant une première partie située d'un côté du barycentre, puis en créant une seconde partie située de l'autre côté du barycentre. Les points constituent les motifs réguliers représentés sur les figures 10 et 11.

Sur la figure 26, la création d'un segment orienté à 0°, est réalisée en inscrivant tout d'abord une valeur 1 à l'adresse (X,Y) de la mémoire de contours 10, car X et Y actuellement sont égales respectivement à $X_g$ et $Y_g$. Puis le contenu du registre correspondant à X est incrémenté d'une unité, puis est comparé à la valeur $X'MAX$. Si X n'est pas égale à $X'MAX$, la première partie du segment n'est pas terminée, le microprocesseur 112 inscrit une valeur 1 à l'adresse (X,Y) de la mémoire de contours 10. Si X est égale à $X'MAX$, la première partie du segment est terminée, le microprocesseur 112 réinitialise le contenu du registre correspondant à X en y inscrivant la valeur $X_g$ de l'abscisse du barycentre de la zone. Puis il décrémente le contenu de ce registre d'une unité et inscrit une valeur 1 dans la mémoire de

EP 0 255 419 B1

contours 10 à l'adresse (X,Y). Ensuite le microprocesseur 112 compare la valeur X avec la valeur X'MIN. Si la valeur X n'est pas égale à X'MIN la seconde partie du segment n'est pas terminée, le microprocesseur 112 continue à décrémenter la valeur X et à inscrire une valeur 1 dans la mémoire de contours 10 à l'adresse (X,Y), jusqu'à ce qu'il détecte que X est égale à X'MIN. La création du segment est alors terminée, le microprocesseur 112 continue la mise en oeuvre du programme principal dont l'organigramme est représenté sur la figure 25.

Sur la figure 27, l'organigramme de la création d'un segment orienté à 30° débute par l'inscription d'une valeur 1 dans la mémoire de contours 10 à l'adresse (X,Y) qui, à cet instant, est égale à $(X_g, Y_g)$. Puis il incrémente la valeur X d'une unité et la compare avec X'MAX. Si la valeur X est inférieure ou égale à X'MAX la première partie du segment n'est pas terminée, le microprocesseur 112 inscrit une valeur 1 à l'adresse (X,Y) de la mémoire de contours 10.

Puis il incrémente la valeur Y d'une unité. Il compare la valeur Y à Y'MAX. Si la valeur Y est inférieure ou égale à Y'MAX la première partie du segment n'est pas terminée car il n'a pas atteint son ordonnée extrème. Le microprocesseur 112 inscrit une valeur 1 dans la mémoire de contours 10 à l'adresse (X,Y). Puis il incrémente encore la valeur X d'une unité et la compare ensuite à X'MAX. Si la valeur X reste inférieure ou égale à X'MAX, la première partie du segment n'est pas encore terminée, le microprocesseur 112 recommence les mêmes opérations depuis le début du sous-programme de création d'un segment orienté à 30°, notamment il commence par inscrire une valeur 1 dans la mémoire de contours 10 à l'adresse (X,Y).

Si la valeur X est strictement supérieure à X'MAX, cela veut dire que le segment a déjà atteint son abscisse maximale, le microprocesseur 112 n'inscrit rien dans la mémoire de contours 10 et initialise de nouveau le contenu des registres correspondant aux valeurs X et Y avec les coordonnées $X_g$ et $Y_g$ du barycentre de la zone.

Pour créer la seconde partie du segment, le microprocesseur 112 décrémente la valeur X d'une unité puis la compare à X'MIN pour détecter si la seconde partie du segment est arrivée à l'abscisse minimale des points de ce segment. Si la valeur X est strictement inférieure à X'MIN, cela signifie que la seconde partie du segment a déjà atteint son abscisse minimale, la création du segment est alors terminée et le microprocesseur 112 retourne à l'exécution du programme principal tel que représenté sur l'organigramme de la figure 25.

Sinon, il inscrit un 1 dans la mémoire de contours 10 à l'adresse (X,Y). Ensuite, il décrémente la valeur Y d'une unité puis la compare à Y'MIN qui indique l'ordonnée minimale qui ne doit pas être dépassée par les points du segment. Si Y est strictement inférieure à Y'MIN, cela signifie que le segment est déjà terminé, le microprocesseur 112 retourne à l'exécution du programme principal. Si la valeur Y est supérieure ou égale à Y'MIN, le segment n'est pas terminé, le microprocesseur 112 inscrit un 1 dans la mémoire de contours 10 à l'adresse (X,Y).

Ensuite le microprocesseur 112 décrémente la valeur X d'une unité puis la compare à X'MIN. Si la valeur X est strictement inférieure à X'MIN, le microprocesseur 112 inscrit un 1 dans la mémoire de contours 10 à l'adresse (X,Y) puis recommence l'exécution du sous-programme de création d'un segment orienté à 30°, à partir de la décrémentation de la valeur X, qui suit la nouvelle initialisation de X à la valeur $X_g$ et de Y à la valeur $Y_g$.

Le procédé selon l'invention, et le dispositif pour sa mise en oeuvre, sont applicables notamment dans le domaine de la reconnaissance des formes car ils permettent de modéliser les contours extraits par des segments ayant une épaisseur minimale et qui conviennent particulièrement bien pour ce type d'application. Ils sont applicables aussi à des valeurs représentatives de la chrominance des points d'une image, au lieu des valeurs représentatives de la luminance, par une adaptation simple qui est à la portée de l'homme de l'Art.

**Revendications**

1. Procédé d'extraction et de modélisation des contours d'une image constituée par des points d'image arrangés en lignes, chaque point d'image étant représenté par une valeur numérique choisie parmi les valeurs de luminance et de chrominance déterminant pour tous les points de l'image, le module et la valeur d'orientation $R_i$ du gradient de la valeur numérique représentative choisie, $R_i$ étant choisi parmi un nombre entier prédéterminé s de valeurs d'orientations possibles : $R_1$, ..., $R_s$ ,
    caractérisé en ce qu'il comporte en outre les étapes suivantes :
    - sélectionner les points d'image, dits points à fort gradient, où ce gradient a un module supérieur à une valeur fixée ;

25

- regrouper les points connexes à fort gradient ayant une même valeur d'orientation pour former des zones de contours en comparant l'orientation du gradient du point courant à ceux de deux points voisins, respectivement précédant le point courant sur la même ligne et homologue du point courant sur la ligne précédente, et en affectant ce point

  - à une nouvelle zone si l'orientation du gradient du point courant est différente de celles des deux points voisins,

  - à une zone incluant au moins un point voisin si l'orientation de son gradient est la même que celle des points de cette zone,

  - les deux zones auxquelles appartiennent les deux points voisins étant fusionnées lorsque, non connexes au moment de leur création elles deviennent connexes par le point courant, l'orientation du gradient du point courant étant la même que celles, identiques, de ces zones,

    les zones de contours étant désignées par des valeurs numériques, appelées numéros de zones, et caractérisées par des vecteurs d'état ayant des composantes fonction des points regroupés dans la zone, permettant le calcul du barycentre des points de la zone, ces vecteurs d'état étant actualisés dans une mémoire d'états au cours du traitement de tous les points d'une image ;

- modéliser les contours de l'image à partir des zones ainsi formées en associant à chaque zone un segment de droite passant par le barycentre de ses points, ce segment ayant une direction perpendiculaire à l'orientation du gradient dans cette zone.

**2.** Procédé selon la revendication 1, caractérisé en ce que pour détecter les points à fort gradient et déterminer la valeur de l'orientation du gradient en chacun de ces points, il consiste, pour chaque point d'image :

- à calculer s produits de convolution : $L * G_j$, pour $j = 1$ à s,

  où L est une matrice carrée formée par les valeurs de luminance des points entourant le point considéré, et $G_j$, $j = 1$ à s, des matrices carrées correspondant respectivement aux s valeurs d'orientation possibles ;

- à déterminer, parmi ces s produits de convolution, le produit $L * G_M$ qui a la valeur absolue la plus grande, et en déduire l'orientation $R_M$ du gradient au point considéré ;

- à comparer la valeur absolue de $L * G_M$ à une valeur de seuil fixée, le point considéré étant considéré comme point à fort gradient si cette valeur absolue est supérieure à la valeur de seuil.

**3.** Procédé selon la revendication 1, caractérisé en ce que pour modéliser les contours de l'image en représentant chaque zone par un segment de droite, il consiste à former ce segment à partir d'un ensemble minimal de points connexes sur une même ligne ou sur une même colonne de points d'image, les coordonnées maximales et minimales des points de ce segment étant les coordonnées maximales et les coordonnées minimales des points de la zone.

**4.** Procédé selon la revendication 3, caractérisé en ce qu'il consiste en outre à prolonger systématiquement les deux extrémités de tous les segments, avec un nombre prédéterminé de points d'image, au-delà des coordonnées minimales et des coordonnées maximales des points de la zone de contour modélisée par ce segment.

**5.** Procédé selon l'une des revendications 1 à 4, caractérisé en ce que les composantes du vecteur d'état de chaque zone comportent :

- la valeur de l'orientation du gradient commune à chacun des points de la zone ;
- le nombre de points attribués à la zone ;
- les valeurs maximales et les valeurs minimales des coordonnées des points attribués à la zone ;
- la somme des coordonnées horizontales des points attribués à la zone ;
- la somme des coordonnées verticales des points attribués à la zone.

**6.** Procédé selon la revendication 5, caractérisé en ce que les composantes du vecteur d'état de chaque zone comportent en outre un bit dit indicateur d'absorption dont la valeur est modifiée lorsque la zone a absorbé au moins une autre zone ; et en ce que la valeur du bit indicateur d'absorption des zones des deux points voisins du point courant est prise en compte pour déterminer :

- la valeur de numéro de zone z(PC) désignant une zone à laquelle le point courant est attribué ;
- les valeurs actualisées des numéros de zone des deux points voisins ;

- et les valeurs actualisées des composantes du vecteur d'état de la zone à laquelle le point courant est attribué.

7. Procédé selon la revendication 6, caractérisé en ce que, si les deux points voisins du point courant sont deux points à fort gradient appartenant respectivement à deux zones ayant des valeurs de numéro, Z et Z' différentes mais ayant la même orientation de gradient que celle au point courant, le point courant est attribué à :
   - la zone Z' du point voisin, homologue du point courant sur la ligne précédente, si la zone Z du point voisin précédant le point courant sur la même ligne n'a jamais absorbé une autre zone ; la zone de numéro Z étant alors absorbée par la zone de numéro Z' et la valeur actualisée de son numéro étant constituée par Z' ;
   - la zone Z du point voisin précédant le point courant sur la même ligne, dans le cas contraire, la zone de numéro Z' étant absorbée par la zone de numéro Z et la valeur actualisée de son numéro étant constituée par Z.

8. Dispositif d'extraction et de modélisation des contours d'une image constituée par des points d'image arrangés en lignes, comportant des moyens (30-34) recevant une suite de valeurs numériques représentatives des points de l'image pour déterminer en chacun de ces points le module et l'orientation du gradient, caractérisé en ce qu'il comporte en outre :
   - des moyens de comparaison (35) pour détecter parmi ces points ceux où le gradient des valeurs représentatives a un module supérieur à une valeur fixée et qui sont appelés points à fort gradient ;
   - des moyens (5 à 8) pour regrouper les points connexes à fort gradient ayant une même valeur d'orientation pour former des zones de contours en comparant l'orientation du gradient du point courant à ceux de deux points voisins, respectivement précédant le point courant sur la même ligne et homologue du point courant sur la ligne précédente, et en affectant ce point
   - à une nouvelle zone si l'orientation du gradient du point courant est différente de celles des deux points voisins,
   - à une zone incluant au moins un point voisin si l'orientation de son gradient est la même que celle des points de cette zone,
   - les deux zones auxquelles appartiennent les deux points voisins étant fusionnées lorsque, non connexes au moment de leur création, elles deviennent connexes par le point courant, l'orientation du gradient du point courant étant la même que celles, identiques, de ces zones,

     les zones de contours étant désignées par des valeurs numériques, appelées numéros de zones et caractérisées par des vecteurs d'état ayant des composantes fonction des points regroupés dans la zone permettant le calcul du barycentre des points de la zone, ces vecteurs d'état étant, actualisés au cours du traitement de tous les points d'une image ;
   - des moyens (8, 9) pour modéliser les contours de l'image à partir des zones ainsi formées en associant à chaque zone un segment de droite passant par le barycentre de ses points, ce segment ayant une direction perpendiculaire à l'orientation du gradient dans cette zone
   - une mémoire (10) dite mémoire de contours, pour stocker, pour chaque point d'une image, une valeur binaire traduisant son appartenance ou non à l'un des segments modélisant les zones de points à fort gradient.

9. Dispositif selon la revendication 8, caractérisé en ce que les moyens pour déterminer le module et l'orientation du gradient comportent :
   - des moyens (30, 31) pour calculer pour chaque point d'image, s produits de convolution, $L * G_i$, i = 1 à s,

     s étant un nombre entier prédéterminé, L étant une matrice carrée formée par les valeurs représentatives de points entourant le point considéré, $G_1$, ..., $G_s$ étant s matrices correspondant respectivement à s valeurs prédéterminées pour l'orientation ;
   - des moyens (32-34) pour comparer entre eux les s produits de convolution calculés pour le point considéré et pour déterminer, parmi ces s produits de convolution, un produit $L * G_M$ qui a la valeur absolue la plus grande, et fournir un mot binaire indiquant la valeur d'orientation correspondant à ce plus grand produit de convolution ;
   - des moyens de comparaison (35) comparant la valeur absolue du produit $L * G_M$ à une valeur de seuil pour fournir un signal binaire indiquant si le point considéré est un point à fort gradient ou non.

**10.** Dispositif selon la revendication 8, caractérisé en ce que les moyens (5 à 8) pour déterminer les valeurs des composantes des vecteurs d'état caractérisant des zones de l'image, comportent :
- des moyens (5) dits générateurs d'adresses et d'états, pour déterminer
- une valeur de numéro z(PC) désignant, à l'instant considéré, une zone à laquelle le point courant est attribué et constituant la valeur actualisée du numéro de zone des points d'une zone absorbée si une zone est absorbée,
- une valeur E(z(PC)) des composantes du vecteur d'état de la zone de numéro z(PC) ;
- et une valeur AD qui est le numéro d'une zone absorbée par la zone de numéro z(PC), si une zone est absorbée ;

en fonction d'informations binaires indiquant, pour chaque point d'image, s'il est ou non un point à fort gradient et indiquant, pour chaque point à fort gradient, la valeur de l'orientation du gradient en ce point ;

en fonction d une valeur Z' constituant, à l'instant considéré, le numéro de zone d'un point voisin homologue du point courant sur la ligne précédant celle du point courant ;

en fonction de la valeur E(Z') des composantes du vecteur d'état caractérisant la zone de numéro Z' ;

en fonction d'une valeur Z constituant, à l'instant considéré, le numéro de zone d'un point voisin du point courant et le précédant sur la même ligne ;

et en fonction de la valeur E(Z) des composantes du vecteur d'état caractérisant la zone de numéro Z ;
- une mémoire (6), dite mémoire d'attente, pour stocker chaque valeur z(PC) et la restituer avec un retard correspondant à la durée de traitement des points d'une ligne d'image, chaque valeur restituée constituant une valeur z(PD) ;
- une mémoire (7) dite mémoire d'adresses, pour stocker chaque valeur z(PC) fournie par le générateur (5) d'adresses et d'états à une adresse constituée par la valeur AD fournie par le générateur (5) d'adresses et d'états, la valeur z(PC) constituant la valeur actualisée du numéro de zone des points qui, jusqu'à l'instant considéré, avaient AD pour numéro de zone ; et pour fournir au générateur (5) d'adresses et d'états la valeur Z', celle-ci étant lue à une adresse constituée par la valeur z(PD) fournie par la mémoire d'attente (6).

**11.** Dispositif selon la revendication 10, caractérisé en ce que pour déterminer la valeur E(z(PC)) des composantes du vecteur d'état de la zone de numéro z(PC), le générateur (5) d'adresses et d'états comporte :
- des moyens de calcul (52, 53, 55, 63) pour déterminer le nombre de points de la zone de numéro z(PC), en fonction des nombres de points des zones de numéros Z et Z' ;
- des moyens de calcul (56 à 59, 52, 53, 64 à 67) pour déterminer les coordonnées extrêmes des points de la zone de numéro z(PC), en fonction des coordonnées extrêmes des points des zones Z et Z' ;
- des moyens de calcul (60, 61, 52, 53, 68, 69) pour déterminer la somme des abscisses et la somme des ordonnées des points de la zone de numéro z(PC), en fonction des sommes des abscisses et des sommes des ordonnées des points des zones de numéros Z et Z' ;
- des moyens (54) pour stocker, pendant une durée correspondant au traitement du point courant, la valeur E(z(PC)) des composantes du vecteur d'état de la zone à laquelle est attribué le point courant, la valeur de ces composantes constituant ultérieurement la valeur E(Z) des composantes du vecteur d'état de la zone Z du point voisin du prochain point courant sur la même ligne.

**12.** Dispositif selon la revendication 11, caractérisé en ce que le générateur (5) d'adresses et d'états comporte en outre des moyens dits générateurs (50) d'adresses disponibles, pour fournir des valeurs d'adresses disponibles dans la mémoire d'états (8), ce générateur (50) étant initialisé avec une suite d'adresses prédéterminées et comportant :
- des moyens (97 à 104) pour détecter les zones dont le nombre de points n'augmentera plus et est inférieur à une valeur de seuil fixé, et pour stocker les numéros de ces zones en tant que numéros disponibles pour être attribués à d'autres zones ;
- des moyens (97, 108 à 110) pour retarder les numéros des zones absorbées, d'une durée correspondant à l'analyse de trois lignes d'image, et pour stocker ensuite ces numéros en tant que numéros disponibles pour être attribués à d'autres zones.

**13.** Dispositif selon la revendication 10, caractérisé en ce que les moyens (8, 9) pour déterminer, à partir de la valeur des composantes du vecteur d'état de chaque zone, les coordonnées de points de l'image constituant un segment de droite modélisant la zone considérée, comportent :

- des moyens (9), dits générateurs de contours modélisés, pour fournir une suite de valeurs d'adresses $z_m$ à la mémoire d'adresse (7), cette suite correspondant à l'ensemble des valeurs d'adresses de la mémoire d'adresses (7) ; pour lire des numéros de zone $Z_m$ dans la mémoire d'adresses (7) aux adresses $z_m$ ; pour lire des valeurs $E(Z_m)$ des composantes des vecteurs d'état des zones $Z_m$ dans la mémoire d'états (8) aux adresses $Z_m$ ; pour calculer, à partir de chaque valeur $E(Z_m)$ lue dans la mémoire d'états (8) :
- les coordonnées entières $(X_g, Y_g)$ du barycentre des points de cette zone ;
- les coordonnées des points d'image constituant un segment de droite passant par les coordonnées $(X_g, Y_g)$ et délimité par les valeurs extrêmes des coordonnées des points de cette zone augmentées d'un nombre fixe d'unités afin de prolonger systématiquement les extrémités de chaque segment ;
- et pour stocker, dans la mémoire de contours (10), préalablement remise à zéro, une valeur différente de zéro, aux adresses correspondant aux coordonnées entières du barycentre et des points du segment.

## Claims

**1.** Method of extracting and modelling the contours of an image constituted by image points arranged in lines, each image point being represented by a numerical value chosen among the luminance and chrominance values, determining, for all the points of the image, the modulus and the orientation value $R_i$ of the gradient of the representative numerical value chosen, $R_i$ being chosen among a predetermined whole number s of possible orientation values: $R_1$, ..., $R_s$,
    characterised in that it further comprises the following steps:
- selecting the image points, called steep-gradient points, where this gradient has a modulus greater than a fixed value;
- grouping together the related, steep-gradient points having the same orientation value in order to form contour areas by comparing the orientation of the gradient of the current point with those of two adjoining points, respectively preceding the current point on the same line and corresponding to the current point on the preceding line and by assigning this point
- to a new area if the orientation of the gradient of the current point is different from those of the two adjoining points,
- to an area including at least one adjoining point if the orientation of its gradient is the same as that of the points of this area,
- the two areas to which the two adjoining points belong being merged when, not related at the moment of their creation, they become related by the current point, the orientation of the gradient of the current point being the same as those, which are identical, of these areas,
    the contour areas being designated by numerical values, called area numbers, and characterised by state vectors having components which are a function of the points grouped together in the area, allowing calculation of the centre of gravity of the points of the area, these state vectors being updated in a state memory in the course of the processing of all the points of an image;
- modelling the contours of the image on the basis of the areas thus formed by associating with each area a straight-line segment passing through the centre of gravity of its points, this segment having a direction which is perpendicular to the orientation of the gradient in this area.

**2.** Method according to Claim 1, characterised in that in order to detect the steep-gradient points and to determine the value of the orientation of the gradient in each of these points, it consists, for each image point:
- in calculating s convolution products: $L * G_j$, for j = 1 to s,
- where L is a square matrix formed from the luminance values of the points surrounding the point in question, and $G_j$, j = 1 to s, square matrices corresponding respectively to the s possible orientation values;
- in determining, among these s convolution products, the product $L * G_M$ which has the largest absolute value, and deducing therefrom the orientation $R_M$ of the gradient at the point in question;
- in comparing the absolute value of $L * G_M$ with a fixed threshold value, the point in question being considered as a steep-gradient point if this absolute value is greater than the threshold value.

3. Method according to Claim 1, characterised in that in order to model the contours of the image by representing each area by a straight-line segment, it consists in forming this segment from a minimal set of related points on the same line or on the same column of image points, the maximal and minimal coordinates of the points of this segment being the maximal coordinates and the minimal coordinates of the points of the area.

4. Method according to Claim 3, characterised in that it further consists in systematically prolonging the two extremities of all the segments, with a predetermined number of image points, beyond the minimal coordinates and the maximal coordinates of the points of the contour area modelled by this segment.

5. Method according to one of Claims 1 to 4, characterised in that the components of the state vector of each area comprise:
   - that value of the orientation of the gradient which is common to each of the points of the area;
   - the number of points attributed to the area;
   - the maximal values and the minimal values of the coordinates of the points attributed to the area;
   - the sum of the horizontal coordinates of the points attributed to the area;
   - the sum of the vertical coordinates of the points attributed to the area.

6. Method according to Claim 5, characterised in that the components of the state vector of each area further comprise one bit called absorption indicator bit whose value is modified when the area has absorbed at least one other area; and in that the value of the absorption indicator bit of the areas of the two points adjoining the current point is taken into account in order to determine:
   - the area number value z(PC) designating an area to which the current point is attributed;
   - the updated values of the area numbers of the two adjoining points;
   - and the updated values of the components of the state vector of the area to which the current point is attributed.

7. Method according to Claim 6, characterised in that, if the two points adjoining the current point are two steep-gradient points belonging respectively to two areas having different number values Z and Z', but having the same gradient orientation as that of the current point, the current point is attributed to:
   - the area Z' of the adjoining point, corresponding to the current point on the preceding line, if the area Z of the adjoining point preceding the current point on the same line has never absorbed another area; the number Z area being then absorbed by the area with number Z' and the updated value of its number being constituted by Z';
   - the area Z of the adjoining point preceding the current point on the same line, in the opposite case, the area with number Z' being absorbed by the number Z area and the updated value of its number being constituted by Z.

8. Device for extracting and modelling the contours of an image constituted by image points arranged in lines, comprising means (30-34) receiving a series of numerical values which are representative of the points of the image in order to determine in each of these points the modulus and the orientation of the gradient, characterised in that it further comprises:
   - comparison means (35) for detecting among these points those where the gradient of the representative values has a modulus greater than a fixed value and which are called steep-gradient points;
   - means (5 to 8) for grouping together the related, steep-gradient points having the same orientation value in order to form contour areas by comparing the orientation of the gradient of the current point with those of two adjoining points, respectively preceding the current point on the same line and corresponding to the current point on the preceding line and by assigning this point
   - to a new area if the orientation of the gradient of the current point is different from those of the two adjoining points,
   - to an area including at least one adjoining point if the orientation of its gradient is the same as that of the points of this area,
   - the two areas to which the two adjoining points belong being merged when, not related at the moment of their creation, they become related by the current point, the orientation of the gradient of the current point being the same as those, which are identical, of these areas,
       the contour areas being designated by numerical values, called area numbers, and charac-

EP 0 255 419 B1

terised by state vectors having components which are a function of the points grouped together in the area allowing calculation of the centre of gravity of the points of the area, these state vectors being updated in the course of the processing of all the points of an image;
- means (8, 9) for modelling the contours of the image on the basis of the areas thus formed by associating with each area a straight-line segment passing through the centre of gravity of its points, this segment having a direction which is perpendicular to the orientation of the gradient in this area;
- a memory (10) called contours memory, for storing, for each point of an image, a binary value indicating whether or not it belongs to one of the segments modelling the areas of steep-gradient points.

9. Device according to Claim 8, characterised in that the means for determining the modulus and the orientation of the gradient comprise:
- means (30, 31) for calculating s convolution products, $L * G_i$, i = 1 to s, for each image point,
   s being a predetermined whole number, L being a square matrix formed by the values representative of points surrounding the point in question, $G_1$, ..., $G_s$ being s matrices corresponding respectively to s pre-determined values for the orientation;
- means (32-34) for mutually comparing the s convolution products calculated for the point in question and for determining, among these s convolution products, a product $L * G_M$ which has the largest absolute value, and supplying a binary word indicating the orientation value corresponding to this largest convolution product;
- comparison means (35) comparing the absolute value of the product $L * G_M$ with a threshold value in order to supply a binary signal indicating whether the point in question is a steep-gradient point or not.

10. Device according to Claim 8, characterised in that the means (5 to 8) for determining the values of the components of the state vectors characterising areas of the image comprise;
- means (5) called addresses and states generators, for determining
- a z(PC) number value designating, at the instant in question, an area to which the current point is attributed and constituting the updated value of the area number of the points of an absorbed area if an area is absorbed,
- a value E(z(PC)) of the components of the state vector of the area with number z(PC);
- and a value AD which is the number of an area absorbed by the area with number z(PC), if an area is absorbed;
   as a function of binary information indicating, for each image point, whether or not it is a steep-gradient point and indicating, for each steep-gradient point, the value of the orientation of the gradient at this point;
   as a function of a value Z' constituting, at the instant in question, the area number of a adjoining point corresponding to the current point on the line preceding that of the current point;
   as a function of the value E(Z') of the components of the state vector characterising the area with number Z';
   as a function of a value Z constituting, at the instant in question, the area number of a point adjoining the current point and preceding it on the same line;
   and as a function of the value E(Z) of the components of the state vector characterising the area with number Z;
- a memory (6) called standby memory, for storing each value z(PC) and restoring it with a delay corresponding to the processing duration for the points of an image line, each restored value constituting a value z(PD);
- a memory (7) called addresses memory, for storing each value z(PC) supplied by the addresses and states generator (5) at an address constituted by the value AD supplied by the addresses and states generator (5), the value z(PC) constituting the updated value of the area number of the points which, up to the instant in question, had AD as their area number; and for supplying, to the addresses and states generator (5), the value Z', the latter being read at an address constituted by the value z(PD) supplied by the standby memory (6).

11. Device according to Claim 10, characterised in that in order to determine the value E(z(PC)) of the components of the state vector of the area with number z(PC), the addresses and states generator (5) comprises:

- calculating means (52, 53, 55, 63) for determining the number of points of the area with number z(PC), as a function of the numbers of points of the areas with numbers Z and Z';
- calculating means (56 to 59, 52, 53, 64 to 67) for determining the extreme coordinates of the points of the area with number z(PC), as a function of the extreme coordinates of the points of areas Z and Z';
- calculating means (60, 61, 52, 53, 68, 69) for determining the sum of the abscissae and the sum of the ordinates of the points of the area with number z(PC), as a function of the sums of the abscissae and of the sums of the ordinates of the points of the areas with numbers Z and Z';
- means (54) for storing, for a duration corresponding to the processing of the current point, the value E(z(PC)) of the components of the state vector of the area to which the current point is attributed, the value of these components later constituting the value E(Z) of the components of the state vector of the area Z of the point adjoining the next current point on the same line.

**12.** Device according to Claim 11, characterised in that the addresses and states generator (5) further comprises means called available addresses generators (50) for supplying values of available addresses in the states memory (8), this generator (50) being initialised with a series of predetermined addresses and comprising:
- means (97 to 104) for detecting the areas whose number of points will not increase further and is less than a fixed threshold value, and for storing the numbers of these areas as numbers available to be attributed to other areas;
- means (97, 108 to 110) for delaying the numbers of the absorbed areas, by a duration corresponding to the analysis of three image lines, and for next storing these numbers as numbers available to be attributed to other areas.

**13.** Device according to Claim 10, characterised in that the means (8, 9) for determining, on the basis of the value of the components of the state vector of each area, the coordinates of points of the image constituting a straight-line segment modelling the area in question, comprise:
- means (9), called modelled contours generators, for supplying a series of values of addresses $z_m$ to the address memory (7), this series corresponding to the set of values of addresses of the addresses memory (7); for reading the area numbers $Z_m$ into the addresses memory (7) at the addresses $z_m$; for reading the values $E(Z_m)$ of the components of the state vectors of the areas $Z_m$ into the states memory (8) at the addresses $Z_m$; for calculating, on the basis of each value E-$(Z_m)$ read into the states memory (8):
- the integer coordinates $(X_g, Y_g)$ of the centre of gravity of the points of this area;
- the coordinates of the image points constituting a straight-line segment passing through the coordinates $(X_g, Y_g)$ and delimited by the extreme values of the coordinates of the points of this area increased by a fixed number of units so as to systematically prolong the extremities of each segment;
  and to store, in the contours memory (10), previously reset to zero, a value different from zero, at the addresses corresponding to the integer coordinates of the centre of gravity and of the points of the segment.

## Patentansprüche

**1.** Verfahren zur Erfassung und Modellierung der Konturen eines Bildes, bestehend aus zeilenweise angeordneten Bildpunkten, wobei jeder Bildpunkt durch einen digitalen Wert dargestellt wird, der unter den Werten der Helligkeit oder des Farbwerts ausgewählt wird, wobei das Verfahren für alle Bildpunkte den Modul und den Richtungswert $R_i$ des Gradienten des gewählten repräsentativen digitalen Werts bestimmt und wobei $R_i$ aus einer vorgegebenen ganzzahligen Anzahl s von möglichen Richtungswerten $R_1, ... R_s$ ausgewählt wird, dadurch gekennzeichnet, daß dieses Verfahren außerdem die Schritte der Auswahl der Bildpunkte, in denen der Gradient einen größeren Modul als ein fester Wert besitzt, Punkte mit starkem Gradienten genannt, und der Gruppierung der aneinander anschließenden Punkte mit starkem Gradienten aufweist, die einen gleichen Richtungswert besitzen, um Konturzonen durch Vergleich der Richtung des Gradienten des aktuellen Punkts mit denen von zwei Nachbarpunkten zu bilden, nämlich dem auf derselben Zeile vorausgehenden Punkt und dem auf der vorhergehenden Zeile dem aktuellen Punkt entsprechenden Punkt, wobei diesem Punkt
- eine neue Zone zugewiesen wird, wenn die Richtung des Gradienten des aktuellen Punkts sich von der der beiden Nachbarpunkte unterscheidet,

32

- einer Zone zugewiesen wird, die mindestens einen der Nachbarpunkte enthält, wenn die Richtung von dessen Gradienten dieselbe wie die der Punkte dieser Zone ist,
- wobei die beiden Zonen, denen die beiden Nachbarpunkte angehören, verschmolzen werden, wenn sie, obwohl sie zum Zeitpunkt ihrer Erzeugung nicht aneinander anschließend waren, durch den aktuellen Punkt aneinanderstoßend werden, und wenn die Richtung des Gradienten des aktuellen Punkts dieselbe wie die gemeinsame Richtung dieser beiden Zonen ist,
- wobei die Konturzonen durch digitale Werte bezeichnet werden, Zonennummern genannt, und durch Zustandsvektoren gekennzeichnet werden, die Komponenten in Abhängigkeit von den in der Zone zusammengefaßten Punkten besitzen, wobei die Berechnung des Schwerpunkts der Punkte der Zone möglich ist und wobei diese Zustandsvektoren in einem Zustandsspeicher während der Behandlung aller Punkte eines Bildes aktualisiert werden, und daß zum Verfahren außerdem die Modellierung der Konturen des Bildes ausgehend von den so gebildeten Zonen gehört, indem jeder Zone ein Geradensegment zugeordnet wird, das durch den Schwerpunkt dieser Punkte verläuft und eine Richtung senkrecht zur Richtung des Gradienten in dieser Zone annimmt.

2. Verfahren nach Anspruch 1, dadurch gekennzeichnet, daß zur Erfassung der Punkte eines starken Gradienten und zur Bestimmung des Richtungswerts des Gradienten in jedem dieser Punkte das Verfahren für jeden Bildpunkt folgende Schritte enthält:
- Berechnung von s Konvolutionsprodukten $L * G_j$, wobei j von 1 bis s variiert und L eine quadratische Matrix aus den Helligkeitswerten der den betreffenden Punkt umgebenden Punkte ist und wobei $G_j$ ($1 \leq j \leq s$) quadratische Matrizen bezeichnet entsprechend den s möglichen Richtungswerten,
- Bestimmung desjenigen der Konvolutionsprodukte $L * G_M$ mit dem größten Absolutwert und Ermittlung der Richtung $R_M$ des Gradienten im betrachteten Punkt,
- Vergleich des Absolutwerts von $L * G_M$ mit einem festen Schwellwert, wobei der betrachtete Punkt als Punkt mit starkem Gradienten betrachtet wird, wenn dieser Absolutwert größer als der Schwellwert ist.

3. Verfahren nach Anspruch 1, dadurch gekennzeichnet, daß zur Modellierung der Konturen des Bilds in Form von Geradensegmenten für jede Zone das Verfahren darin besteht, dieses Segment ausgehend von einer Mindestanzahl von aneinanderhängenden Punkten auf einer gemeinsamen Zeile oder einer gemeinsamen Spalte von Bildpunkten zu bilden, wobei die Höchst- und Mindestkoordinaten der Punkte dieses Segments die Höchst- und Mindestkoordinaten der Punkte der Zone sind.

4. Verfahren nach Anspruch 3, dadurch gekennzeichnet, daß es außerdem darin besteht, systematisch die beiden Enden aller Segmente um eine vorgegebene Anzahl von Bildpunkten über die Mindest- und Höchstkoordinaten der Punkte der Zone der durch dieses Segment modellierten Konturenlinie zu verlängern.

5. Verfahren nach einem der Ansprüche 1 bis 4, dadurch gekennzeichnet, daß die Komponenten des Zustandsvektors jeder Zone aufweisen:
- den Wert der gemeinsamen Gradientenrichtung aller Punkte der Zone,
- die Anzahl der der Zone zugewiesenen Punkte,
- die Höchst- und Mindestwerte der Koordinaten der der Zone zugewiesenen Punkte,
- die Summe der waagrechten Koordinaten der der Zone zugewiesenen Punkte,
- die Summe der senkrechten Koordinaten der der Zone zugewiesenen Punkte.

6. Verfahren nach Anspruch 5, dadurch gekennzeichnet, daß die Komponenten des Zustandsvektors jeder Zone außerdem ein Absorptionsindikatorbit enthalten, dessen Wert verändert wird, wenn die Zone mindestens eine andere Zone absorbiert hat, und daß der Wert des Absorptionsindikatorbits der Zonen von zwei dem aktuellen Punkt benachbarten Punkten berücksichtigt wird zur Bestimmung
- des Werts der Zonennummer z(PC), der eine Zone bezeichnet, der der aktuelle Punkt zugewiesen ist,
- der aktualisierten Werte der Zonennummern zweier benachbarter Punkte,
- und der aktualisierten Werte der Komponenten des Zustandsvektors der Zone, der der aktuelle Punkt zugewiesen ist.

**7.** Verfahren nach Anspruch 6, dadurch gekennzeichnet, daß für den Fall, daß die beiden dem aktuellen Punkt benachbarten Punkte beide Punkte mit starkem Gradienten sind und zwei Zonen mit unterschiedlichen Werten der Zonennummer Z und Z' angehören, aber dieselbe Gradientenrichtung wie der aktuelle Punkt besitzen, der aktuelle Punkt entweder zugewiesen wird

- der Zone Z' des dem aktuellen Punkt auf der vorhergehenden Linie entsprechenden Nachbarpunkts, wenn die Zone Z des auf derselben Linie dem aktuellen Punkt vorausgehenden Nachbarpunkts noch nie von einer anderen Zone absorbiert wurde, wobei dann die Zone mit der Nummer Z von der Zone mit der Nummer Z' absorbiert wird und der aktualisierte Wert ihrer Nummer von Z' gebildet wird,

- oder der Zone Z des dem aktuellen Punkt auf derselben Zeile vorausgehenden Nachbarpunkts im entgegengesetzten Fall, wobei dann die Zone mit der Nummer Z' von der Zone mit der Nummer Z absorbiert wird und der aktualisierte Wert ihrer Nummer von Z gebildet wird.

**8.** Vorrichtung zur Erfassung und zum Modellieren der Konturen eines Bildes bestehend aus in Zeilen angeordneten Bildpunkten, mit Mitteln (30 bis 34), die eine Folge von für die Bildpunkte repräsentativen digitalen Werten empfangen, um in jedem dieser Punkte den Modul und die Richtung des Gradienten zu bestimmen, dadurch gekennzeichnet, daß sie weiter enthält:
- Vergleichsmittel (35) zur Erfassung derjenigen Punkte, an denen der Gradient der repräsentativen Werte einen größeren Modul als ein fester Wert besitzt und die Punkte mit starkem Gradienten genannt werden, Mittel (5 bis 8), um die aneinandergrenzenden Punkte mit starkem Gradienten und gleichen Richtungswerts zu Zonen von Konturen zusammenzufassen, indem die Richtung des Gradienten des aktuellen Punkts mit denen von zwei Nachbarpunkten verglichen werden, von denen der eine dem aktuellen Punkt auf derselben Zeile vorausgeht und der andere dem aktuellen Punkt auf der vorhergehenden Zeile entspricht, und indem dieser Punkt entweder einer neuen Zone zugewiesen wird, wenn die Richtung des Gradienten des aktuellen Punkts sich von der der beiden Nachbarpunkte unterscheidet oder einer Zone zugeordnet wird, die mindestens einen der Nachbarpunkte einschließt, wenn die Richtung des Gradienten dieselbe wie die der Punkte in dieser Zone ist,
wobei die beiden Zonen, denen die beiden Nachbarpunkte angehören, miteinander verschmolzen werden, wenn sie, obwohl noch getrennt zum Zeitpunkt ihrer Erzeugung, durch den aktuellen Punkt miteinander in Verbindung gelangen und wenn die Richtung des Gradienten des aktuellen Punkts dieselbe wie die gemeinsame Richtung dieser beiden Zonen ist, wobei die Konturzonen durch digitale Werte, Zonennummern genannt, bezeichnet und durch Zustandsvektoren charakterisiert werden, deren Komponenten von den in der Zone zusammengefaßten Punkten abhängen, so daß die Berechnung des Schwerpunkts der Punkte der Zone möglich ist, wobei diese Zustandsvektoren während der Bearbeitung aller Punkte eines Bildes aktualisiert werden,
- Mittel (8, 9) zur Modellierung der Konturen des Bildes ausgehend von den so gebildeten Zonen, indem jeder Zone ein Geradensegment zugeordnet wird, das durch den Schwerpunkt ihrer Punkte verläuft und eine Richtung senkrecht zur Richtung des Gradienten in dieser Zone besitzt,
- einen Speicher (10), Konturenspeicher genannt, um für jeden Punkt eines Bildes einen Binärwert zu speichern, der seine Zugehörigkeit zu einem der modellierten segmente der Zonen von Punkten mit starkem Gradienten kennzeichnet.

**9.** Vorrichtung nach Anspruch 8, dadurch gekennzeichnet, daß die Mittel zur Bestimmung des Moduls und der Richtung des Gradienten aufweisen:
- Mittel (30, 31) zur Berechnung von s Konvolutionsprodukten $L * G_i$ ($1 \leq i \leq s$) für jeden Bildpunkt, wobei s eine vorgegebene ganze Zahl ist, L eine quadratische Matrix, die aus den für die den betreffenden Punkt umgebenden Punkte charakteristischen Werte gebildet wird, und wobei $G_1, ... G_s$ s Matrizen sind, die s bestimmten Werten für die Richtung entsprechen,
- Mittel (32 bis 34) zum gegenseitigen Vergleich der s für den betrachteten Punkt berechneten Konvolutionsprodukte und zur Bestimmung eines Produkts $L * G_M$ unter diesen s Konvolutionsprodukten, das den größten Absolutwert besitzt und zur Lieferung eines Binärworts, das den Richtungswert entsprechend diesem größten Konvolutionsprodukt angibt,
wobei die Vergleichsmittel (35) den Absolutwert des Produkts $L * G_M$ mit einem Schwellwert vergleichen und ein Binärsignal liefern, das angibt, ob der betrachtete Punkt ein Punkt mit starkem Gradienten ist oder nicht.

**10.** Vorrichtung nach Anspruch 8, dadurch gekennzeichnet, daß die Mittel (5 bis 8) zur Bestimmung der Werte der Bildzonen charakterisierenden Zustandsvektoren aufweisen

- Mittel (5), auch Adressen- und Zustandsgeneratoren genannt, um zu bestimmen
  - einen Wert einer Nummer z(PC), der in einem betrachteten Zeitpunkt eine Zone bezeichnet, der der aktuelle Punkt zugewiesen ist und den aktualisierten Wert der Zonennummer der Punkte einer absorbierten Zone bildet, falls eine Zone absorbiert worden ist,
  - einen Wert E(z(PC)) der Komponenten des Zustandsvektors der Zone mit der Nummer z(PC),
  - und einen Wert AD, der die Nummer einer durch die Zone mit der Nummer z(PC) absorbierten Zone ist, wenn eine Zone absorbiert worden ist,

    abhängig von Binärinformationen, die für jeden Bildpunkt angeben, ob es sich um einen Punkt mit starkem Gradienten handelt, und für jeden Punkt mit starkem Gradienten, den Richtungswert des Gradienten in diesem Punkt angeben,
  - abhängig von einem Wert Z', der in einem betrachteten Zeitpunkt die Nummer der Zone eines auf der dem aktuellen Punkt vorausgehenden Zeile diesem entsprechenden Punkts bildet,

    abhängig vom Wert E(Z') der Komponenten des Zustandsvektors, der die Zone mit der Nummer Z' charakterisiert,
  - abhängig von einem Wert Z, der in einem gegebenen Zeitpunkt die Nummer der Zone eines dem aktuellen Punkt auf derselben Zeile unmittelbar vorausgehenden Punkts bildet,
  - und abhängig vom Wert E(Z) der Komponenten des die Zone mit der Nummer Z charakterisierenden Zustandsvektors,
- einen Speicher (6), Wartespeicher genannt, um jeden Wert z(PC) zu speichern und mit einer Verzögerung entsprechend der Dauer der Bearbeitung der Punkte einer Bildzeile wieder auszugeben, wobei jeder wieder ausgegebene Wert einen Wert z(PD) bildet,
- einen Speicher (7), Adressenspeicher genannt, um jeden Wert z(PC) zu speichern, der vom Adressen- und Zustandsgenerator (5) geliefert wurde, und zwar an einer durch den von dem Adressen- und Zustandsgenerator (5) gelieferten Wert AD gebildeten Adresse, wobei der Wert z(PC) den aktualisierten Wert der Nummer der Zone der Punkte bildet, die bis zum betrachteten Zeitpunkt den Wert AD als Zonennummer hatten, und um dem Adressen- und Zustandsgenerator (5) den Wert Z' zu liefern, der an einer durch den vom Wartespeicher (6) gelieferten Wert z(PD) gebildeten Adresse gelesen wird.

**11.** Vorrichtung nach Anspruch 10, dadurch gekennzeichnet, daß zur Bestimmung des Werts E(z(PC)) der Komponenten des Zustandsvektors der Zone mit der Nummer z(PC) der Adressen- und Zustandsgenerator (5) aufweist:

- Rechenmittel (52, 53, 55, 63) zur Bestimmung der Anzahl der Punkte der Zone mit der Nummer z(PC) abhängig von der Anzahl der Punkte der Zonen mit den Nummern Z und Z',
- Rechenmittel (56, bis 59, 52, 53, 64 bis 67) zur Bestimmung der Extremkoordinaten der Punkte der Zone mit der Nummer z(PC) abhängig von den Extremkoordinaten der Punkte der Zonen Z und Z',
- Rechenmittel (60, 61, 52, 53, 68, 69) zur Bestimmung der Summe der Abszissen und der Summe der Ordinaten der Punkte der Zone mit der Nummer z(PC) abhängig von den Summen der Abszissen und den Summen der Ordinaten der Punkte in den Zonen mit den Nummern Z und Z',
- Mittel (54) zum Speichern des Werts E(z(PC)) der Komponenten des Zustandsvektors der Zone, der der aktuelle Punkt zugeordnet ist, während einer Dauer entsprechend der Bearbeitung des aktuellen Punkts, wobei der Wert dieser Komponenten später den Wert E(Z) der Komponenten des Zustandsvektors der Zone Z des Nachbarpunkts des nächsten aktuellen Punkts auf derselben Zeile bilden wird.

**12.** Vorrichtung nach Anspruch 11, dadurch gekennzeichnet, daß der Adressen- und Zustandsgenerator (5) außerdem Mittel enthält, die Generatoren (50) für verfügbare Adressen genannt werden, um Werte von im Zustandsspeicher (8) verfügbaren Adressen zu liefern, wobei dieser Generator (50) mit einer Folge von vorgegebenen Adressen initialisiert wird und aufweist:

- Mittel (97 bis 104) zur Erfassung der Zonen, deren Anzahl von Punkten nicht mehr zunehmen wird und unter einem festen Schwellwert liegt, und um die Nummern dieser Zonen als verfügbare Nummern zu speichern, die dann anderen Zonen zugewiesen werden können,
- Mittel (97, 108 bis 110), um die Nummern der absorbierten Zonen um eine Zeitdauer zu verzögern, die der Abtastung von drei Bildzeilen entspricht, und um dann diese Nummern als verfügbare Nummern zu speichern, die anderen Zonen zugewiesen werden können.

**13.** Vorrichtung nach Anspruch 10, dadurch gekennzeichnet, daß die Mittel (8, 9) zur Bestimmung der Koordinaten der Bildpunkte, die ein Geradensegment bilden, das die betrachtete Zone modelliert, ausgehend vom Wert der Komponenten des Zustandsvektors jeder Zone aufweisen:

- Mittel (9), Generatoren für modellierte Konturen genannt, um eine Folge von Adressenwerten $z_m$ an den Adressenspeicher zu liefern, die der Gesamtheit der Adressenwerte des Adressenspeichers (7) entspricht, um Zonennummern $Z_m$ aus dem Adressenspeicher (7) an den Adressen $z_m$ auszulesen, um Werte $E(Z_m)$ der Komponenten der Zustandsvektoren der Zonen $Z_m$ im Zustandsspeicher (8) an den Adressen $Z_m$ auszulesen und um ausgehend von jedem aus dem Zustandsspeicher ausgelesenen Wert $E(Z_m)$ zu berechnen:

- die ganzzahligen Koordinaten $(X_g, Y_g)$ des Schwerpunkts der Punkte dieser Zone,

- die Koordinaten der Bildpunkte, die ein Geradensegment bilden, das durch die Koordinaten $(X_g, Y_g)$ verläuft und durch die Extremwerte der Koordinaten der Punkte dieser Zone, erweitert um eine feste Anzahl von Einheiten begrenzt wird, um systematisch die Enden jedes Segments zu verlängern,

- und um im Konturenspeicher (10), der vorher auf Null gesetzt worden war, einen von Null verschiedenen Wert an den Adressen zu speichern, die den ganzzahligen Koordinaten des Schwerpunkts und der Punkte des Segments entsprechen.

# FIG_1

| Y\X | 1 | 2 | 3 | 4 | 5 | 6 | 7 | 8 | 9 | 10 | 11 | - - - |
|---|---|---|---|---|---|---|---|---|---|---|---|---|
| 1 | 210 | 159 | 179 | 158 | 159 | 145 | 146 | 152 | 148 | 120 | 126 | |
| 2 | 243 | 170 | 159 | 161 | 153 | 134 | 135 | 146 | 151 | 110 | 113 | |
| 3 | 244 | 196 | 162 | 163 | 153 | 137 | 139 | 144 | 145 | 110 | 109 | |
| 4 | 247 | 244 | 167 | 148 | 167 | 157 | 147 | 146 | 157 | 118 | 112 | |
| 5 | 233 | 237 | 178 | 138 | 158 | 150 | 135 | 135 | 149 | 118 | 106 | |
| 6 | 241 | 227 | 206 | 150 | 158 | 153 | 144 | 141 | 156 | 135 | 108 | |
| 7 | 229 | 225 | 235 | 176 | 149 | 143 | 145 | 143 | 147 | 132 | 109 | |
| 8 | 231 | 238 | 232 | 200 | 143 | 133 | 151 | 151 | 153 | 139 | 108 | |
| 9 | 224 | 230 | 213 | 200 | 157 | 131 | 148 | 141 | 134 | 131 | 107 | |
| 10 | 218 | 203 | 207 | 190 | 194 | 140 | 135 | 148 | 139 | 132 | 112 | |
| 11 | 244 | 234 | 221 | 192 | 203 | 186 | 135 | 145 | 146 | 151 | 133 | |
| 12 | 250 | 231 | 231 | 207 | 223 | 198 | 165 | 155 | 139 | 137 | 136 | |
| 13 | 231 | 218 | 218 | 201 | 227 | 203 | 185 | 149 | 142 | 143 | 141 | |

# FIG_2

| Y\X | 3 | 4 | 5 | 6 | 7 | 8 | 9 |
|---|---|---|---|---|---|---|---|
| 3 | 100 | 53 | 37 | 18 | 4 | 23 | 52 |
| 4 | 122 | 66 | 36 | 25 | 7 | 26 | 55 |
| 5 | 127 | 83 | 39 | 29 | 13 | 22 | 53 |
| 6 | 127 | 107 | 53 | 27 | 13 | 17 | 51 |
| 7 | 127 | 127 | 72 | 35 | 11 | 15 | 49 |
| 8 | 127 | 127 | 96 | 39 | 7 | 10 | 47 |
| 9 | 107 | 127 | 118 | 52 | 11 | 11 | 47 |
| 10 | 92 | 127 | 127 | 76 | 25 | 12 | 36 |
| 11 | 76 | 103 | 127 | 112 | 60 | 28 | 36 |

# FIG_3

| Y\X | 3 | 4 | 5 | 6 | 7 | 8 | 9 |
|---|---|---|---|---|---|---|---|
| 3 | 90 | 120 | 60 | 90 | 120 | 120 | 90 |
| 4 | 60 | 90 | 90 | 60 | 30 | 30 | 90 |
| 5 | 60 | 90 | 90 | 90 | 60 | 120 | 90 |
| 6 | 60 | 60 | 90 | 120 | 150 | 60 | 90 |
| 7 | 60 | 60 | 90 | 120 | 0 | 60 | 90 |
| 8 | 90 | 60 | 60 | 90 | 120 | 0 | 120 |
| 9 | 90 | 90 | 60 | 60 | 90 | 120 | 90 |
| 10 | 90 | 90 | 60 | 60 | 30 | 0 | 90 |
| 11 | 90 | 60 | 60 | 60 | 60 | 30 | 60 |

# FIG_4

| Y \ X | 3 | 4 | 5 | 6 | 7 | 8 | 9 |
|---|---|---|---|---|---|---|---|
| 3 | 90 | 120 | | | | | 90 |
| 4 | 60 | 90 | | | | | 90 |
| 5 | 60 | 90 | | | | | 90 |
| 6 | 60 | 60 | 90 | | | | 90 |
| 7 | 60 | 60 | 90 | | | | 90 |
| 8 | 90 | 60 | 60 | | | | |
| 9 | 90 | 90 | 60 | 60 | | | |
| 10 | 90 | 90 | 60 | 60 | | | |
| 11 | 90 | 60 | 60 | 60 | 60 | | |

# FIG_5

| Y \ X | 3 | 4 | 5 | 6 | 7 | 8 | 9 |
|---|---|---|---|---|---|---|---|
| 3 | | | | | | | 1 |
| 4 | 2 | | | | | | 1 |
| 5 | 2 | | | | | | (1) |
| 6 | 2 | 2 | | | | | 1 |
| 7 | 2 | 2 | | | | | 1 |
| 8 | 3 | (2) | 2 | | | | |
| 9 | (3) | 3 | 2 | 2 | | | |
| 10 | 3 | 3 | 2 | 2 | | | |
| 11 | 3 | 2 | 2 | 2 | 2 | | |

# FIG_6

| Y \ X | 3 | 4 | 5 | 6 | 7 | 8 | 9 |
|---|---|---|---|---|---|---|---|
| 3 | 0 | 0 | 0 | 0 | 0 | 0 | 1 |
| 4 | 0 | 0 | 0 | 0 | 0 | 0 | 1 |
| 5 | 0 | 0 | 0 | 0 | 0 | 0 | (1) |
| 6 | 0 | 0 | 0 | 0 | 0 | 0 | 1 |
| 7 | 0 | 0 | 0 | 0 | 0 | 0 | 1 |
| 8 | 0 | 0 | 0 | 0 | 0 | 0 | 0 |
| 9 | 0 | 0 | 0 | 0 | 0 | 0 | 0 |
| 10 | 0 | 0 | 0 | 0 | 0 | 0 | 0 |
| 11 | 0 | 0 | 0 | 0 | 0 | 0 | 0 |

# FIG_7

| Y \ X | 3 | 4 | 5 | 6 | 7 | 8 | 9 |
|---|---|---|---|---|---|---|---|
| 3 | 0 | 0 | 0 | 0 | 0 | 0 | 0 |
| 4 | 0 | 0 | 0 | 0 | 0 | 0 | 0 |
| 5 | 1 | 0 | 0 | 0 | 0 | 0 | 0 |
| 6 | 1 | 0 | 0 | 0 | 0 | 0 | 0 |
| 7 | 1 | 1 | 0 | 0 | 0 | 0 | 0 |
| 8 | 0 | (1) | 0 | 0 | 0 | 0 | 0 |
| 9 | 0 | 1 | 1 | 0 | 0 | 0 | 0 |
| 10 | 0 | 0 | 1 | 0 | 0 | 0 | 0 |
| 11 | 0 | 0 | 1 | 0 | 0 | 0 | 0 |

# FIG_8

| Y \ X | 3 | 4 | 5 | 6 | 7 | 8 | 9 |
|---|---|---|---|---|---|---|---|
| 3 | 0 | 0 | 0 | 0 | 0 | 0 | 0 |
| 4 | 0 | 0 | 0 | 0 | 0 | 0 | 0 |
| 5 | 0 | 0 | 0 | 0 | 0 | 0 | 0 |
| 6 | 0 | 0 | 0 | 0 | 0 | 0 | 0 |
| 7 | 0 | 0 | 0 | 0 | 0 | 0 | 0 |
| 8 | 1 | 0 | 0 | 0 | 0 | 0 | 0 |
| 9 | (1) | 0 | 0 | 0 | 0 | 0 | 0 |
| 10 | 1 | 0 | 0 | 0 | 0 | 0 | 0 |
| 11 | 1 | 0 | 0 | 0 | 0 | 0 | 0 |

# FIG_9

| Y \ X | 3 | 4 | 5 | 6 | 7 | 8 | 9 |
|---|---|---|---|---|---|---|---|
| 3 | 0 | 0 | 0 | 0 | 0 | 0 | 1 |
| 4 | 0 | 0 | 0 | 0 | 0 | 0 | 1 |
| 5 | 1 | 0 | 0 | 0 | 0 | 0 | 1 |
| 6 | 1 | 0 | 0 | 0 | 0 | 0 | 1 |
| 7 | 1 | 1 | 0 | 0 | 0 | 0 | 1 |
| 8 | 1 | 1 | 0 | 0 | 0 | 0 | 0 |
| 9 | 1 | 1 | 1 | 0 | 0 | 0 | 0 |
| 10 | 1 | 0 | 1 | 0 | 0 | 0 | 0 |
| 11 | 1 | 0 | 1 | 0 | 0 | 0 | 0 |

FIG_10-a

FIG_11-a

FIG_10-b

FIG_11-b

FIG_10-c

FIG_11-c

FIG_10-d

FIG_11-d

## FIG_12

| Y \ X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 |
| 2 | 0 | 0 | 0 | 1 | 1 | 1 | 1 | 1 | 1 | 1 | 1 | 1 | 1 | 0 | 0 |
| 3 | 0 | 0 | 1 | 1 | 1 | 0 | 0 | 0 | 1 | 1 | 0 | 1 | 0 | 1 | 0 |
| 4 | 0 | 1 | 1 | 1 | 0 | 0 | 0 | 0 | 0 | 1 | 1 | 1 | 1 | 1 | 0 |
| 5 | 0 | 0 | 1 | 1 | 0 | 1 | 1 | 0 | 1 | 1 | 0 | 0 | 0 | 0 | 0 |
| 6 | 0 | 1 | 0 | 1 | 1 | 1 | 1 | 1 | 1 | 1 | 1 | 1 | 1 | 1 | 0 |

## FIG_13

| Y \ X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 |
| 2 | 0 | 0 | 0 | $Z_1$ | $Z_1$ | $Z_1$ | $Z_1$ | $Z_1$ | $Z_1$ | $Z_1$ | $Z_1$ | $Z_1$ | $Z_1$ | 0 | 0 |
| 3 | 0 | 0 | $Z_2$ | $z$ | | | | | | | | | | | |
| 4 | | | | | | | | | | | | | | | |
| 5 | | | | | | | | | | | | | | | |
| 6 | | | | | | | | | | | | | | | |

## FIG_14

| Y \ X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 |
| 2 | 0 | 0 | 0 | $Z_1$ | $Z_1$ | $Z_1$ | $Z_1$ | $Z_1$ | $Z_1$ | $Z_1$ | $Z_1$ | $Z_1$ | $Z_1$ | 0 | 0 |
| 3 | 0 | 0 | $Z_1$ | $Z_1$ | $Z_1$ | 0 | 0 | 0 | $Z_1$ | $Z_1$ | 0 | $Z_1$ | 0 | $Z_3$ | 0 |
| 4 | 0 | $Z_4$ | $z$ | | | | | | | | | | | | |
| 5 | | | | | | | | | | | | | | | |
| 6 | | | | | | | | | | | | | | | |

40

# FIG_15

| Y\X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | O | O | O | O | O | O | O | O | O | O | O | O | O | O | O |
| 2 | O | O | O | $Z_1$ | $Z_1$ | $Z_1$ | $Z_1$ | $Z_1$ | $Z_1$ | $Z_1$ | $Z_1$ | $Z_1$ | $Z_1$ | O | O |
| 3 | O | O | $Z_1$ | $Z_1$ | $Z_1$ | O | O | O | $Z_1$ | $Z_1$ | O | $Z_1$ | O | $Z_3$ | O |
| 4 | O | $Z_1$ | $Z_1$ | $Z_1$ | O | O | O | O | O | $Z_1$ | $Z_1$ | $Z_1$ | $Z_1$ | $Z$ | |
| 5 | | | | | | | | | | | | | | | |
| 6 | | | | | | | | | | | | | | | |

# FIG_16

| Y\X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | O | O | O | O | O | O | O | O | O | O | O | O | O | O | O |
| 2 | O | O | O | $Z_1$ | $Z_1$ | $Z_1$ | $Z_1$ | $Z_1$ | $Z_1$ | $Z_1$ | $Z_1$ | $Z_1$ | $Z_1$ | O | O |
| 3 | O | O | $Z_1$ | $Z_1$ | $Z_1$ | O | O | O | $Z_1$ | $Z_1$ | O | $Z_1$ | O | $Z_1$ | O |
| 4 | O | $Z_1$ | $Z_1$ | $Z_1$ | O | O | O | O | O | $Z_1$ | $Z_i$ | $Z_1$ | $Z_1$ | $Z_1$ | O |
| 5 | O | O | $Z_1$ | $Z_1$ | O | $Z_5$ | $Z_5$ | O | $Z_6$ | $Z$ | | | | | |
| 6 | | | | | | | | | | | | | | | |

# FIG_17

| Y\X | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | O | O | O | O | O | O | O | O | O | O | O | O | O | O | O |
| 2 | O | O | O | $Z_1$ | $Z_1$ | $Z_1$ | $Z_1$ | $Z_1$ | $Z_1$ | $Z_1$ | $Z_1$ | $Z_1$ | $Z_1$ | O | O |
| 3 | O | O | $Z_1$ | $Z_1$ | $Z_1$ | O | O | O | $Z_1$ | $Z_1$ | O | $Z_1$ | O | $Z_1$ | O |
| 4 | O | $Z_1$ | $Z_1$ | $Z_1$ | O | O | O | O | O | $Z_1$ | $Z_1$ | $Z_1$ | $Z_1$ | $Z_1$ | O |
| 5 | O | O | $Z_1$ | $Z_1$ | O | $Z_1$ | $Z_1$ | O | $Z_1$ | $Z_1$ | $Z_1$ | $Z_1$ | O | O | O |
| 6 | O | $Z_1$ | $Z_1$ | $Z_1$ | $Z_1$ | $Z_1$ | $Z_1$ | $Z_1$ | $Z_1$ | $Z_1$ | $Z_1$ | $Z_1$ | $Z_1$ | $Z_1$ | O |

# FIG_18

# FIG_19

Blocks and labels:

1

2

DISPOSITIF DE CALCUL DE $|L * G_1|$  — 30

DISPOSITIF DE CALCUL DE $|L * G_6|$  — 31

COMPARATEUR — 32

M

33

1 2 3 4 5 6

M

34

COMPARATEUR — 35

SEUIL

36

PORTES

DETERMINATION DES POINTS DE CONTOUR ET DETERMINATION DE L'ORIENTATION DU GRADIENT EN UN POINT

SYNC. — 3

R(PC) — 4

MOYENS DE COMMANDE

REGISTRE RETARD=1point — 41

HP1

GENERATEUR DE SIGNAUX D'HORLOGE — 40

REGISTRE A DECALAGE RETARD 1 ligne -1 point — 42

HP1

HPI  HP9  HL  HT HZ

CIRCUIT SEQUENCEUR — 43

Y(PC)   X(PC)   C1   C12

43

FIG_20

# FIG_21

| | R(PC) | R(Z) | R(Z') | Z | Z' | T(Z) | | MULTIPLEXEURS | | | | SORTIES | | | | |
|---|---|---|---|---|---|---|---|---|---|---|---|---|---|---|---|---|
| | | | | | | | | 49 | 51 | 52 | 53 | AD | Z(PC) | T(z(PC)) | A | K |
| POINT QUI N'EST PAS UN POINT DE CONTOUR | 0 | | | | | | | 1 | 1 | | | 0 | 0 | | 0 | 0 |
| POINT DE CONTOUR 1er CAS | $\neq 0$ | 0 | 0 | 0 | 0 | | | 2 | 2 | | 1 | $Z_d$ | $Z_d$ | 0 | 0 | 1 |
| | $\neq 0$ | $\neq R(PC)$ | $\neq R(PC)$ | | | | | 2 | 2 | | 1 | $Z_d$ | $Z_d$ | 0 | 0 | 1 |
| 2e CAS | $\neq 0$ | $= R(PC)$ | $\neq R(PC)$ | $\neq 0$ | | | | 4 | 3 | 1 | 2 | Z | Z | $= T(Z)$ | 0 | 0 |
| 3e CAS    a | $\neq 0$ | $= R(PC)$ | $= R(PC)$ | $\neq Z'$ | $\neq Z$ | 0 | | 3 | 3 | 2 | 2 | Z | Z' | 1 | 1 | 0 |
| b | $\neq 0$ | $= R(PC)$ | $= R(PC)$ | $\neq Z'$ | $\neq Z$ | 1 | | 4 | 4 | 1 | 2 | Z' | Z | 1 | 1 | 0 |
| c | $\neq 0$ | $= R(PC)$ | $= R(PC)$ | $= Z'$ | $= Z$ | | | 4 | 3 | 1 | 2 | Z | Z | $= T(Z)$ | 0 | 0 |
| 4e CAS | $\neq 0$ | $\neq R(PC)$ | $= R(PC)$ | | $\neq 0$ | | | 3 | 4 | 2 | 2 | Z' | Z' | $= T(Z')$ | 0 | 0 |

EP 0 255 419 B1

# FIG_22

GENERATEUR D'ADRESSES DISPONIBLES

EP 0 255 419 B1

FIG_23

MEMOIRE D'ATTENTE 6

EP 0 255 419 B1

# FIG_24

# FIG_25

```
┌─────────────┐
│  REMISE  A  │
│ ZERO DE TOUTE│
│ LA MEMOIRE  │
│ DE CONTOURS │
└─────────────┘
        │
┌─────────────┐
│   zm = 0    │
└─────────────┘
        │
┌─────────────┐
│ zm = zm + 1 │
└─────────────┘
        │
┌─────────────┐
│  LIRE E(Zm) │
└─────────────┘
```

$$Xg = \frac{XG(Zm)}{N(Zm)}$$

$$Yg = \frac{YG(Zm)}{N(Zm)}$$

$$X'MAX = XMAX(Zm)+2$$
$$Y'MAX = YMAX(Zm)+2$$
$$X'MIN = XMIN(Zm)-2$$
$$Y'MIN = YMIN(Zm)-2$$

$$X = Xg, \quad Y = Yg$$

R = 1 ?  NON  →  R = 2 ?  NON  →  R = 3 ?  NON

OUI              OUI              OUI

| CREATION D'UN SEGMENT ORIENTE A 90° | CREATION D'UN SEGMENT ORIENTE A 120° | CREATION D'UN SEGMENT ORIENTE A 150° | CREATION D'UN SEGMENT ORIENTE A 60° |

NON ← Zm = Zmax ?

OUI

CREATION D'UN SEGMENT
ORIENTE A 0°

FIG_26

CREATION D'UN SEGMENT
ORIENTE A 30°

FIG_27